# EUROPEAN PATENT APPLICATION

(11) **EP 4 761 452 A2**
(43) Date of publication of application: **17.06.2026**
(21) Application number: 25224380.3
(22) Date of filing: 21.11.2022
(51) Int. Cl.: H04W 76/14

(54) **DEVICE COLLABORATION METHOD AND RELATED APPARATUS**

(30) Priority: 22.11.2021 CN 202111385754; 28.02.2022 CN 202210191311
(62) Divisional of application: 22894988.9
(71) Applicant: Huawei Technologies Co., Ltd., Shenzhen, Guangdong 518129 (CN)
(72) Inventor: MEI, Xiaocun, Shenzhen, 518129 (CN)
(74) Representative: Goddar, Heinz J.

(57) **Abstract**

This application discloses a device collaboration method, applied to a first electronic device. The method includes: displaying a first user interface, where the first user interface includes a first icon of the first electronic device and an icon of at least one detected candidate device, the icon of the at least one candidate device includes a second icon of a second electronic device, the second electronic device supports at least two collaborative capabilities, and the at least two collaborative capabilities include a first capability; receiving a first input operation used to select the first capability; receiving a second input operation; and establishing, in response to the second input operation, a collaborative connection supporting the first capability to the second electronic device. In this way, for each candidate device that can be collaboratively connected, a capability to which a user intends to collaboratively connect may be selected in a targeted manner, and a collaborative connection is established to the candidate device, so that the capability of each candidate device can be fully used on the first electronic device in a targeted manner, and user experience is improved.

## Description

This application claims priorities to Chinese Patent Application No. 202111385754.X, filed with the China National Intellectual Property Administration on November 22, 2021 and entitled "DISTRIBUTED DEVICE INTERACTION MANNER AND ELECTRONIC DEVICE", and to Chinese Patent Application No. 202210191311.5, filed with the China National Intellectual Property Administration on February 28, 2022 and entitled "DEVICE COLLABORATION METHOD AND RELATED APPARATUS", which are incorporated herein by reference in their entireties.

### TECHNICAL FIELD

This application relates to the field of electronic technologies, and in particular, to a device collaboration method and a related apparatus.

### BACKGROUND

Development of wireless communication technologies allows terminals such as smartphones and tablet computers to support users in sharing data such as pictures and documents with other devices. This improves office efficiency and office experience of the users.

Limited by hardware structures and system performance, different types of devices usually have different capability advantages. For example, a television has a large display, but does not have a portable camera and microphone, and a mobile phone does not have a large display, but has a portable camera and microphone. Although the conventional technology supports sharing of data such as pictures, videos, music, and documents between different devices through data transmission, sharing of various capabilities supported by different devices between the devices is not supported, and consequently capability advantages of the devices cannot be fully used. When the users want to use capabilities of different devices, the users need to switch between the devices, and user experience is poor.

### SUMMARY

This application provides a device collaboration method. For each detected candidate device that can be collaboratively connected, a first electronic device may select, in a targeted manner, a capability to which a user intends to collaboratively connect, and establish a collaborative connection to the candidate device, so that the capability of each candidate device can be effectively and fully used on the first electronic device, and user experience is improved.

According to a first aspect, this application provides a device collaboration method, applied to a first electronic device. The method includes: displaying a first user interface, where the first user interface includes a first icon of the first electronic device and an icon of at least one detected candidate device, the icon of the at least one candidate device includes a second icon of a second electronic device, the second electronic device supports at least two collaborative capabilities, and the at least two collaborative capabilities include a first capability; receiving a first input operation used to select the first capability; receiving a second input operation; and establishing, in response to the second input operation, a collaborative connection supporting the first capability to the second electronic device.

In this embodiment of this application, when the second electronic device has a plurality of collaborative capabilities, a user may select, through the first electronic device, any one of the plurality of collaborative capabilities to establish a collaborative connection to the second electronic device. After the collaborative connection for the first capability succeeds, the user may invoke the first capability of the second electronic device through the first electronic device. In this way, for each candidate device that is currently detected and that can be collaboratively connected, a capability to which the user intends to collaboratively connect may be selected in a targeted manner, and a collaborative connection is established to the candidate device, so that the capability of each candidate device can be fully used on the first electronic device in a target manner, a capability advantage of each candidate device is brought into full play, and user experience is improved.

In an implementation, the first user interface further includes capability badges corresponding to the collaborative capabilities supported by the second electronic device, the capability badges corresponding to the collaborative capabilities supported by the second electronic device include a first capability badge corresponding to the first capability, and the first input operation is performed on the first capability badge. For example, on the first user interface, the capability badges corresponding to the collaborative capabilities supported by the second electronic device are displayed in a surrounding area close to the second icon. In this embodiment of this application, through the capability badges that correspond to the collaborative capabilities supported by the second electronic device and that are on the first user interface, the user may intuitively view the collaborative capabilities of the second electronic device, and may select a capability corresponding to a specified capability badge as a to-be-collaborated capability.

In an implementation, before the receiving a first input operation used to select the first capability, the method further includes: receiving a third input operation performed on the second icon; and displaying, on the first user interface in response to the third input operation, the capability badges corresponding to the collaborative capabilities supported by the second electronic device. In this embodiment of this application, the third input operation is performed on an icon of a candidate device, so that the user can view a capability badge corresponding to a collaborative capability of the candidate device.

In an implementation, the method further includes: additionally displaying, in response to the first input operation, the first capability badge on the second icon. In this embodiment of this application, the user may select an additional displayed capability badge for the icon of the candidate device, and the first electronic device may establish a collaborative connection for a capability corresponding to the additional displayed capability badge.

In an implementation, the first input operation includes an operation performed on the first capability badge; and the second input operation includes: dragging the second icon to the first icon until the second icon touches an area in which the first icon is located; or dragging the second icon to the first icon until a distance between the second icon and the first icon is less than or equal to a preset threshold; or dragging the first icon to the second icon until the first icon touches an area in which the second icon is located; or drag the first icon to the second icon until a distance between the first icon and the second icon is less than or equal to a preset threshold.

In an implementation, the second input operation is performed on the first capability badge. In this embodiment of this application, the collaborative connection supporting the first capability can be established through the input operation performed on the first capability badge.

In an implementation, the first input operation includes an operation performed on the first capability badge; and the second input operation includes: dragging the first capability badge to the first icon until the first capability badge touches an area in which the first icon is located; or dragging the first capability badge to the first icon until a distance between the first capability badge and the first icon is less than or equal to a preset threshold.

In an implementation, the at least two collaborative capabilities further include a second capability; and after the collaborative connection supporting the first capability is successfully established to the second electronic device, the method further includes: receiving a fifth input operation performed on the second icon; displaying, in response to the fifth input operation, the capability badges corresponding to the collaborative capabilities supported by the second electronic device, where the capability badges corresponding to the collaborative capabilities supported by the second electronic device include the first capability badge corresponding to the first capability and a second capability badge corresponding to the second capability; receiving a sixth input operation performed on the second capability badge; and establishing, in response to the sixth input operation, a collaborative connection supporting the second capability to the second electronic device. In this embodiment of this application, when the collaborative connection for the first capability is established to the second electronic device, the second capability badge in the capability badges corresponding to the collaborative capabilities of the second electronic device is selected, to further establish the collaborative connection supporting the second capability to the second electronic device.

In an implementation, the at least two collaborative capabilities further include a second capability; and the establishing, in response to the second input operation, a collaborative connection supporting the first capability to the second electronic device specifically includes: establishing, in response to the second input operation, a collaborative connection supporting the first capability and the second capability to the second electronic device. In this embodiment of this application, a collaborative connection supporting a plurality of capabilities may be established to the second electronic device.

In an implementation, when the second input operation is received, the first capability badge corresponding to the first capability and a second capability badge corresponding to the second capability are additionally displayed on the second icon. In this embodiment of this application, based on a plurality of capability badges that are additionally displayed on the second icon, a collaborative connection supporting a plurality of capabilities corresponding to the plurality of capability badges may be established to the second electronic device.

In an implementation, after the collaborative connection supporting the first capability and the second capability is successfully established to the second electronic device, the method further includes: receiving a seventh input operation performed on the second icon; and displaying, in response to the seventh input operation, the capability badges corresponding to the collaborative capabilities supported by the second electronic device, where the capability badges corresponding to the collaborative capabilities supported by the second electronic device include the first capability badge corresponding to the first capability and the second capability badge corresponding to the second capability; receiving an eighth input operation performed on the first capability badge; and canceling, in response to the eighth input operation, the collaborative connection supporting the first capability to the second electronic device. In this embodiment of this application, after the first electronic device establishes the collaborative connection supporting the plurality of capabilities to the second electronic device, a capability badge of any one of the plurality of capabilities that have been collaborated may be used to cancel a collaborative connection for the capability. In this way, the user can selectively cancel a collaborative connection for a specified capability, and user experience is improved.

In an implementation, the first user interface further includes capability badges corresponding to at least two capabilities, the at least two capabilities include all collaborative capabilities supported by the at least one candidate device, the capability badges corresponding to the at least two capabilities include a first capability badge corresponding to the first capability, and the first input operation is performed on the first capability badge. In this embodiment of this application, capability badges corresponding to all collaborative capabilities of all candidate devices may be displayed, and the user may select, in a targeted manner, an intended collaborative capability and a candidate device that is intended to be collaboratively connected. In this way, the capability of each candidate device can be fully used on this device in a targeted manner, a feature of each candidate device is brought into full play, and user experience is improved.

In an implementation, before the receiving a first input operation used to select the first capability, the method further includes: receiving a ninth input operation performed on the first icon; and displaying, on the first user interface in response to the ninth input operation, the capability badges corresponding to the at least two capabilities. In this embodiment of this application, the ninth input operation is performed on the icon of the first electronic device (namely, this device), so that the user may view capability badges corresponding to collaborative capabilities of all candidate devices.

In an implementation, the method further includes: additionally displaying, in response to the first input operation, the first capability badge on the first icon.

In an implementation, the method further includes: stopping displaying, on the first user interface in response to the first input operation, an icon of a candidate device whose first capability cannot be collaborated with. In this embodiment of this application, when the user selects, by using the first capability badge, a to-be-collaborated capability as the first capability, displaying of the icon of the candidate device whose first capability cannot be collaborated with is stopped, so that the user subsequently selects a candidate device whose first capability can be collaboratively connected to.

In an implementation, in the capability badges displayed around the second icon, a capability badge that has been additionally displayed on the second icon is presented in a selected state, and a capability badge that is not additionally displayed on the second icon is presented in an unselected state. The method further includes: switching, in response to the first input operation, the first capability badge displayed around the second icon from an unselected state to a selected state. The method further includes: switching, in response to a fourth input operation, the second capability badge displayed around the second icon from a selected state to an unselected state.

In an implementation, the method further includes: when the collaborative connection supporting the first capability is successfully established to the second electronic device, switching the second icon from an uncollaborated state to a collaborated state, where the first capability badge corresponding to the first capability is additionally displayed on the second icon; or when the collaborative connection supporting the first capability fails to be established to the second electronic device, keeping the second icon in an uncollaborated state.

In an implementation, before the second input operation is received, the first icon is displayed in a first preset area, and the icon of the at least one candidate device is displayed in a second preset area. The uncollaborated state of the second icon is presented as that the second icon is displayed in the second preset area in a first state. The collaborated state of the second icon is presented as that the second icon is attached to the first icon in a second state and displayed in the first preset area. Alternatively, the collaborated state of the second icon is presented as that the second icon is displayed in the second preset area in a second state. For example, the first state and the second state refer to different icon colors.

In an implementation, after the first electronic device performs the step of "establishing a collaborative connection supporting the first capability and the second capability to the second electronic device", when the first electronic device successfully establishes the collaborative connection supporting the first capability and the second capability to the second electronic device, the second icon is switched from the uncollaborated state to the collaborated state, and the first capability badge and the second capability badge are additionally displayed on the second icon. When the collaborative connection supporting the first capability is successfully established to the second electronic device, and the collaborative connection does not support the second capability, the second icon is switched from the uncollaborated state to the collaborated state, and the first capability badge is additionally displayed on the second icon, but the second capability badge is not additionally displayed.

In an implementation, in response to the seventh input operation, in the capability badges displayed around the second icon, capability badges (namely, the first capability badge and the second capability badge) corresponding to capabilities supported by the collaborative connection established to the second electronic device are presented in a selected state, and a capability badge corresponding to a capability that is not supported by the collaborative connection established to the second electronic device is presented in an unselected state.

In an implementation, after the collaborative connection supporting the first capability and the second capability is successfully established to the second electronic device, the method further includes: receiving a tenth input operation performed on the second icon; and canceling, in response to the tenth input operation, a collaborative connection to the second electronic device for any capability.

In an implementation, in response to the third input operation, the capability badges corresponding to the collaborative capabilities supported by the second electronic device are displayed in a first area; the at least two collaborative capabilities further include a second capability; and when the third input operation performed on the second icon is received, a second capability badge corresponding to the second capability is additionally displayed on the second icon. After the receiving a third input operation performed on the second icon, the method further includes: receiving a fourth input operation performed on the second capability badge in the first area; and stopping, in response to the fourth input operation, additional displaying of the second capability badge on the second icon.

According to a second aspect, this application further provides a device collaboration method, applied to a first electronic device. The method includes: displaying a first user interface, where the first user interface includes a first icon of the first electronic device and an icon of at least one detected candidate device, the icon of the at least one candidate device includes a second icon of a second electronic device, the second electronic device supports at least two collaborative capabilities, and the at least two collaborative capabilities include a first capability; receiving an eleventh input operation; and establishing, in response to the eleventh input operation and based on a first application recently run in a foreground and/or a collaboration state of the second electronic device, a collaborative connection supporting the first capability to the second electronic device.

In this embodiment of this application, the first electronic device may adaptively select, based on a current application scenario (namely, the first application recently run in the foreground and/or the collaboration state of the second electronic device), one or more capabilities for a collaborative connection, so that a capability of each candidate device can be fully used on the first electronic device in a targeted manner, and a capability advantage of each candidate device is brought into play. This improves user experience.

In an implementation, the collaboration state of the second electronic device includes one or more of the following: a quantity of collaborative connections of each capability that is collaboratively connected between the first electronic device and the second electronic device, a capability of a recent collaborative connection between the first electronic device and the second electronic device, and a priority of each collaborative capability of the second electronic device. The collaboration state of the second electronic device is not specifically limited in embodiments of this application.

In an implementation, the establishing, based on a first application recently run in a foreground and/or a collaboration state of the second electronic device, a collaborative connection to the first capability of the second electronic device includes: when the collaborative capabilities of the second electronic device include the first capability required by the first application, establishing the collaborative connection for the first capability of the second electronic device. In this embodiment of this application, the first electronic device may adaptively select, based on the capability required by the first application recently run in the foreground, the to-be-collaborated capability. This effectively improves user experience.

In an implementation, the establishing, based on a first application recently run in a foreground and/or a collaboration state of the second electronic device, a collaborative connection to the first capability of the second electronic device includes: establishing a collaborative connection to a first capability that has a largest quantity of collaborative connections in capabilities that have been collaboratively connected to the second electronic device; or performing a collaborative connection to a first capability that is recently collaboratively connected to the second electronic device; or performing a collaborative connection to a first capability with a highest priority in the collaborative capabilities of the second electronic device. In this embodiment of this application, the first electronic device may adaptively select, based on collaboration states of the collaborative capabilities of the second electronic device, the to-be-collaborated capability. This effectively improves user experience.

According to a third aspect, this application provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the device collaboration method in any possible implementation of either of the foregoing aspects.

According to a fourth aspect, an embodiment of this application provides a computer storage medium, including computer instructions. When the computer instructions are run on an electronic device, the electronic device is enabled to perform the device collaboration method in any possible implementation of either of the foregoing aspects.

According to a fifth aspect, an embodiment of this application provides a computer program product. When the computer program product runs on a computer, the computer is enabled to perform the device collaboration method in any possible implementation of either of the foregoing aspects.

### BRIEF DESCRIPTION OF DRAWINGS

FIG. 1A is a schematic diagram of a system architecture of a communication system according to an embodiment of this application;
FIG. 1B is a schematic diagram of a collaborative connection system according to an embodiment of this application;
FIG. 2 is a schematic diagram of a structure of an electronic device according to an embodiment of this application;
FIG. 3A to FIG. 3D show a manner of invoking a collaborative connection interface according to an embodiment of this application;
FIG. 4A to FIG. 4D show another manner of invoking a collaborative connection interface according to an embodiment of this application;
FIG. 5A to FIG. 5D show another manner of invoking a collaborative connection interface according to an embodiment of this application;
FIG. 6A to FIG. 6E show user interfaces related to a collaborative connection in Case 1 according to an embodiment of this application;
FIG. 7A to FIG. 7C show user interfaces related to a collaborative connection in Case 1 according to an embodiment of this application;
FIG. 8A to FIG. 8G show user interfaces related to capability badge switching in Case 1 according to an embodiment of this application;
FIG. 9A to FIG. 9C show user interfaces related to a collaborative connection in Case 1 according to an embodiment of this application;
FIG. 10A to FIG. 10F show user interfaces related to a collaborative connection in Case 1 according to an embodiment of this application;
FIG. 11A to FIG. 11D show user interfaces related to canceling a collaborative connection according to an embodiment of this application;
FIG. 12A to FIG. 12G show user interfaces related to capability badge switching in Case 2 according to an embodiment of this application;
FIG. 13A to FIG. 13J show user interfaces related to a collaborative connection in Case 2 according to an embodiment of this application;
FIG. 14A to FIG. 14E show user interfaces related to a collaborative connection in Case 2 according to an embodiment of this application;
FIG. 15A to FIG. 15D show user interfaces related to canceling a collaborative connection in Case 2 according to an embodiment of this application;
FIG. 16A to FIG. 16D show user interfaces related to establishing collaborative connections to a plurality of devices according to an embodiment of this application;
FIG. 17A to FIG. 17F show user interfaces related to capability badge switching in Case 3 according to an embodiment of this application;
FIG. 18A to FIG. 18C show user interfaces related to a collaborative connection in Case 3 according to an embodiment of this application;
FIG. 19A to FIG. 19J show user interfaces related to a collaborative connection in Case 3 according to an embodiment of this application;
FIG. 20A to FIG. 20D show user interfaces related to capability badge switching in Case 4 according to an embodiment of this application;
FIG. 21A to FIG. 21D show user interfaces related to a collaborative connection in Case 4 according to an embodiment of this application;
FIG. 22A to FIG. 22D show user interfaces related to a collaborative connection in Case 4 according to an embodiment of this application;
FIG. 23A to FIG. 23C show user interfaces related to a collaborative connection in Case 4 according to an embodiment of this application;
FIG. 24A to FIG. 24F show user interfaces related to establishing collaborative connections to a plurality of devices according to an embodiment of this application;
FIG. 25A to FIG. 25D show user interfaces related to a collaborative connection in Case 5 according to an embodiment of this application;
FIG. 26A to FIG. 26D show user interfaces related to capability application after the collaborative connection is performed according to an embodiment of this application;
FIG. 27 is a schematic diagram of a software architecture of an electronic device according to an embodiment of this application;
FIG. 28 is a schematic diagram of a software architecture of another electronic device according to an embodiment of this application;
FIG. 29 is a schematic diagram of a software architecture of a tablet computer according to an embodiment of this application;
FIG. 30 is a schematic diagram of a software architecture of a notebook computer according to an embodiment of this application;
FIG. 31 is a schematic diagram of a software architecture of a printer according to an embodiment of this application; and
FIG. 32 is a schematic flowchart of a device collaboration method according to an embodiment of this application.

### DESCRIPTION OF EMBODIMENTS

The following clearly describes technical solutions in embodiments of this application in detail with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

First, a communication system 10 provided in an embodiment of this application is described.

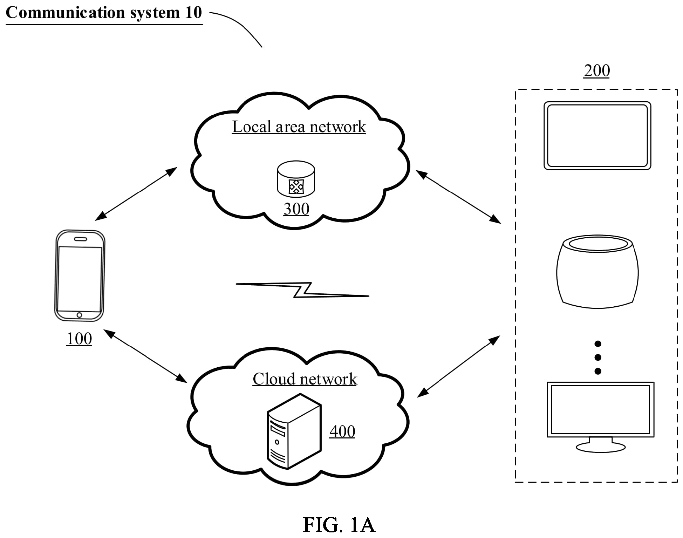

FIG. 1A is an example of a schematic diagram of the communication system 10 according to an embodiment of this application. As shown in FIG. 1A, the communication system 10 includes an electronic device 100, and one or more candidate devices (for example, a candidate device 200) that may establish a connection to the electronic device 100.

The electronic device 100 and the candidate device 200 each may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device (a smart band), a vehicle-mounted device, a smart home device (a smart television, a smart screen, a large screen device, or the like), and/or a smart city device. A specific type of the electronic device is not specially limited in embodiments of this application. The candidate device 200 may alternatively be a device like a projector, a sound box, a Bluetooth headset, a display, a mouse, a keyboard, or a printer. The electronic device 100 and the candidate device 200 may carry a same operating system, or may carry different operating systems, such as iOS, Android, Microsoft, and HarmonyOS.

In this embodiment of this application, the electronic device 100 may establish a collaborative connection to a capability 1 of the candidate device 200, so that the capability 1 of the candidate device 200 can be shared with the electronic device 100. A function module corresponding to the shared capability in the candidate device 200 may be indirectly considered as a function module of the electronic device 100. In some embodiments, after capability collaboration is performed between a capability 2 of the electronic device 100 and the candidate device 200, the capability 2 of the electronic device 100 may also be shared with the candidate device 200. A function module corresponding to the shared capability in the electronic device 100 may also be indirectly considered as a function module of the candidate device 200, to implement capability mutual assistance and resource sharing between the electronic device 100 and the candidate device 200. In this way, the electronic device 100 and the one or more candidate devices may be considered as a distributed collaborative super device. For example, the electronic device 100 is a mobile phone. A user may implement, through the mobile phone, a communication connection to and capability collaboration with devices such as a tablet computer, a notebook computer, a projector, a mouse, a keyboard, a printer, a sound box, and a Bluetooth headset. The mobile phone may indirectly have a capability of another device.

The capability may be a hardware function module (for example, a camera, a microphone, a speaker, a display, or a printer), or may be a software function module (for example, payment, image processing, a Wi-Fi connection, or projection), or may be a function module combining hardware and software (for example, a camera function with image processing, an audio output function with audio processing, or an audio input function with audio processing). This is not specifically limited in embodiments of this application.

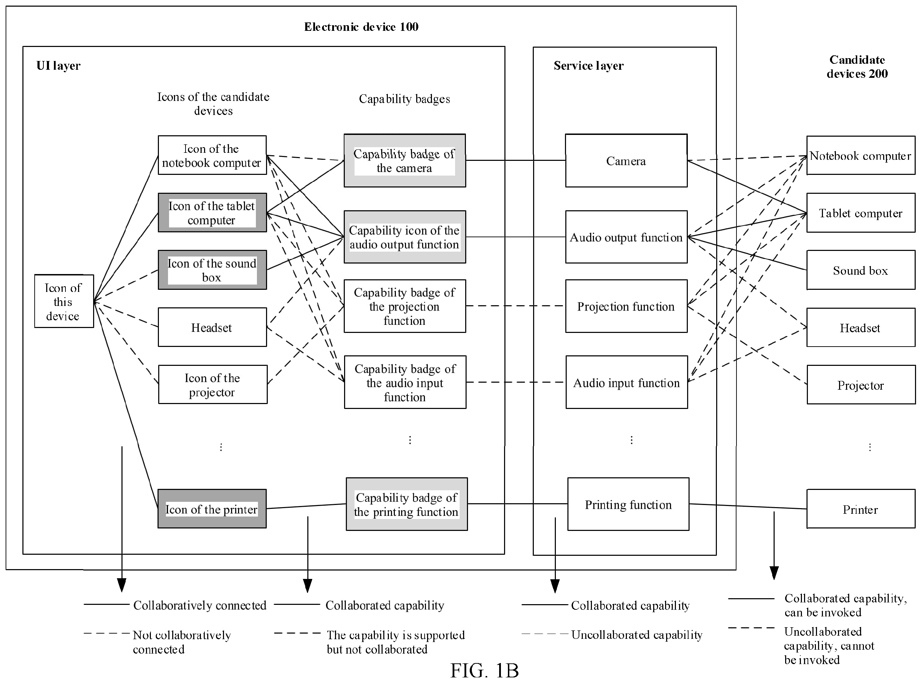

For example, as shown in FIG. 1B, in this embodiment of this application, a user interface (User Interface, UI) layer of the electronic device 100 may display, on a collaborative connection interface, an icon of the device and icons of detected candidate devices (for example, a tablet computer, a notebook computer, a projector, a sound box, a headset, and a printer), and may further display capability badges of collaborative capabilities (for example, a camera, an audio output function, a projection function, an audio input function, and a printing function) supported by the candidate devices. The user may select, based on a requirement of the user, an appropriate candidate device (for example, the candidate device 200) from the icons of the candidate devices displayed on the electronic device 100, and select a capability badge of a to-be-collaborative capability (for example, the capability 1) from capability badges corresponding to the candidate device; and then perform a preset input operation (for example, drag an icon of the candidate device 200 close to the icon of the device), to implement the collaborative connection between the electronic device 100 and the capability 1 of the candidate device 200. After detecting the preset input operation, the electronic device 100 monitors a connection state of an underlying service. After detecting that the capability 1 of the candidate device 200 is successfully collaboratively connected, the electronic device 100 switches, at the UI layer, a display state of the icon of the candidate device 200 to a collaborated state, and the capability badge of the capability 1 is additionally displayed on the icon of the candidate device 200. When a service layer needs to invoke the capability 1, the service layer may invoke the capability 1 of the candidate device 200 based on a user selection. In this way, the electronic device 100 may obtain one or more required specified capabilities of the candidate device 200.

It should be noted that the candidate device 200 may support at least one capability, and the candidate device 200 or the user may set some or all of the at least one capability as a capability that is of the candidate device 200 and that can be collaboratively connected (which may also be referred to as a collaborative capability in embodiments of this application). For example, the candidate device 200 supports capabilities such as a camera, an audio output function, a projection function, and an audio input function. The candidate device 200 may set only the camera and the audio output function as collaborative capabilities of the candidate device 200, and another capability is an uncollaborative capability of the candidate device 200. Correspondingly, only a capability badge of the camera and/or a capability badge of the audio output function can be additionally displayed on the icon of the candidate device 200 at the UI layer of the electronic device 100, and a capability badge of the another capability cannot be additionally displayed.

In some embodiments, that the electronic device 100 and the candidate device 200 perform a collaborative connection on the capability 1 of the candidate device 200 means that the electronic device 100 further establishes, to the candidate device 200, a service connection for the capability 1 when establishing a communication connection (namely, a data connection) or after establishing a communication connection, so that the electronic device 100 obtains an authorization for using the capability 1 of the candidate device 200. In this embodiment of this application, the user may implement the collaborative connection between the electronic device 100 and the candidate device 200 for the capability 1 through the collaborative connection interface provided in this embodiment of this application. It should be noted that, if the communication connection has been established between the electronic device 100 and the candidate device 200 when the collaborative connection is established, the collaborative connection may be the service connection for the capability 1; or if no communication connection has been established between the electronic device 100 and the candidate device 200 when the collaborative connection is established, the collaborative connection may be the communication connection between the electronic device 100 and the candidate device 200 and the service connection for the capability 1.

In some embodiments, that the electronic device 100 establishes the collaborative connection to the capability 1 of the candidate device 200 may include: After establishing the communication connection to the candidate device 200, the electronic device 100 sends a collaborative connection request to the candidate device 200, where the collaborative connection request carries an identifier of the capability 1 of the candidate device 200. After receiving the collaborative connection request, the candidate device 200 determines an intended collaborative capability of the electronic device 100 based on the identifier of the capability 1, and the candidate device 200 may send, to the electronic device 100, a collaborative connection response used to agree to the collaborative connection of the capability 1. In an implementation, the collaborative connection response may include a capability parameter of the capability 1 of the candidate device 200. After the collaborative connection succeeds, the electronic device 100 may invoke the capability 1 of the candidate device 200 based on the capability parameter. It may be understood that, in this embodiment of this application, establishing the collaborative connection for (or to) the capability 1 of the candidate device 200 means establishing a collaborative connection supporting the capability 1 to the candidate device 200.

It should be noted that, when the electronic device 100 has the capability 1, the capability 1 of the candidate device 200 may still be obtained through the collaborative connection, and a related service is processed by using the capability 1 of the candidate device 200. For example, the electronic device 100 has a camera, and the electronic device 100 may still obtain a right of use of the camera of the candidate device 200 through the collaborative connection, and collect an image by using the camera of the candidate device 200.

In this embodiment of this application, the electronic device 100 may be directly connected to the candidate device 200 through a short-range wireless communication connection or a local wired connection. For example, the electronic device 100 and the candidate device 200 each may have one or more short-range communication modules in a wireless fidelity (wireless fidelity, Wi-Fi) communication module, an ultra-wideband (ultra-wideband, UWB) communication module, a Bluetooth (Bluetooth) communication module, a near field communication (near field communication, NFC) module, and a ZigBee communication module. The electronic device 100 is used as an example. The electronic device 100 may detect and scan an electronic device near the electronic device 100 by transmitting a signal through the short-range communication module (for example, the Bluetooth communication module), so that the electronic device 100 can discover a nearby electronic device (for example, the candidate device 200) by using a short-range wireless communication protocol, establish a wireless communication connection to the nearby electronic device, and transmit data to the nearby electronic device.

In some embodiments, the electronic device 100 and the candidate device 200 may be connected to a local area network (local area network, LAN) through an electronic device 300 based on a wired or wireless fidelity (wireless fidelity, Wi-Fi) connection manner. For example, the electronic device 300 may be a third-party device like a router, a gateway, or a smart device controller. In some embodiments, the electronic device 100 and the candidate device 200 may alternatively be indirectly connected through at least one electronic device 400 in a wide area network (for example, the Internet). For example, the electronic device 400 may be a hardware server, or may be a cloud server embedded in a virtualized environment. It may be understood that, through the electronic device 300 and/or the electronic device 400, the electronic device 100 may indirectly perform a wireless communication connection and data transmission with the candidate device 200.

In some embodiments, the electronic device 100 and the candidate device 200 are electronic devices that access a same local area network. In some embodiments, the electronic device 100 and the candidate device 200 are electronic devices that log in to a same account; or the electronic device 100 and the candidate device 200 are electronic devices that log in to different accounts, but the different accounts (for example, an account 1 and an account 2) are in a preset relationship. For example, the preset relationship means that the account 1 and the account 2 are in a friend relationship, and the account 1 is authorized to perform a collaborative connection to the account 2; or means that the account 1 and the account 2 are in a same family group. This is not specifically limited in embodiments of this application.

It may be understood that the structure shown in this embodiment does not constitute a specific limitation on the communication system 10. In some other embodiments of this application, the communication system 10 may include more or fewer devices than those shown in the figure.

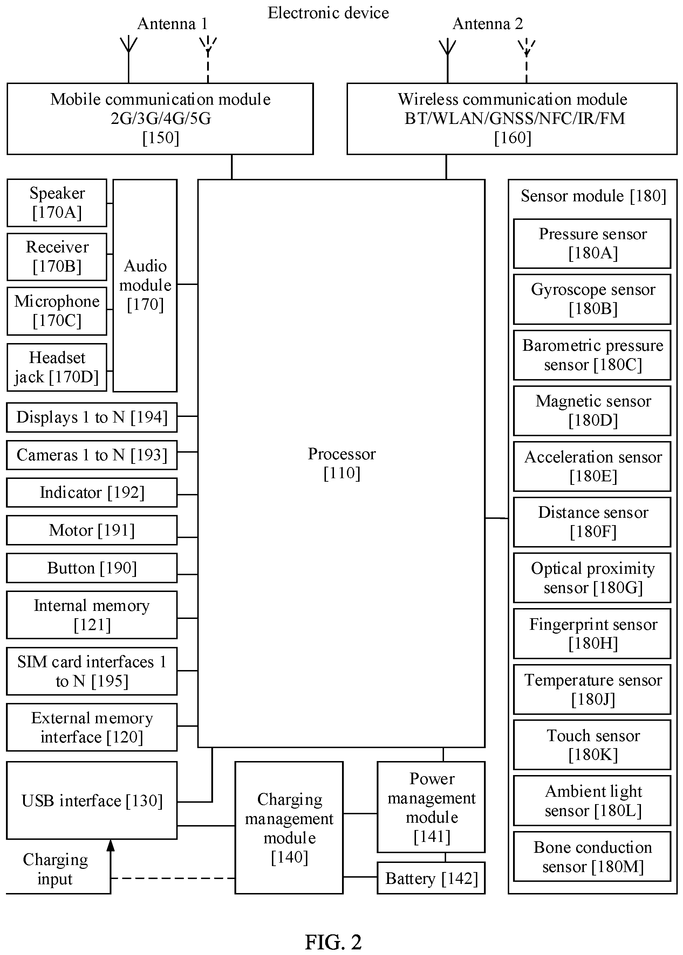

FIG. 2 is a schematic diagram of a structure of the electronic device 100.

The electronic device 100 may be a mobile phone, a tablet computer (PAD), a desktop computer, a laptop computer, a handheld computer, a notebook computer (Laptop), an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device, a specific type of the electronic device is not specially limited in embodiments of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on instruction operation code and a time sequence signal, to complete control of instruction reading and instruction execution.

A memory may further be disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access and reduces waiting time of the processor 110. Therefore, system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect the battery 142, the charging management module 140, and the processor 110. The power management module 141 receives an input of the battery 142 and/or an input of the charging management module 140, and supplies power to the processor 110, the internal memory 121, the display 194, the camera 193, the wireless communication module 160, and the like. The power management module 141 may further be configured to monitor parameters such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed to improve antenna utilization. For example, the antenna 1 may be multiplexed as a diversity antenna in a wireless local area network. In some other embodiments, an antenna may be used in combination with a tuning switch.

The mobile communication module 150 may provide a solution that is applied to the electronic device 100 and that includes wireless communication technologies such as 2G, 3G, 4G, and 5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some function modules of the mobile communication module 150 may be disposed in the processor 110. In some embodiments, at least some function modules of the mobile communication module 150 and at least some modules of the processor 110 may be disposed in a same device.

The modem processor may include a modulator and a demodulator. The modulator is configured to modulate a to-be-sent low-frequency baseband signal into a medium or highfrequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another function module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more devices integrating at least one communication processing module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and connects the display 194 to the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated by using the lens, and is projected to a light-sensitive element. The light-sensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as an RGB format or a YUV format. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy, or the like.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, voice recognition, and text understanding.

The internal memory 121 may include one or more random access memories (random access memory, RAM) and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, where for example, a fifth generation DDR SDRAM is generally referred to as a DDR5 SDRAM), and the like. The non-volatile memory may include a magnetic disk storage device and a flash memory (flash memory).

The flash memory may be classified, based on an operation principle, into an NOR flash, an NAND flash, a 3D NAND flash, and the like; may be classified, based on a quantity of electric potential levels of a cell, into a single-level cell (single-level cell, SLC), a multi-level cell (multi-level cell, MLC), a triple-level cell (triple-level cell, TLC), a quad-level cell (quad-level cell, QLC), and the like; or the flash memory may be classified, based on storage specifications, into a universal flash storage (English: universal flash storage, UFS), an embedded multimedia card (embedded multimedia Card, eMMC), and the like.

The random access memory may be directly read and written by the processor 110, may be configured to store an executable program (for example, machine instructions) of an operating system or another running program, may be further configured to store data of a user and an application, and the like.

The non-volatile memory may also store an executable program, data of a user and an application, and the like, and may be loaded to the random access memory in advance for the processor 110 to directly perform reading and writing.

The external memory interface 120 may be configured to connect to an external non-volatile memory, to extend a storage capability of the electronic device 100. The external non-volatile memory communicates with the processor 110 through the external memory interface 120, to implement a data storage function. For example, files such as music and videos are stored in the external non-volatile memory.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal.

The speaker 170A, also referred to as a "loudspeaker", is configured to convert an audio electrical signal into a sound signal. The electronic device 100 may be configured to listen to music or answer a hands-free call by using the speaker 170A.

The receiver 170B, also referred to as an "earpiece", is configured to convert an audio electrical signal into a sound signal. When a call is answered or voice information is received by using the electronic device 100, the receiver 170B may be put close to a human ear to receive a voice.

The microphone 170C, also referred to as a "mike", is configured to convert a sound signal into an electrical signal. When making a call or sending voice information, the user may make a sound near the microphone 170C through the mouth of the user, to input a sound signal to the microphone 170C. The microphone 170C may be configured to implement functions such as collecting a sound signal, reducing noise, identifying a sound source, and performing directional recording.

The headset jack 170D is configured to connect to a wired headset. The headset jack 170D may be a USB interface 130, or may be another standard interface.

The pressure sensor 180A is configured to sense a pressure signal, and may convert the pressure signal into an electrical signal. In some embodiments, the pressure sensor 180A may be disposed on the display 194.

The gyroscope sensor 180B may be configured to determine a motion posture of the electronic device 100. In some embodiments, an angular velocity of the electronic device 100 around three axes (namely, axes x, y, and z) may be determined through the gyroscope sensor 180B.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The acceleration sensor 180E may detect accelerations in various directions (usually on three axes) of the electronic device 100. When the electronic device 100 is still, a magnitude and a direction of gravity may be detected.

The distance sensor 180F is configured to measure a distance. The electronic device 100 may measure the distance in an infrared manner or a laser manner. In some embodiments, in a photographing scenario, the electronic device 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode.

The ambient light sensor 180L is configured to sense ambient light brightness. The electronic device 100 may adaptively adjust brightness of the display 194 based on the sensed ambient light brightness.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J.

The touch sensor 180K is also referred to as a "touch component". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor 180K. The touch sensor may transfer the detected touch operation to the application processor to determine a type of the touch event.

The bone conduction sensor 180M may obtain a vibration signal.

The button 190 includes a power button, a volume button, and the like. The button 190 may be a mechanical button or a touch button.

The motor 191 may generate a vibration prompt.

The indicator 192 may be an indicator light, and may be configured to indicate a charging status a power change, a message, a notification, and the like.

The SIM card interface 195 is configured to connect to a SIM card.

The following describes application scenarios of the device collaboration method provided in embodiments of this application.

First, user interfaces of several collaborative connections in embodiments of this application are described.

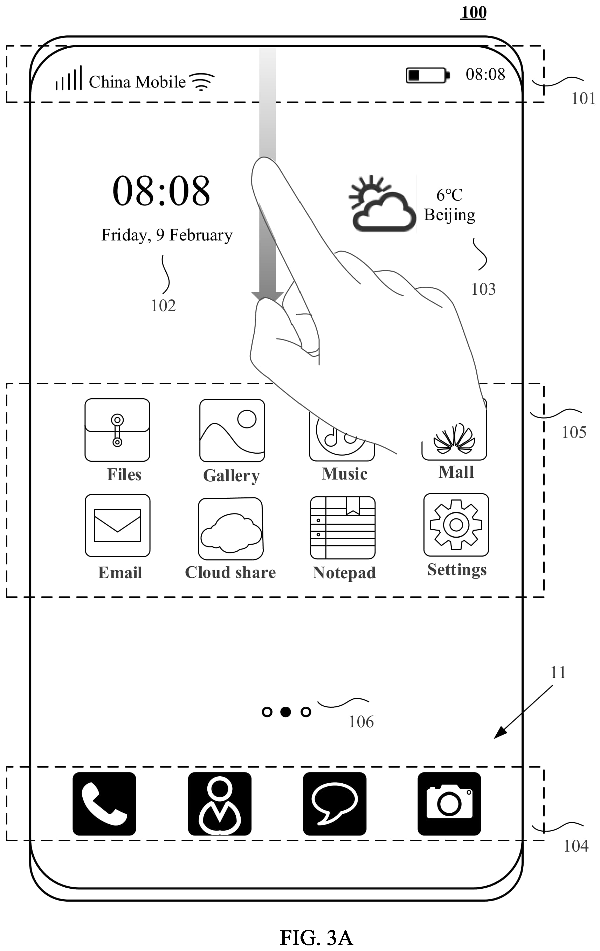

For example, FIG. 3A to FIG. 3D are related schematic diagrams of invoking a collaborative connection interface of an electronic device 100.

FIG. 3A shows a home screen 11 that is on the electronic device 100 and that is used to display applications installed on the electronic device 100. The home screen 11 may include a status bar 101, a calendar indicator 102, a weather indicator 103, a tray 104 with icons of frequently used applications, and other application icons 105.

The status bar 101 may include: one or more signal strength indicators of a mobile communication signal (which may alternatively be referred to as a cellular signal), an operator name (for example, "China Mobile"), one or more signal strength indicators of a wireless fidelity (wireless fidelity, Wi-Fi) signal, a battery status indicator, and a time indicator.

The home screen 11 may further include a page indicator 106. The other application icons may be distributed on a plurality of pages, and the page indicator 106 may indicate a specific page on which an application currently viewed by a user is located. The user may slide leftward or rightward in an area of the other application icons, to view an application icon on another page.

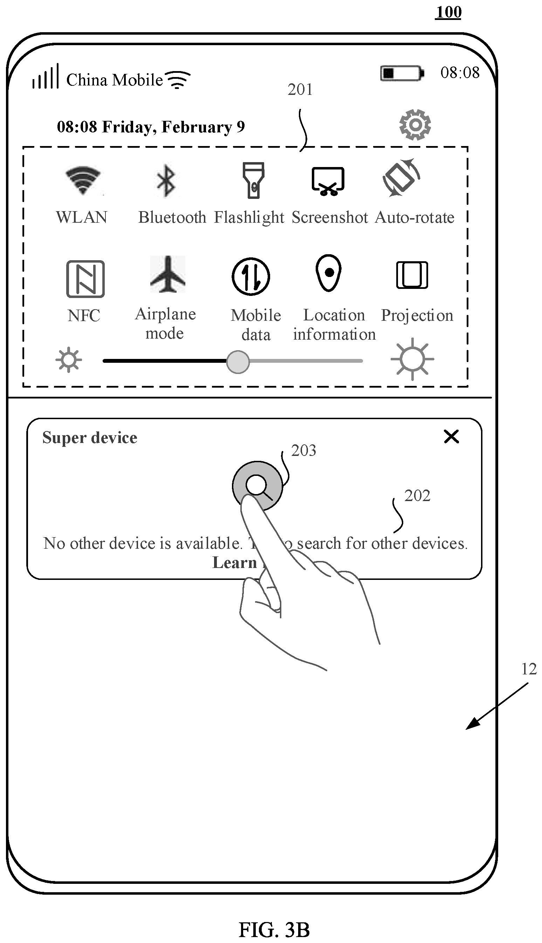

As shown in FIG. 3A, the electronic device 100 receives a slide operation performed by the user on the status bar 101, and in response to the slide operation, the electronic device 100 displays a control center interface 12 shown in FIG. 3B. The control center interface 12 includes shortcut icons 201 of a plurality of frequently used functions (for example, a WLAN icon, a Bluetooth icon, an NFC icon, and a brightness adjustment bar shown in FIG. 3B).

As shown in FIG. 3B, the control center interface 12 may further include a collaborative connection card 1, and the card 1 displays prompt information 202 and a control 203. The prompt information 202 may prompt the user that there is currently no available device that is collaboratively connected, and the control 203 may be tapped to search for another device.

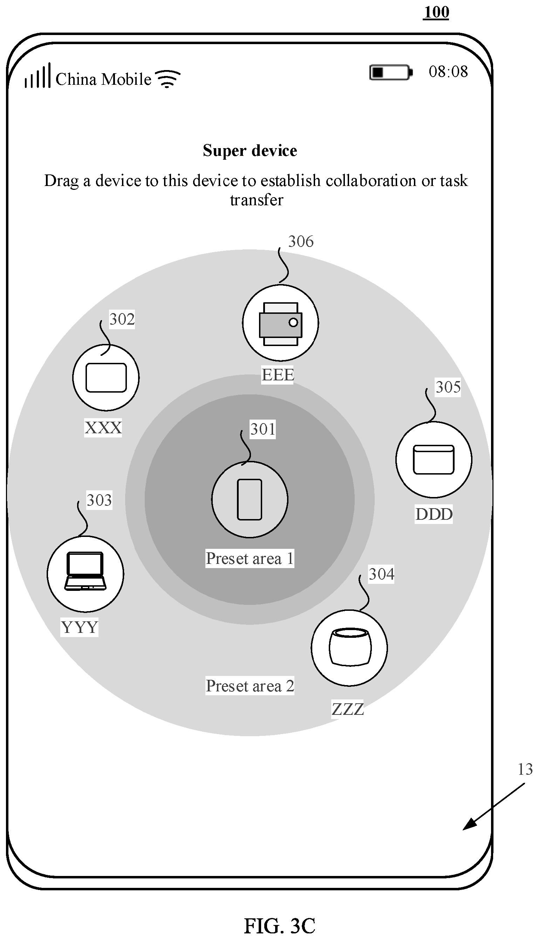

In some embodiments, the control 203 may receive an input operation (for example, a tap operation) of the user, and in response to the input operation, the electronic device 100 displays a collaborative connection interface 13 shown in FIG. 3C. The collaborative connection interface 13 includes an icon 301 of the electronic device 100, icons of candidate devices detected by the electronic device 100 for a collaborative connection, and names and/or models of the candidate devices. Each candidate device displayed on the user interface 13 supports at least one collaborative capability.

For example, the icon of the electronic device 100 is located in a preset area 1 (for example, a circular area shown in FIG. 3C) of the collaborative connection interface 13, and the icons of the candidate devices may be located in a preset area 2 (for example, an annular area shown in FIG. 3C) surrounding the icon of the electronic device 100. Shapes and locations of the preset area 1 and the preset area 2 are not specifically limited in embodiments of this application. In subsequent embodiments, an example in which the preset area 1 is a circular area shown in the figure and the preset area 2 is an annular area shown in the figure is used for description. The icons of the candidate devices may include an icon 302 of a tablet computer whose model is AAA, an icon 303 of a notebook computer whose model is YYY, an icon 304 of a sound box whose model is ZZZ, an icon 305 of a projector whose model is DDD, and an icon 306 of a printer whose model is EEE.

In this embodiment of this application, before the collaborative connection interface 13 is displayed, in response to the input operation (for example, the tap operation) performed on the control 203, the electronic device 100 detects the candidate devices for the collaborative connection, and obtains related information of each candidate device. The related information may indicate the collaborative capability supported by the candidate device, and some or all of a device identifier, a device name, a device model, and a device type. The electronic device 100 may determine an icon of each candidate device based on the related information of the candidate device, and display the icon on the collaborative connection interface 13. In an implementation, the electronic device 100 may obtain, through signal detection, an electronic device located in a same local area network, and use the electronic device located in the same local area network as a candidate device for the collaborative connection. In an implementation, the electronic device 100 may query, in a server, an electronic device that is logged in to by using a same account as the electronic device 100, and use the found electronic device as a candidate device for the collaborative connection. Related information of the candidate device may be obtained by the electronic device 100 by requesting the candidate device after the candidate device is detected this time, or may be obtained and stored by the electronic device 100 in a previous collaborative connection to the candidate device.

In some embodiments, a capability badge corresponding to at least one capability that can be collaborated by each candidate device is additionally displayed on the icon of the candidate device on the collaborative connection interface 13. In an implementation, the related information includes a collaborative capability that can be supported by the candidate device, and the electronic device 100 may further determine, based on the related information of the candidate device, the capability badge additionally displayed on the icon of the candidate device.

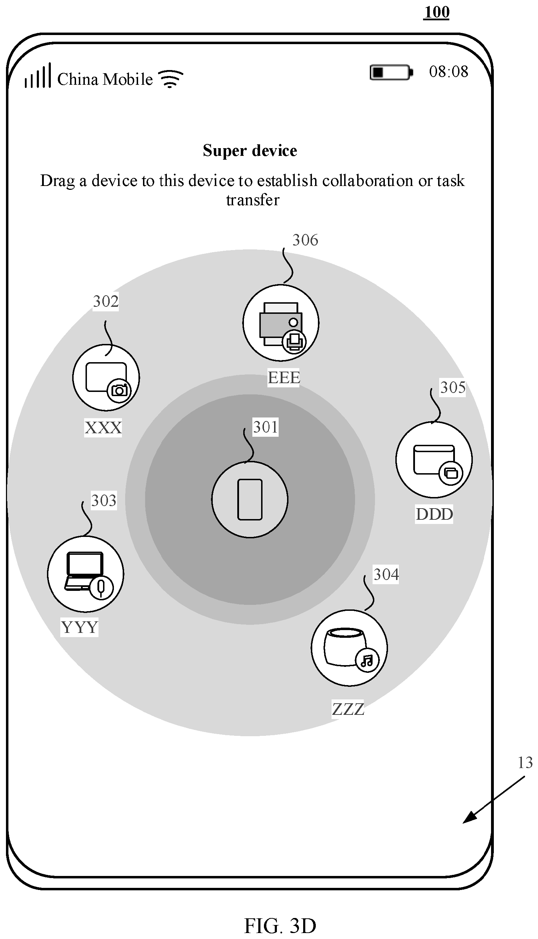

For example, refer to the collaborative connection interface 13 shown in FIG. 3D. A capability badge corresponding to a camera is additionally displayed on the icon 302 of the tablet computer, a capability badge corresponding to an audio input function is additionally displayed on the icon 303 of the notebook computer, a capability badge corresponding to an audio output function is additionally displayed on the icon 304 of the sound box, a capability badge corresponding to a projection is additionally displayed on the icon 305 of the projector, and a capability badge corresponding to a printing function is additionally displayed on the icon 306 of the printer.

In an implementation, only one capability badge is additionally displayed on the icon of the candidate device on the collaborative connection interface 13 invoked by the electronic device 100. If the candidate device supports a plurality of collaborative capabilities, the capability badge may be a capability badge corresponding to a capability that is recently used for a collaborative connection to the candidate device, or may be a capability badge corresponding to a capability that is most frequently used for a collaborative connection to the candidate device. This is not specifically limited herein.

In some embodiments, the icons of the candidate devices on the collaborative connection interface 13 slowly rotate relative to the icon of the electronic device 100.

In some embodiments, when the electronic device 100 detects no candidate device for a collaborative connection, icons of zero candidate devices are displayed in the annular area of the collaborative connection interface 13 shown in FIG. 3C and FIG. 3D, and the electronic device 100 may display prompt information on the collaborative connection interface 13, to prompt the user that no candidate device for a collaborative connection is detected.

In this embodiment of this application, in a same communication environment, candidate devices displayed on the collaborative connection interface 13 invoked in different manners may be different, and capability badges that are additionally displayed on icons of the candidate devices may also be different.

In some embodiments, when running an application 1 in the foreground, the electronic device 100 detects an input operation of invoking the collaborative connection interface 13. In response to the input operation, the electronic device 100 determines at least one preset capability required by the application 1, and the electronic device 100 detects a candidate device that can collaborate with the preset capability, and displays, on the collaborative connection interface 13, an icon of the candidate device that can collaborate with the preset capability. In some embodiments, a capability badge of the preset capability is additionally displayed on the icon of each candidate device on the collaborative connection interface 13.

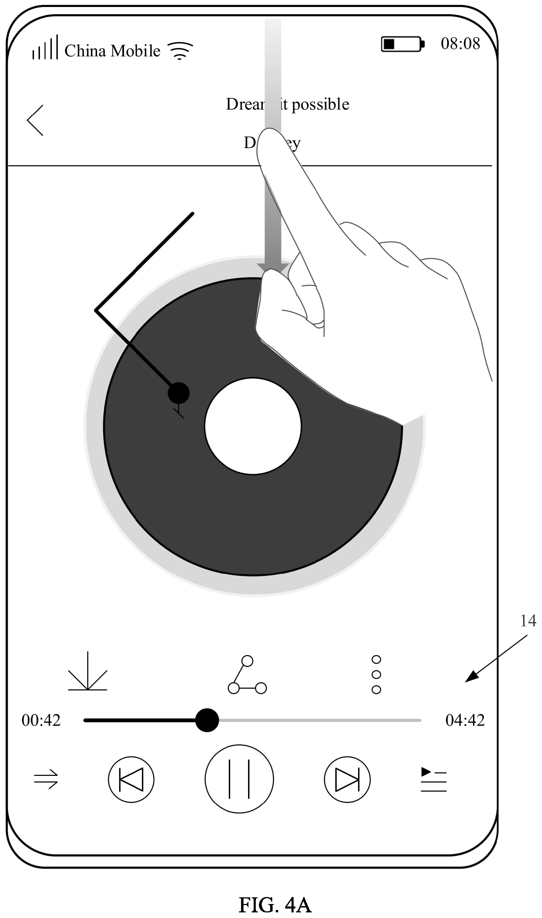

For example, the application 1 is a music application (application, APP). FIG. 4A to FIG. 4D show another manner of invoking the collaborative connection interface 13.

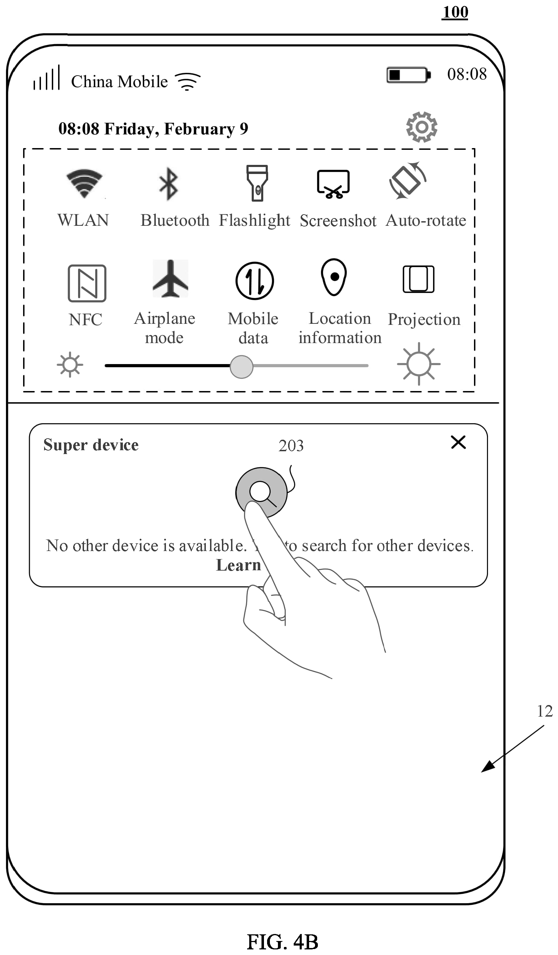

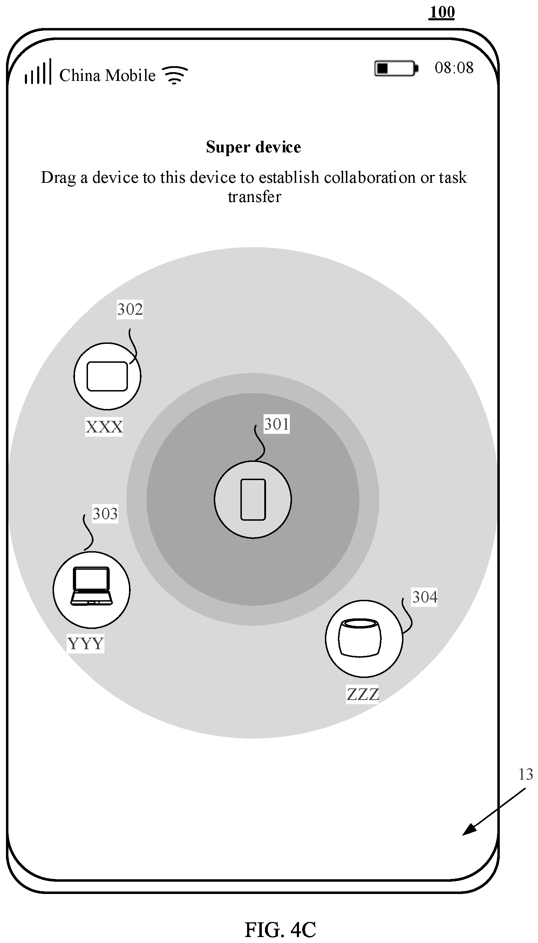

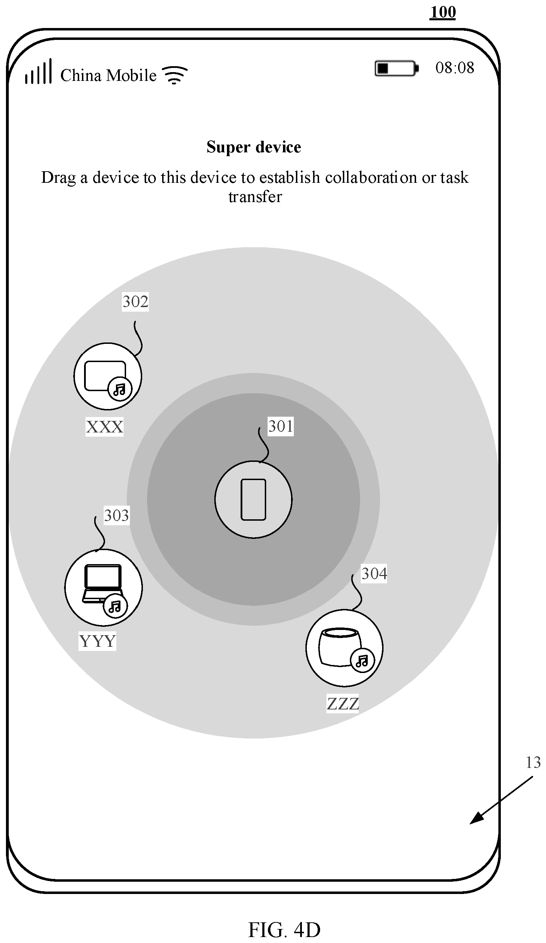

When displaying a music playing interface 14 of the music app shown in FIG. 4A, the electronic device 100 receives a slide operation performed on the status bar. In response to the slide operation, the electronic device 100 displays a control center interface 12 shown in FIG. 4B; and detects an input operation performed on a control 203 on the control center interface 12. In response to the input operation, the electronic device 100 determines that a capability required by the music app includes the audio output function. The electronic device 100 detects a candidate device that can collaborate with the audio output function, and displays, on the collaborative connection interface 13 shown in FIG. 4C or FIG. 4D, an icon of the candidate device that can collaborate with the audio output function. In some embodiments, as shown in FIG. 4D, a capability badge of the audio output function is additionally displayed on the icon of each candidate device. For example, the electronic device 100 detects that devices in the same local area network include the tablet computer whose model is AAA, the notebook computer whose model is YYY, the sound box whose model is ZZZ, the projector whose model is DDD, and the printer whose model is EEE. The tablet computer, the notebook computer, and the sound box support a collaborative connection for the audio output function, and other devices do not support a collaborative connection for the audio output function. The collaborative connection interface 13 shown in FIG. 4C or FIG. 4D includes the icon 302 of the tablet computer, the icon 303 of the notebook computer, and the icon 304 of the sound box.

It may be understood that, in the examples in FIG. 4A to FIG. 4D, the input operation for invoking the collaborative connection interface 13 may include a slide operation for invoking the control center interface 12 and a tap operation performed on the control 203 on the control center interface 12.

In some embodiments, the electronic device 100 runs the application 1 in the foreground, a user interface 1 of the application 1 includes a control 1, and the control 1 is used to invoke a preset capability of a collaborated available device. An input operation (for example, a tap operation) performed on the control 1 is detected. If there is currently no available device that collaborates with the preset capability, the electronic device 100 displays a control 2 in response to the input operation. When detecting an input operation (for example, a tap operation) performed on the control 2, the electronic device 100 detects a candidate device that can collaborate with the preset capability, and displays, on the collaborative connection interface 13, an icon of the candidate device that can collaborate with the preset capability. In some embodiments, a capability badge of the preset capability is additionally displayed on the icon of each candidate device on the collaborative connection interface 13. It may be understood that the input operation for invoking the collaborative connection interface 13 may include an input operation performed on a control 1 and an input operation performed on a control 2.

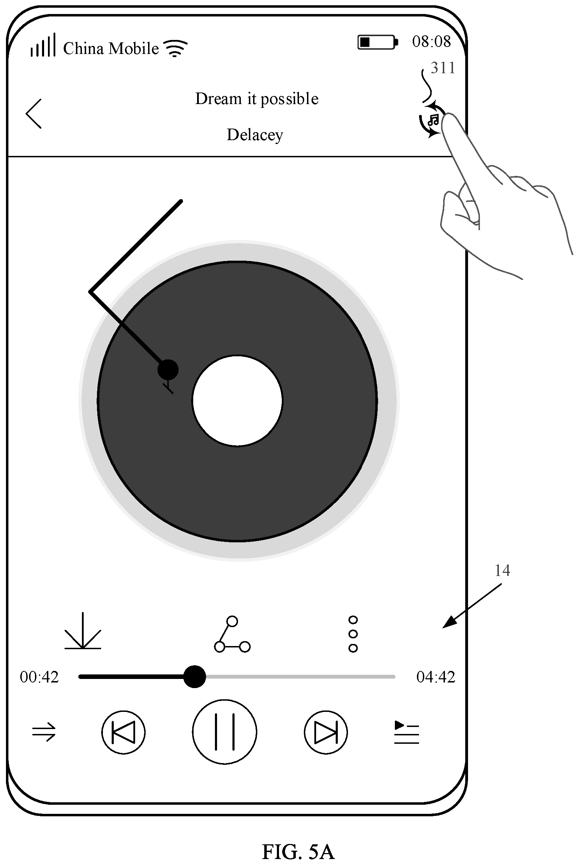

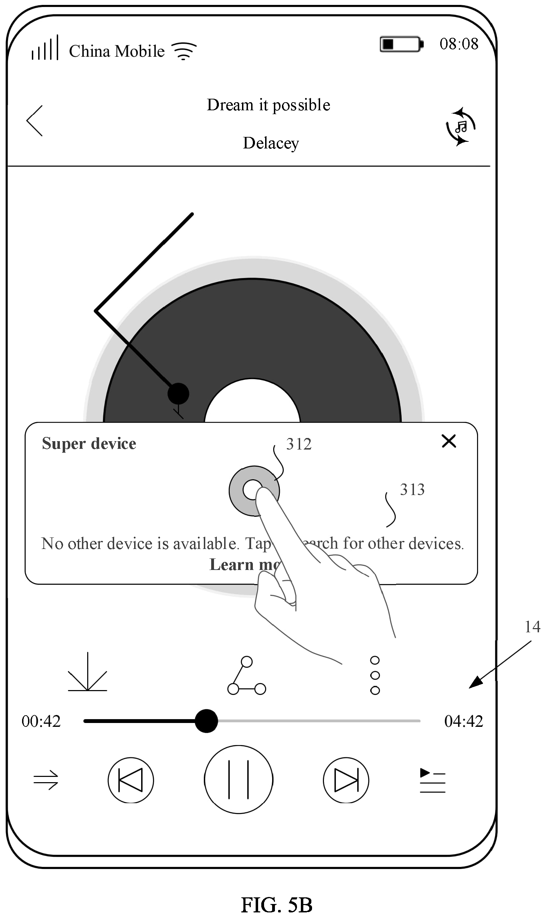

For example, the application 1 is a music app. FIG. 5A to FIG. 5D show another manner of invoking the collaborative connection interface 13. A user interface 1 is a music playing interface 14 shown in FIG. 5A, the control 1 is a switching control 311 on the music playing interface 14, the switching control 311 is used to invoke an audio output function of a collaborated available device, and the control 2 is a control 312 shown in FIG. 5B.

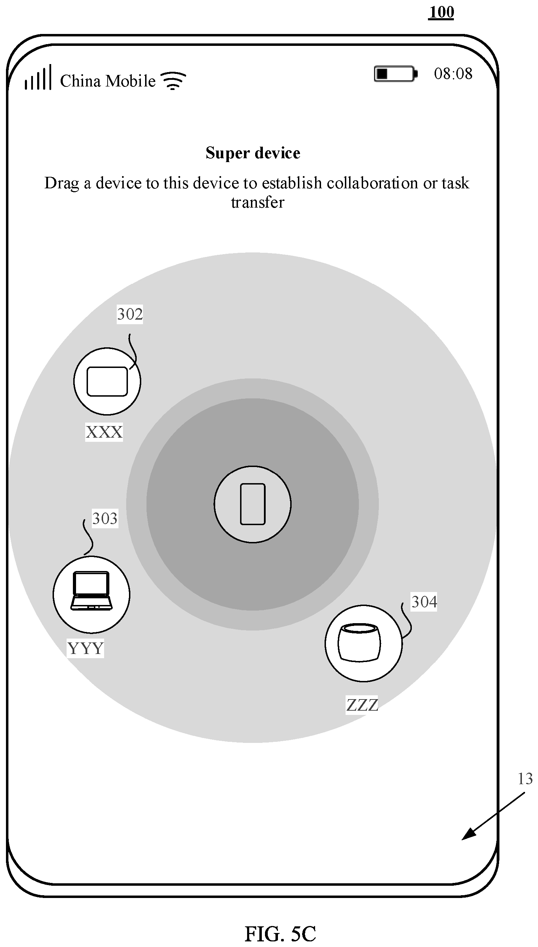

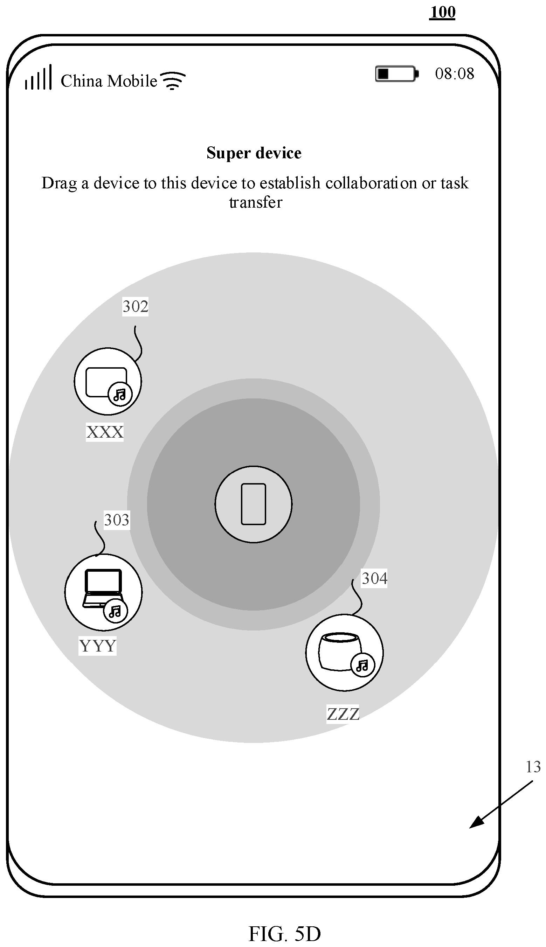

The electronic device 100 displays the music playing interface 14 of the music application shown in FIG. 5A. The music playing interface 14 includes the switching control 311. The electronic device 100 detects an input operation performed on the switching control 311. If there is currently no available device that collaborates with the audio output function, the electronic device 100 displays, in response to the input operation, a card 2 used for a collaborative connection. The card 2 includes the control 312 and prompt information 313, and the prompt information 313 indicates that there is currently no available device that collaborates with the audio output function, and the user may search for another device. An input operation performed on the control 312 is detected. In response to the input operation, the electronic device 100 detects a candidate device that can collaborate with the audio output function, and displays, on the collaborative connection interface 13 shown in FIG. 5C or FIG. 5D, an icon of the candidate device that can collaborate with the audio output function. In some embodiments, as shown in FIG. 5D, a capability badge of the audio output function is additionally displayed on the icon of each candidate device.

In some embodiments, the electronic device 100 runs the application 1 in the foreground, and detects an input operation performed by the user on the application 1, where the input operation is used to execute the preset capability of the application 1. If the electronic device 100 does not have the preset capability, the electronic device 100 displays the control 2 in response to the input operation. When detecting an input operation (for example, a tap operation) performed on the control 2. The electronic device 100 detects a candidate device that can collaborate with the preset capability, and displays, on the collaborative connection interface 13, an icon of the candidate device that can collaborate with the preset capability. In some embodiments, a capability badge of the preset capability is additionally displayed on the icon of each candidate device on the collaborative connection interface 13. It may be understood that the input operation for invoking the collaborative connection interface 13 may include an input operation performed on the application 1 and an input operation performed on a control 2.

For example, the application 1 is a word app, and the preset capability is a printing function. If the electronic device 100 detects an input operation of invoking the print function of the word app, after determining that this device does not have the print function, the electronic device 100 may display a card used for a collaborative connection, and invoke the collaborative connection interface 13 by using the card. For details, refer to the foregoing embodiments. Details are not described herein again.

It should be noted that FIG. 3A to FIG. 5D describe several manners of invoking the collaborative connection interface 13 as examples, and the manners are not limited to the foregoing invoking manners. In embodiments of this application, the user interface 13 may alternatively be invoked in another manner. This is not specifically limited herein. In addition, the collaborative connection interfaces 13 in FIG. 3A to FIG. 5D are examples for description of embodiments of this application, and should not constitute a limitation on this application.

The following describes how to implement a collaborative connection between devices for a specified capability by using a collaborative connection interface.

Embodiments of this application provide five cases of implementing a collaborative connection.

Case 1: Two electronic devices support a collaborative connection of only one capability. A candidate device 200 supports at least one collaborative capability, and a capability badge of any one of the at least one capability (for example, a capability 1) may be additionally displayed on an icon of the candidate device 200. When the capability badge corresponding to the capability 1 is additionally displayed on the icon of the candidate device 200, the icon of the candidate device 200 is dragged to approach an icon of an electronic device 100, or an icon of an electronic device 100 is dragged to approach the icon of the candidate device 200, so that the electronic device 100 can be collaboratively connected to the capability 1 of the candidate device 200.

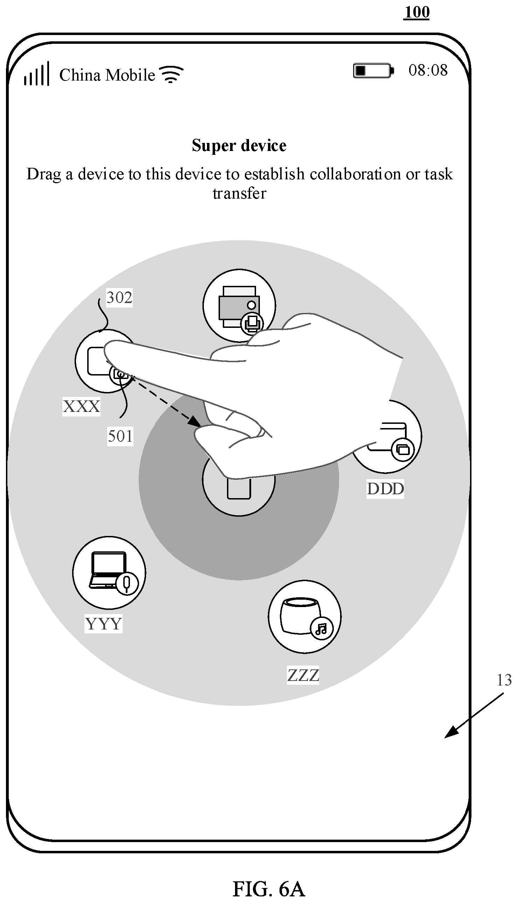

A collaborative connection interface 13 shown in FIG. 6A is used as an example. FIG. 6A to FIG. 7C show user interfaces related to the collaborative connection in Case 1.

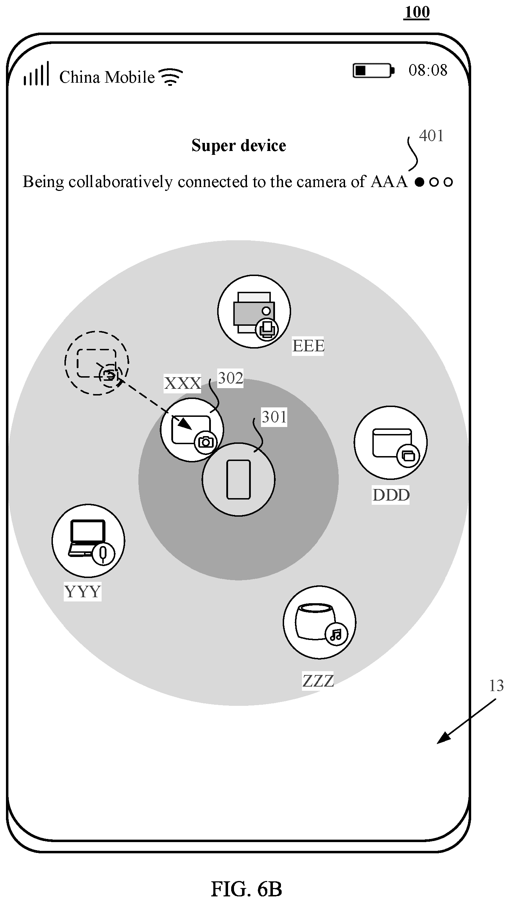

As shown in FIG. 6A and FIG. 6B, a capability badge 501 corresponding to a camera is additionally displayed on an icon 302 of a tablet computer on the collaborative connection interface 13. The icon 302 of the tablet computer may receive a slide operation of a user, and a sliding direction of the slide operation points to the icon 301 of the electronic device 100. In response to the slide operation, the electronic device 100 moves the icon 302 of the tablet computer towards the icon 301 of the electronic device 100. As shown in FIG. 6B, when detecting that the icon 302 is dragged to an area in which the icon 301 is located, in response to the slide operation, the electronic device 100 displays prompt information 401, and performs a collaborative connection to the camera of the tablet computer. The prompt information 401 indicates that the device is being collaboratively connected to the camera of the tablet computer. In this embodiment of this application, when detecting that the icon 302 touches a preset area 1 in which the icon 301 is located, the electronic device 100 may display the prompt information 401 and perform the collaborative connection, or may trigger displaying the prompt information 401 and performing the collaborative connection only when detecting that the icon 302 touches the icon 301. This is not specifically limited herein.

In some embodiments, that the electronic device 100 performs the collaborative connection to the camera of the tablet computer includes: sending a collaborative connection request for the camera to the tablet computer, where the collaborative connection request may include an identifier of the electronic device 100 and an identifier of the camera.

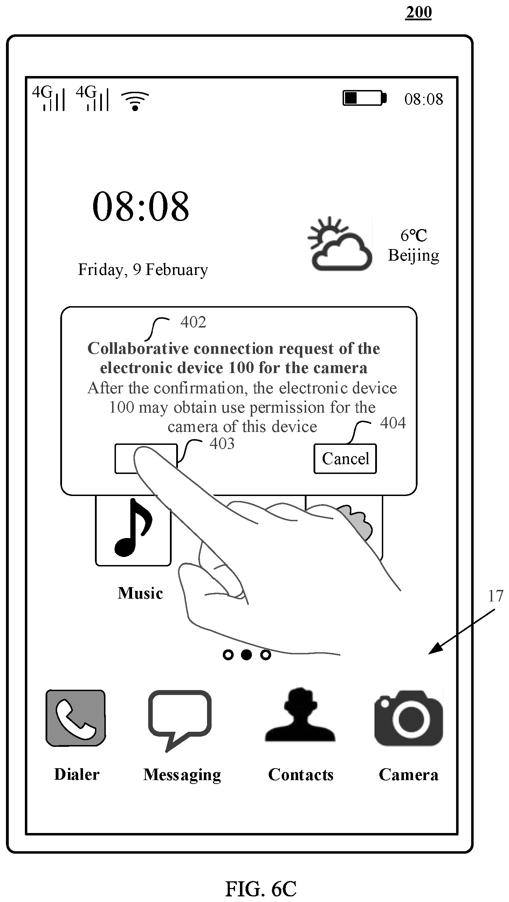

In some embodiments, as shown in FIG. 6C, after receiving the collaborative connection request sent by the electronic device 100, the tablet computer displays a selection box, where the selection box includes prompt information 402, an OK control 403, and a cancel control 404. The prompt information 402 indicates that the collaborative connection request for the camera from the electronic device 100 is received.

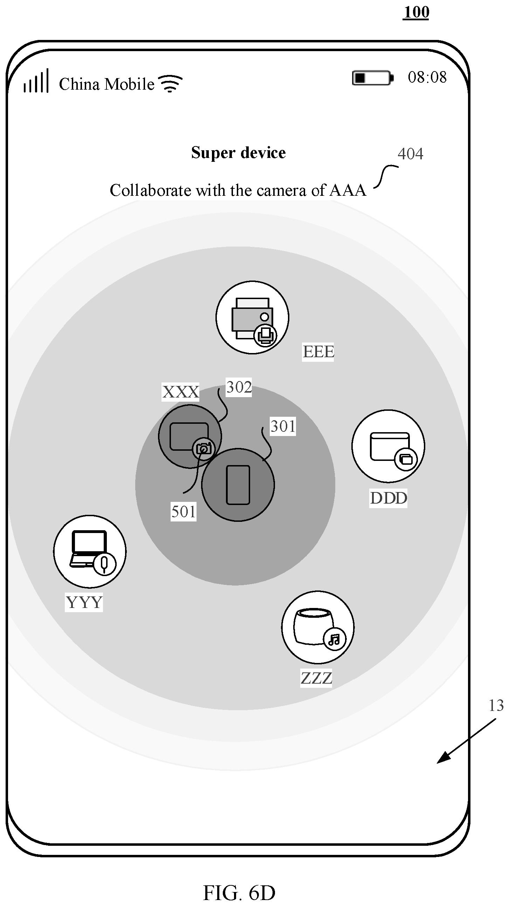

As shown in FIG. 6C, the OK control 403 may receive an input operation of the user, and in response to the input operation, the tablet computer sends, to the electronic device 100, a collaborative connection response 1 for agreeing to the collaborative connection. After receiving the collaborative connection response 1 sent by the tablet computer, the electronic device 100 displays prompt information 404 shown in FIG. 6D, and converts a display state of the icon of the tablet computer from an uncollaborated state to a collaborated state, where the prompt information 404 indicates that the collaborative connection between the device and the camera of the tablet computer is established. The collaborated state shown in FIG. 6D means that a color of the icon 302 of the tablet computer is deepened and is attached to the icon 301 of the device. An uncollaborated state and a collaborated state of the icon of the candidate device are not specifically limited in embodiments of this application.

In some embodiments, the capability badge additionally displayed on the icon of the candidate device also includes an uncollaborated state and a collaborated state. As shown in FIG. 6A, before the collaborative connection for the camera succeeds, the capability badge 501 of the camera is presented in an uncollaborated state (for example, not deepened for display). As shown in FIG. 6D, after the collaborative connection for the camera succeeds, the capability badge 501 of the camera is presented in a collaborated state (for example, deepened for display). The uncollaborated state and the collaborated state of the capability badge are not specifically limited in embodiments of this application either.

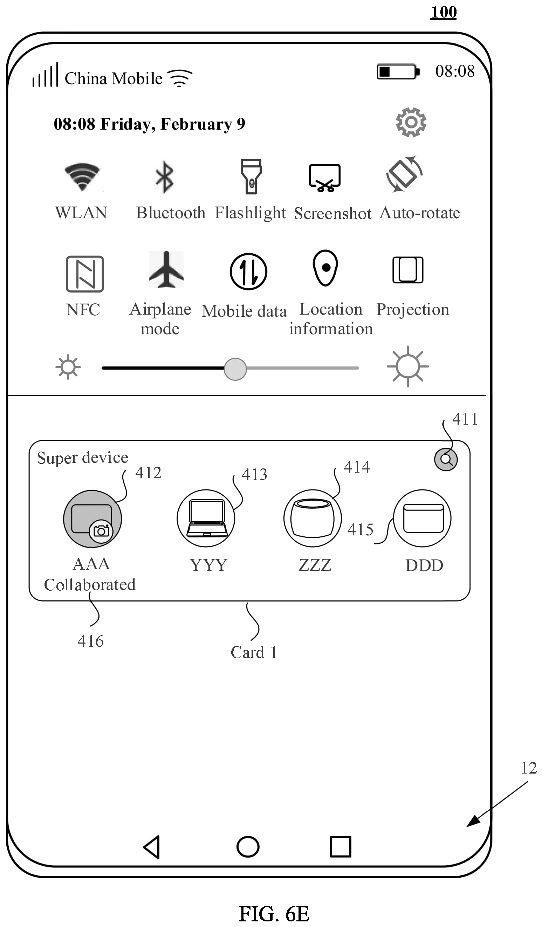

In some embodiments, refer to a control center interface 12 shown in FIG. 6E. After the collaborative connection for the camera of the tablet computer is established, the electronic device 100 displays, in a collaborative connection card 1, an icon of an available collaborated device (for example, an icon 412 of the tablet computer), and may further display an icon of a candidate device that is not collaborated (for example, an icon 413 of a notebook computer, an icon 414 of a sound box, and an icon 415 of a projector). The capability badge corresponding to the collaborated capability (namely, the camera) is additionally displayed on the icon 412 of the available device. In this embodiment of this application, a display state (for example, deepened for display) and/or prompt information 416 (for example, a text "Collaborated") of the icon 412 may indicate that an electronic device corresponding to the icon is an available collaborated device, and the capability badge added to the icon 412 indicates the collaborated capability of the tablet computer. In addition, the card 1 shown in FIG. 6E may further include a control 411, and the user may invoke, by using the control 411, a collaborative connection interface 13 shown in FIG. 6D.

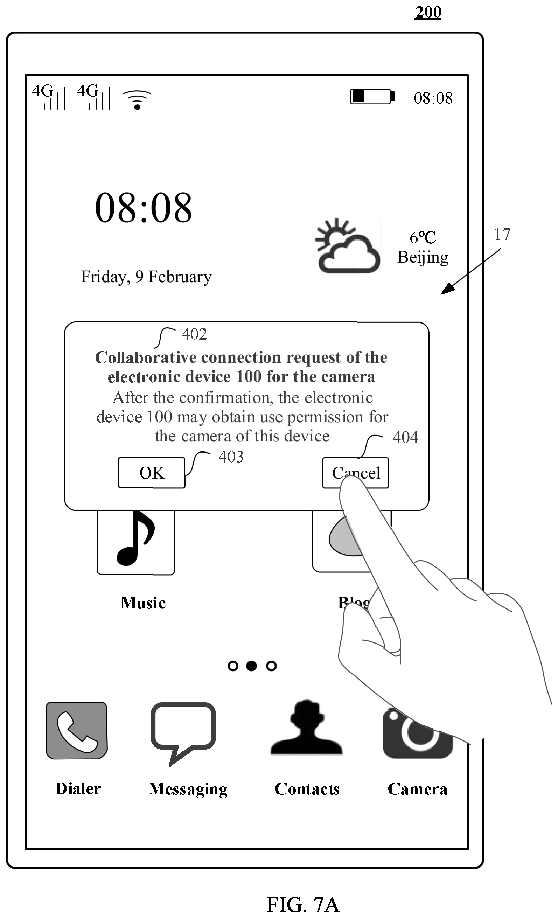

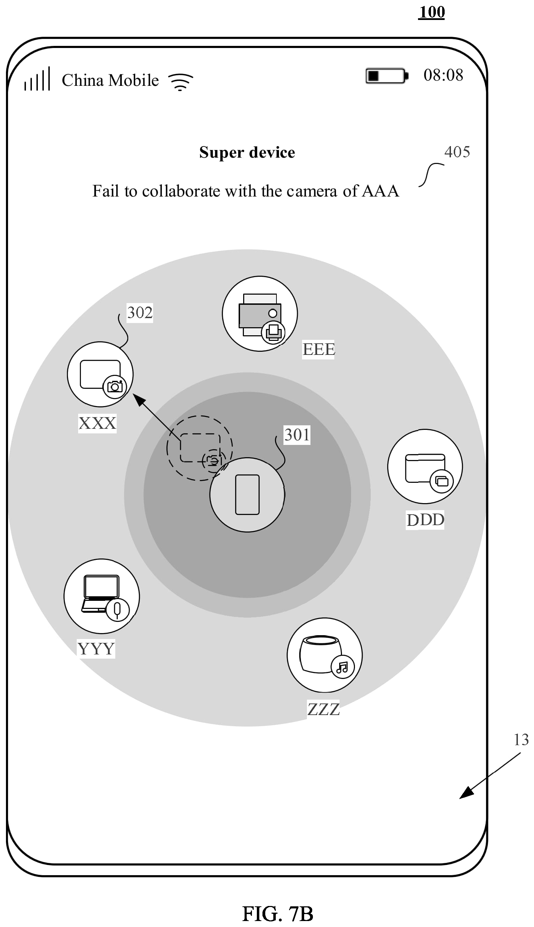

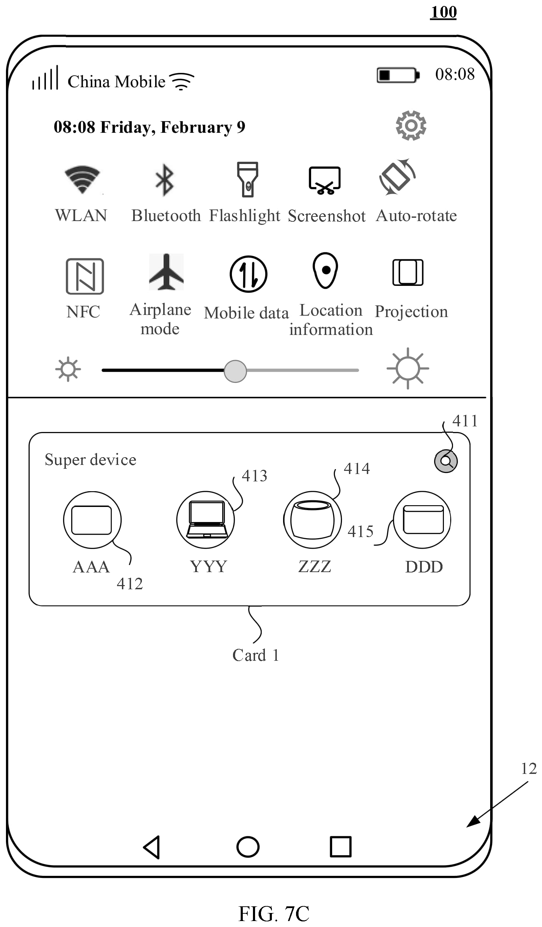

As shown in FIG. 7A, the cancel control 404 may receive an input operation of the user, and in response to the input operation, the tablet computer sends, to the electronic device 100, a collaborative connection response 2 for rejecting the collaborative connection. After determining, based on the collaborative connection response 2, that the collaborative connection fails, the electronic device 100 displays prompt information 405 shown in FIG. 7B, and pops the icon 301 of the tablet computer back to a preset area 2 (namely, an annular area) in which the candidate devices are located. The prompt information 405 indicates that the collaborative connection between the device and the camera of the tablet computer fails. In some embodiments, refer to a control center interface 12 shown in FIG. 7C. After the collaborative connection to the tablet computer fails, the electronic device 100 displays an icon of a detected candidate device in the collaborative connection card 1, so that the user learns of candidate devices that can be currently collaboratively connected.

It should be noted that, in this embodiment of this application, a collaborative connection failure is not limited to a collaborative connection failure caused by an input operation of the user for rejecting the collaborative connection, and may alternatively be caused by another reason. The another reason is not specifically limited herein. In an implementation, when the electronic device 100 does not receive the collaborative connection response 1 within preset duration after sending the collaborative connection request, the electronic device 100 determines that the collaborative connection fails, and displays a collaborative connection interface 13 shown in FIG. 7B.

In some embodiments, before the collaborative connection interface 13 receives a slide operation of dragging an icon by the user, the icon (for example, the icon 302) of the candidate device slowly rotates around the icon 301 of the device. When the collaborative connection interface 13 receives the slide operation of dragging an icon by the user, the icon of the candidate device stops slow rotating. In a process in which the electronic device 100 performs the collaborative connection, the electronic device 100 may further play a connection animation. After determining that the collaborative connection succeeds or the collaborative connection fails, the electronic device 100 may terminate the connection animation, and the icon of each candidate device resumes rotating.

In some embodiments, after receiving the collaborative connection request of the electronic device 100, the tablet computer may determine, in a preset manner, whether to accept the collaborative connection request of the electronic device 100, without displaying the selection box shown in FIG. 6C. The preset manner is not specifically limited in embodiments of this application. In an implementation, before sending the collaborative connection request to the tablet computer, the electronic device 100 further displays a verification information input box, where the verification information input box is used to enter verification information (for example, a password) of the collaborative connection of the tablet computer, and the collaborative connection request may carry the verification information entered by the user in the verification information input box. When determining that the verification information is correct, the tablet computer accepts the collaborative connection request of the electronic device 100. Otherwise, the tablet computer rejects the collaborative connection request of the electronic device 100. In an implementation, when determining that the tablet computer and the electronic device 100 are logged in to by using a same account, the tablet computer accepts the collaborative connection request of the electronic device 100. Otherwise, the tablet computer rejects the collaborative connection request of the electronic device 100. In an implementation, when determining that the tablet computer and the electronic device 100 are located in a same local area network, the tablet computer accepts the collaborative connection request of the electronic device 100. Otherwise, the tablet computer rejects the collaborative connection request of the electronic device 100.

In this embodiment of this application, the user may switch the capability badge additionally displayed on the icon of the candidate device, to establish a collaborative connection based on a capability badge obtained through switching.

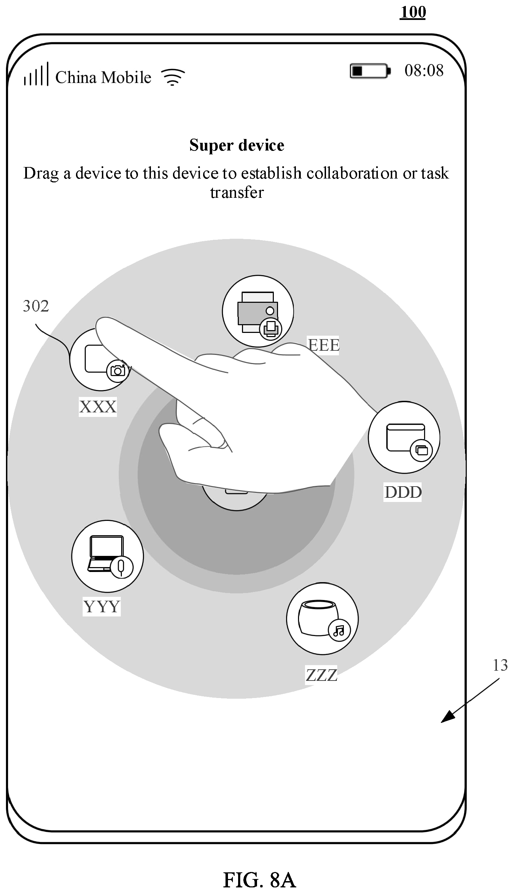

For example, FIG. 8A to FIG. 8D show user interfaces for switching the capability badge additionally displayed on the icon 302 of the tablet computer.

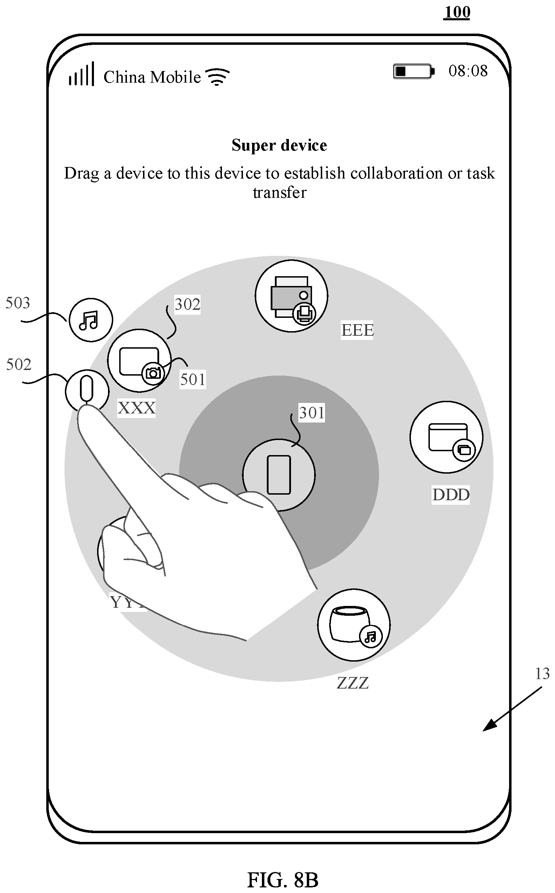

As shown in FIG. 8A and FIG. 8B, the capability badge 501 corresponding to the camera is additionally displayed on the icon (for example, the icon 302 of the tablet computer) of the candidate device on the collaborative connection interface 13. The icon 302 may receive an input operation (for example, a tap operation) of the user. In response to the input operation, the electronic device 100 displays, around the icon 302, capability badges corresponding to collaborative capabilities other than the camera supported by the tablet computer, for example, a capability badge 502 corresponding to an audio input function and a capability badge 503 corresponding to an audio output function. It may be understood that, if the collaborative capability supported by the tablet computer includes only the camera, when the user taps the icon 302, no other capability badge can be displayed around the icon 302.

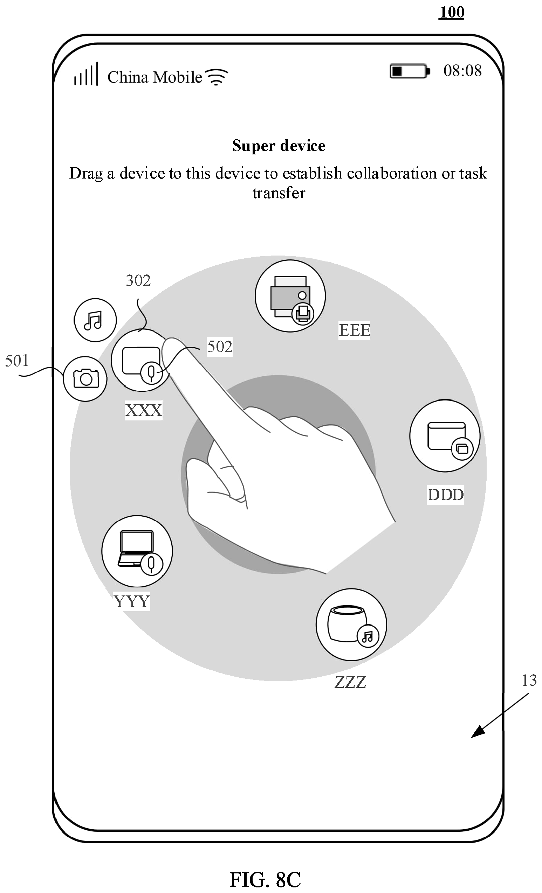

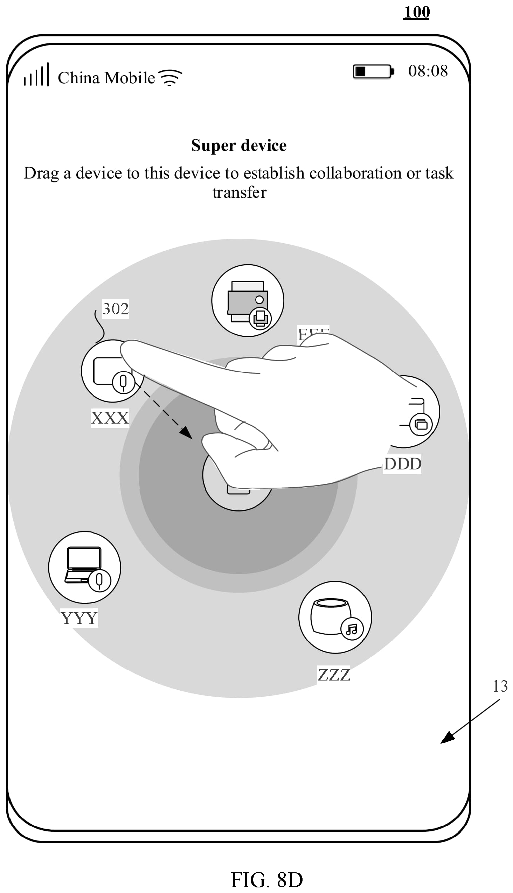

As shown in FIG. 8B and FIG. 8C, the capability badge 502 may receive an input operation (for example, a tap operation) of the user. In response to the operation, the capability badge 501 additionally displayed on the icon 302 of the tablet computer is switched to the capability badge 502, and the capability badge 501 corresponding to the camera is displayed around the icon 302. As shown in FIG. 8C and FIG. 8D, after the icon 302 of the tablet computer receives an input operation (for example, a touch operation) of the user, the electronic device 100 may stop displaying the capability badges around the icon 302. In some embodiments, after the capability badge 502 in FIG. 8B receives the input operation of the user, the electronic device 100 may alternatively directly display a collaborative connection interface 13 shown in FIG. 8D. It may be understood that, the capability badge 502 of the audio input function is additionally displayed on the icon 302 of the tablet computer shown in FIG. 8D. The user drags the icon 302 to the icon 301 of the device, to implement a collaborative connection to the audio input function of the tablet computer. As shown in FIG. 8B and FIG. 8C, for a same capability badge (for example, the capability badge 501), a size of the capability badge 501 displayed around the icon 302 may be different from a size of the capability badge 501 displayed on the icon 302.

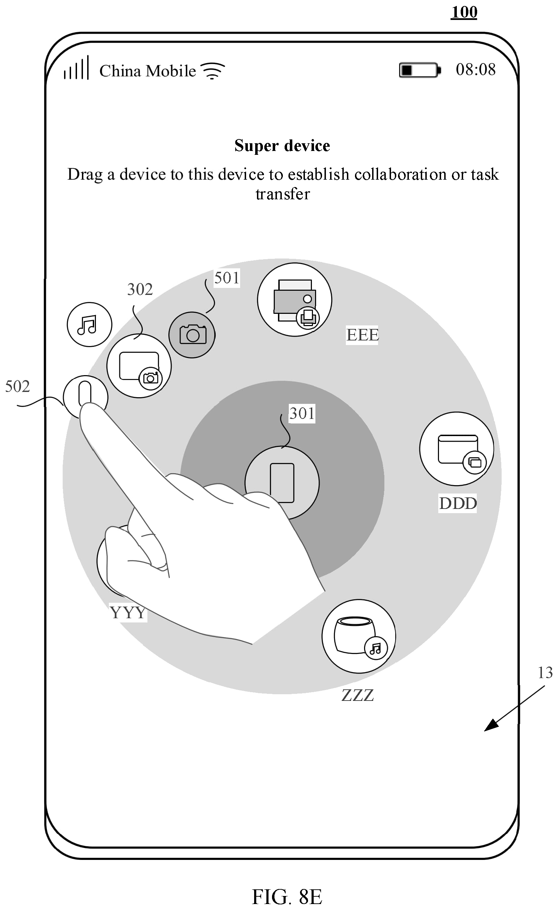

For example, FIG. 8E to FIG. 8G show other user interfaces for switching the capability badge additionally displayed on the icon 302 of the tablet computer.

In response to an input operation (for example, a tap operation) performed on the icon 302 of the tablet computer shown in FIG. 8A, the electronic device 100 displays a collaborative connection interface 13 shown in FIG. 8E. To be specific, capability badges corresponding to all collaborative capabilities supported by the tablet computer are displayed around the icon 302, and a selected state indicates a capability badge currently additionally displayed on the icon 302. As shown in FIG. 8E, the capability badge 501 currently additionally displayed on the icon 302 is represented in a selected state (for example, deepened for display), and the capability badge 502 that is not currently additionally displayed on the icon 302 is represented in an unselected state (for example, not deepened for display).

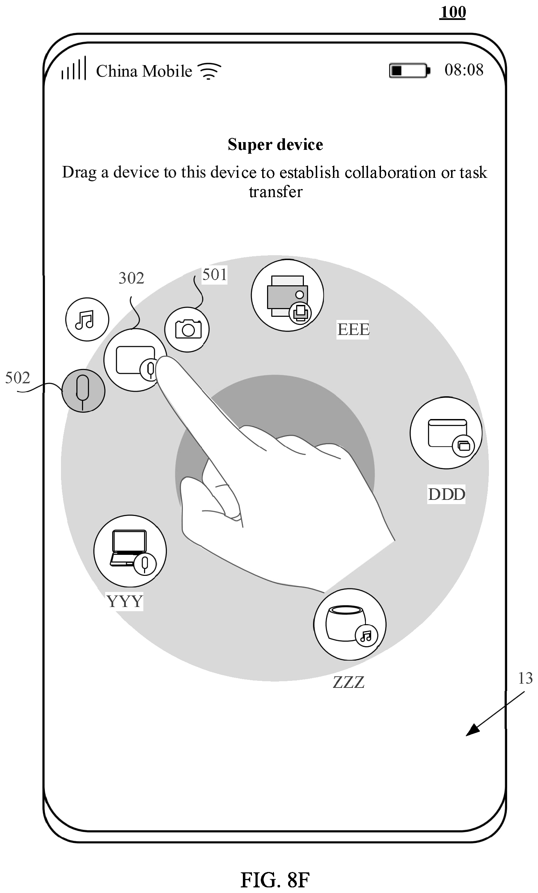

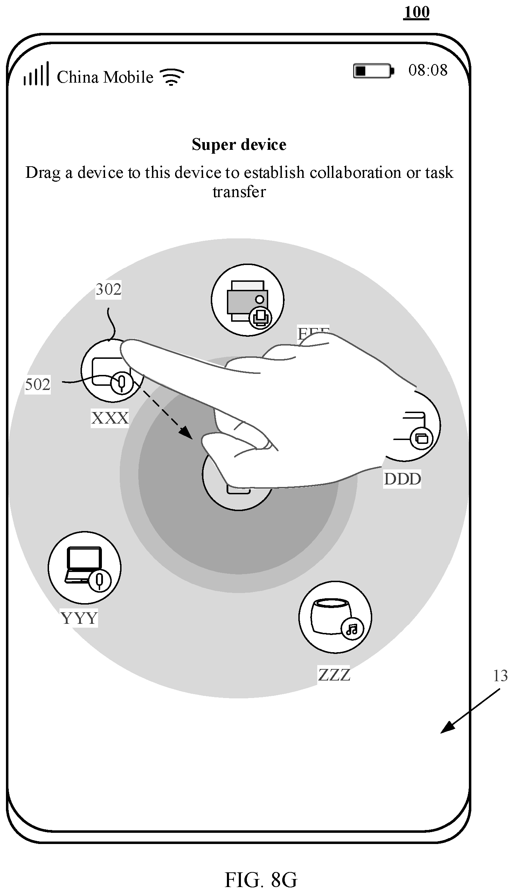

As shown in FIG. 8E and FIG. 8F, the capability badge 502 may receive an input operation (for example, a tap operation) of the user. In response to the operation, the capability badge 501 is switched from the selected state to an unselected state, and the capability badge 502 is switched from the unselected state to a selected state. In other words, the capability badge 501 additionally displayed on the icon 302 of the tablet computer is switched to the capability badge 502. As shown in FIG. 8F and FIG. 8G, after the icon 302 of the tablet computer receives an input operation (for example, a touch operation) of the user, the electronic device 100 may stop displaying the capability badges around the icon 302. In some embodiments, after the capability badge 502 in FIG. 8E receives the input operation of the user, the electronic device 100 may alternatively directly display a collaborative connection interface 13 shown in FIG. 8G.

In this embodiment of this application, the user may alternatively drag a capability badge around the icon 302 to the area in which the icon 301 of the electronic device 100 is located, to implement a collaborative connection of a capability corresponding to the capability badge.

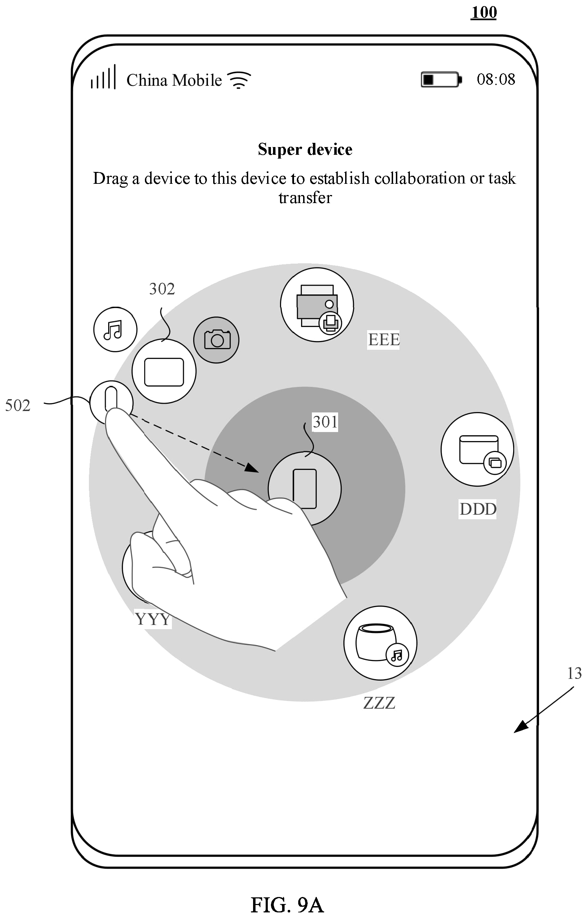

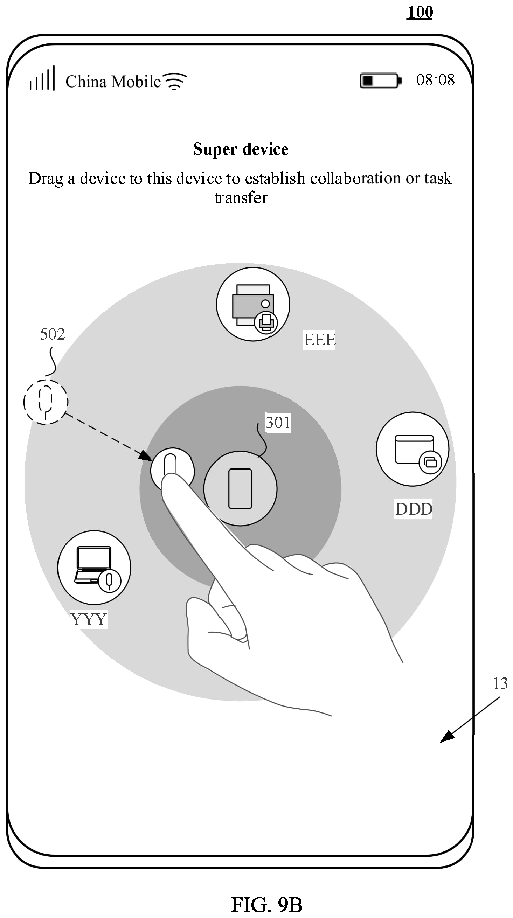

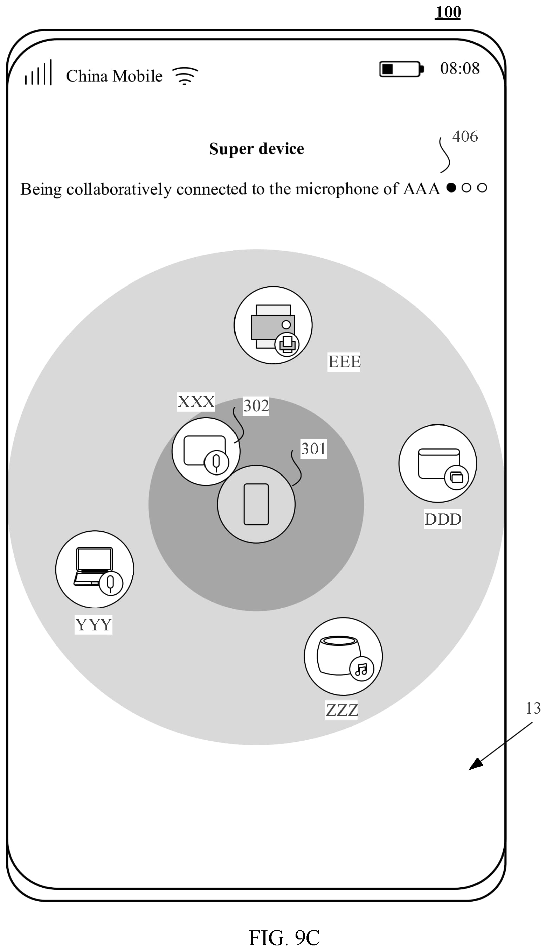

A collaborative connection interface 13 shown in FIG. 9A is used as an example. As shown in FIG. 9A and FIG. 9B, the user drags, by using a slide operation, the capability badge 502 of the audio input function to the area in which the icon 301 is located (namely, the preset area 1 or a display area of the icon 301), and then releases the capability badge. As shown in FIG. 9C, in response to the slide operation performed on the capability badge 502, the electronic device 100 moves the capability badge 502 in a sliding direction of the slide operation. As shown in FIG. 9C, when detecting that the capability badge 502 is dragged to the area in which the icon 301 is located and a finger of the user leaves the screen, the electronic device 100 displays, in the preset area 1 (namely, the circular area), the icon 302 that is of the tablet computer and on which the capability badge 502 is additional displayed and prompt information 406. The prompt information 406 indicates that the device is being collaboratively connected to the audio input function of the tablet computer. For details, refer to subsequent related content of the collaborative connection described in FIG. 6B to FIG. 7C. Details are not described herein again.

In addition, for the collaborative connection interfaces 13 shown in FIG. 3A to FIG. 5D on which no capability badge is additional displayed, the user may also select an additionally displayed capability badge for the icon of the candidate device. For details, refer to related descriptions of FIG. 8A to FIG. 8F. For how to implement a collaborative connection after the capability badge is additionally displayed on the icon of the candidate device, refer to related descriptions of FIG. 6A to FIG. 7C and FIG. 9A to FIG. 9C. Details are not described herein again.

In some embodiments, the icon 301 of the device may alternatively be dragged to an area in which the icon of the candidate device 200 is located, to implement a collaborative connection of a capability corresponding to a capability badge additionally displayed by the candidate device 200.

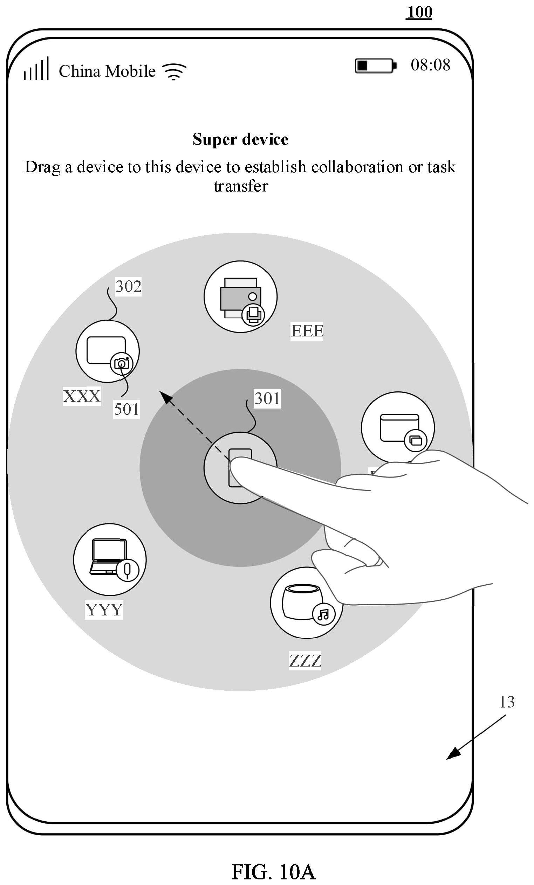

A collaborative connection interface 13 shown in FIG. 10A is used as an example. FIG. 10A to FIG. 10F show user interfaces related to the collaborative connection in this embodiment.

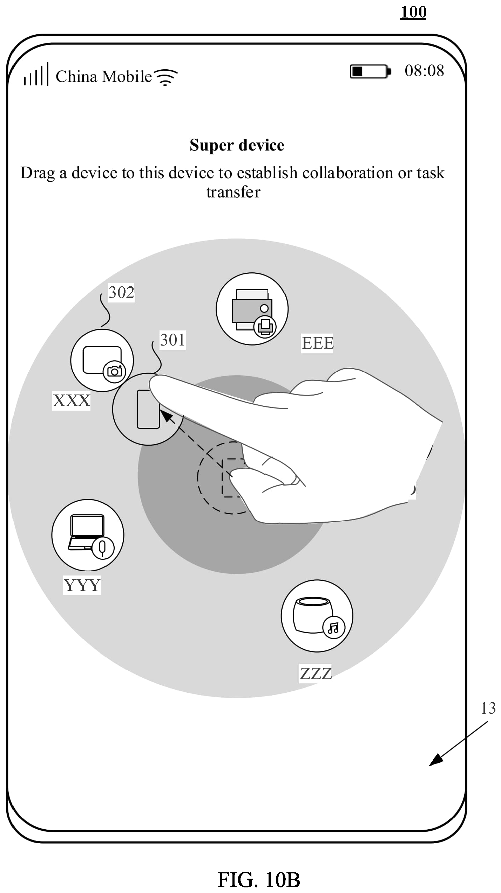

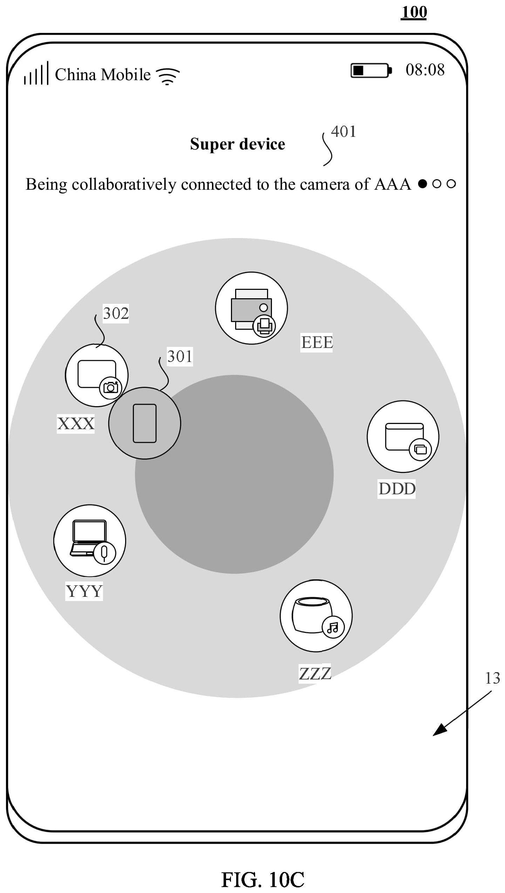

As shown in FIG. 10A and FIG. 10B, the capability badge 501 corresponding to the camera is additionally displayed on the icon 302 of the tablet computer on the collaborative connection interface 13. The icon 301 of the device may receive a slide operation of the user, and a sliding direction of the slide operation points to the icon 302 of the tablet computer. In response to the slide operation, the electronic device 100 moves the icon 301 towards the icon 302. As shown in FIG. 10C, when detecting that the icon 301 touches the icon 302, in response to the slide operation, the electronic device 100 displays the prompt information 401, and performs the collaborative connection to the camera of the tablet computer.

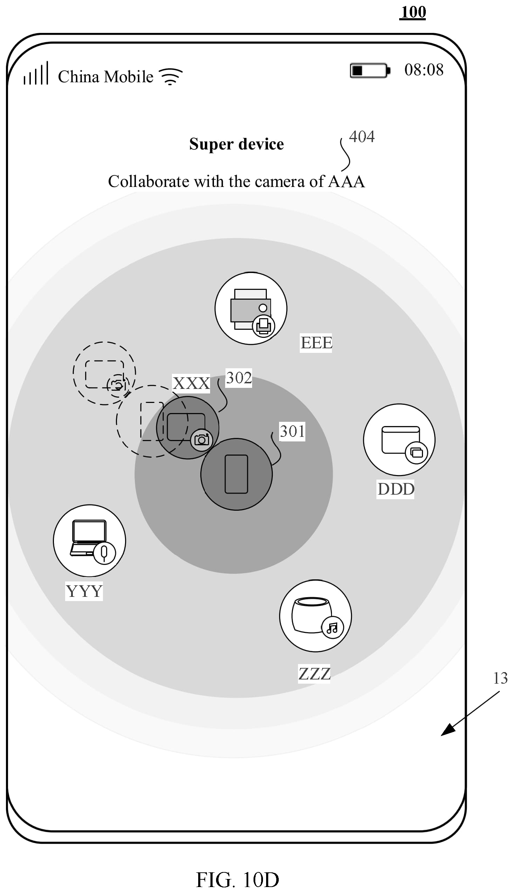

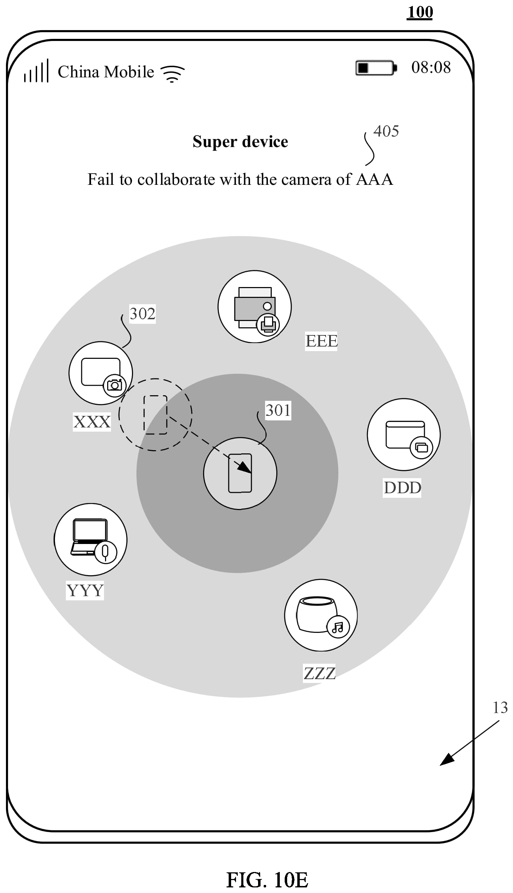

As shown in FIG. 10D, when determining that the collaborative connection succeeds, the electronic device 100 displays the prompt information 404, and changes a display state of the icon of the tablet computer from an uncollaborated state to a collaborated state. When determining that the collaborative connection fails, the electronic device 100 displays the prompt information 405 shown in FIG. 10E, and pops the icon 302 of the tablet computer back to the annular area in which the candidate devices are located.

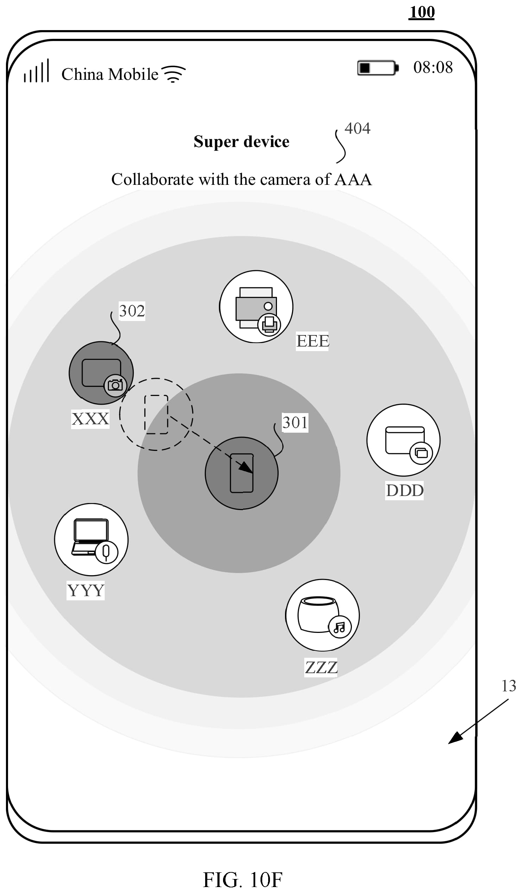

The collaborated state shown in FIG. 10D means that a color of the icon 302 of the tablet computer is deepened and is attached to the icon 301 of the device. An uncollaborated state and a collaborated state of an icon are not specifically limited in embodiments of this application. For example, when determining that the collaborative connection succeeds, the electronic device 100 displays a collaborative connection interface shown in FIG. 10F. FIG. 10F shows another collaborated state of the icon 302. To be specific, the color of the icon 302 is deepened, and is popped back to the preset area 2 (namely, the annular area shown in the figure) in which the candidate devices are located. An uncollaborated state of another candidate device in the annular area is represented as that a color is not deepened.

In this embodiment of this application, after the electronic device 100 establishes the collaborative connection for the capability 1 of the candidate device 200, the user may cancel the collaborative connection to the capability 1 of the candidate device 200.

The following uses the camera of the tablet computer as an example for description. In some embodiments, as shown in FIG. 10D and FIG. 10F, the capability badge of the camera is additionally displayed on the icon 302 of the tablet computer that is in the collaborated state. The icon 302 of the tablet computer in the collaborated state may receive a cancellation operation 1 of the user. In response to the cancellation operation 1, the electronic device 100 may cancel the collaborative connection to the camera of the tablet computer, and switch the display state of the icon 302 to the uncollaborated state. The cancellation operation 1 is not specifically limited in embodiments of this application, and cancellation operations 1 corresponding to different collaborated states may be different.

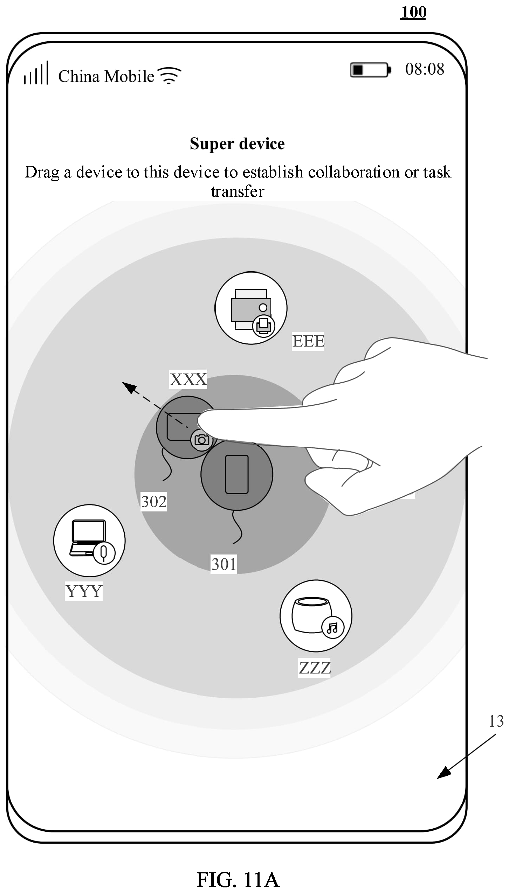

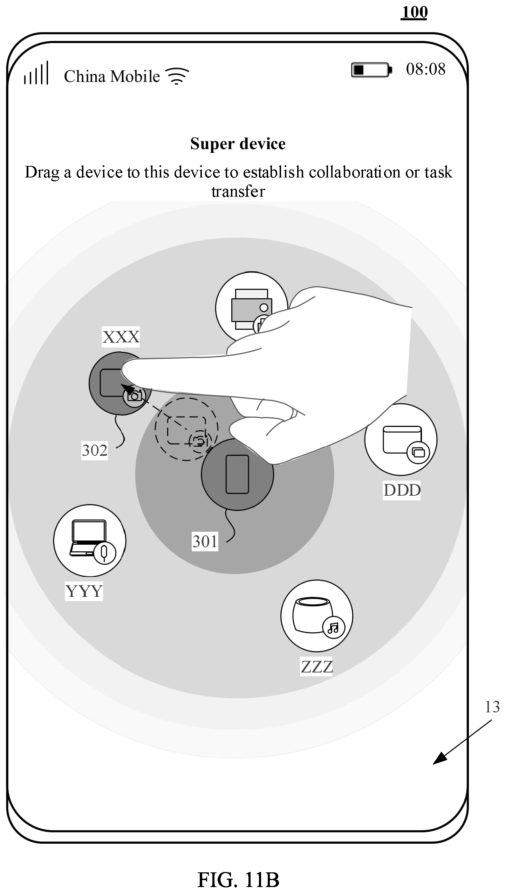

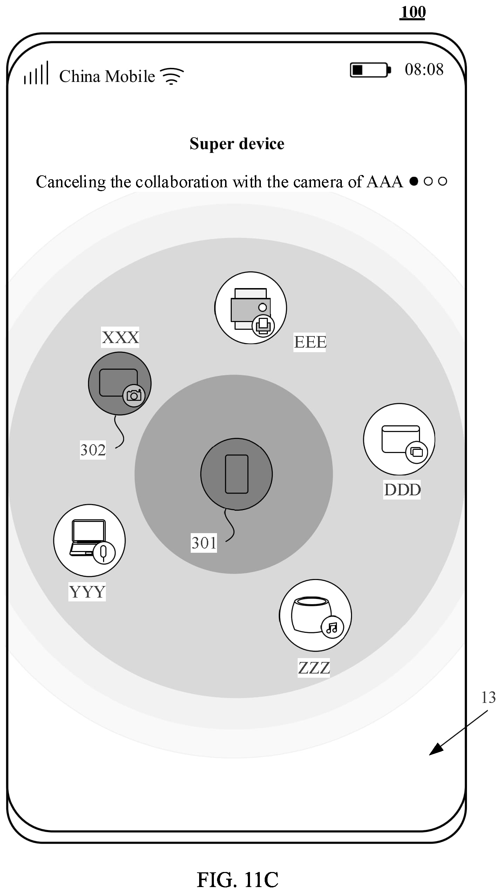

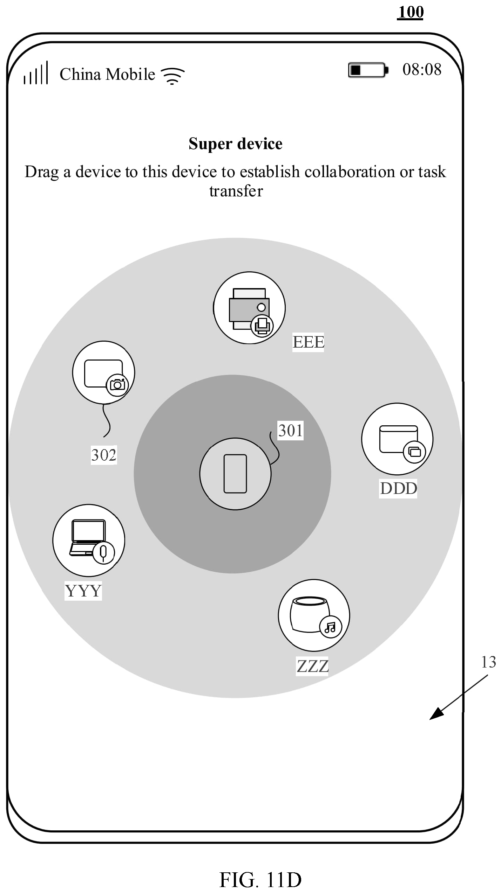

For example, the icon 302 in the collaborated state shown in FIG. 11A is attached to the icon 301 of the device. The cancellation operation 1 may include: dragging the icon 302 away from the icon 301 of the device by using a slide operation performed on the icon 302 and then releasing the icon. As shown in FIG. 11B and FIG. 11C, when detecting the cancellation operation 1, the electronic device 100 displays prompt information prompting to cancel the collaborative connection, and cancels the collaborative connection to the camera of the tablet computer. As shown in FIG. 11D, after the collaborative connection is canceled, the display state of the icon 302 is switched from the collaborated state to the uncollaborated state, and the icon 302 is popped back to the annular area. In an implementation, when detecting that the user performs the cancellation operation 1, the electronic device 100 may alternatively directly display a collaborative connection interface shown in FIG. 11D without displaying the prompt information.

For example, refer to the icon 302 in the collaborated state shown in FIG. 10F. The icon 302 is displayed in the annular area, and the cancellation operation may include touching and holding the icon 302. The cancellation operation may further include gestures such as double-tapping. This is not specifically limited in the present invention.

In some embodiments, when the collaborative connection interface 13 receives an input operation (for example, the cancellation operation 1) of canceling the collaborative connection by the user, the icon of the candidate device stops slow rotating. In a process in which the electronic device 100 cancels the collaborative connection, the electronic device 100 may further play a connection cancellation animation. When determining that the collaborative connection is canceled, the electronic device 100 may terminate the connection cancellation animation, and the icon of each candidate device resumes rotating.

Case 2: An electronic device 100 and a candidate device 200 support collaborative connections of a plurality of capabilities. The candidate device 200 supports at least one collaborative capability, and capability badges of one or more of the at least one capability (for example, a capability 1 and a capability 2) are additionally displayed on an icon of the candidate device 200. When the capability badges corresponding to the capability 1 and the capability 2 are additionally displayed on the icon of the candidate device 200, the icon of the candidate device 200 is dragged to approach the icon of the electronic device 100, or the icon of the candidate device 200 is dragged to approach the icon of the electronic device 100, so that the electronic device 100 can implement collaborative connections to the capability 1 and the capability 2 of the candidate device 200.

For a collaborative connection of one capability in Case 2, refer to related descriptions of FIG. 6A to FIG. 7C and FIG. 9A to FIG. 10F. Details are not described herein again.

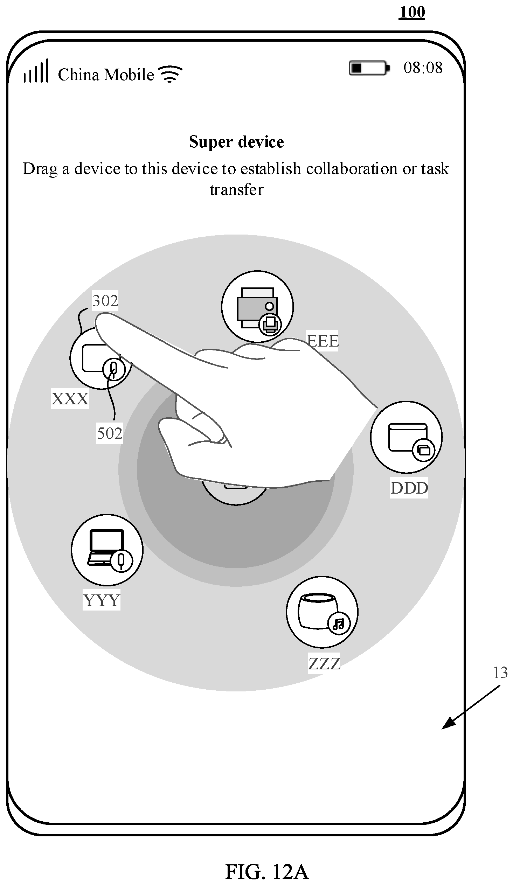

A collaborative connection interface 13 shown in FIG. 12A is used as an example. FIG. 12A to FIG. 12G show user interfaces for adding a plurality of capability badges.

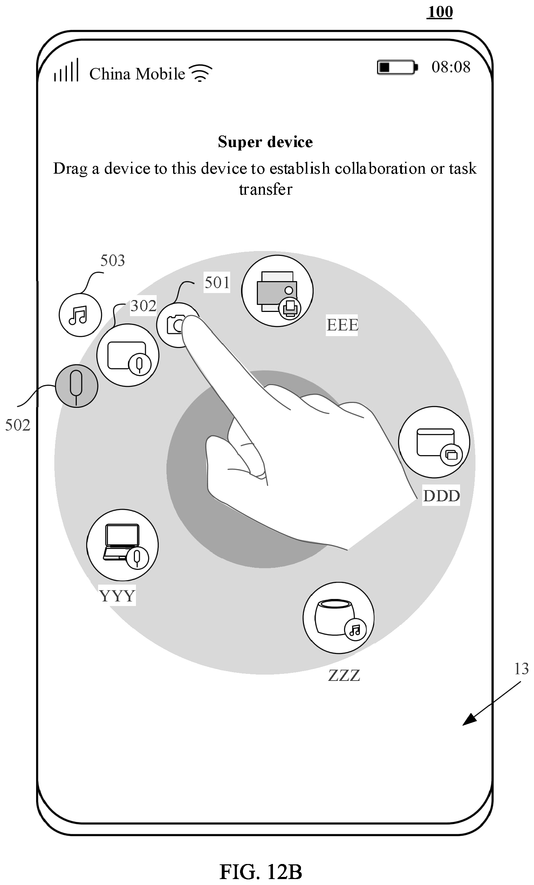

In some embodiments, the user may add capability badges corresponding to the plurality of capabilities to an icon 302 of a tablet computer. As shown in FIG. 12A and FIG. 12B, a capability badge 502 corresponding to an audio output function is currently additionally displayed on the icon 302 of the tablet computer on the collaborative connection interface 13. The icon 302 may receive an input operation (for example, a tap operation) of the user. In response to the input operation, the electronic device 100 displays, around the icon 302, capability badges corresponding to all collaborative capabilities supported by the tablet computer, for example, a capability badge 501 corresponding to a camera, the capability badge 502 corresponding to the audio input function, and a capability badge 503 corresponding to an audio output function. As shown in FIG. 12B, the capability badge 502 currently additionally displayed on the icon 302 is represented in a selected state (for example, deepened for display), and the capability badge 501 that is not currently additionally displayed on the icon 302 is represented in an unselected state (for example, not deepened for display).

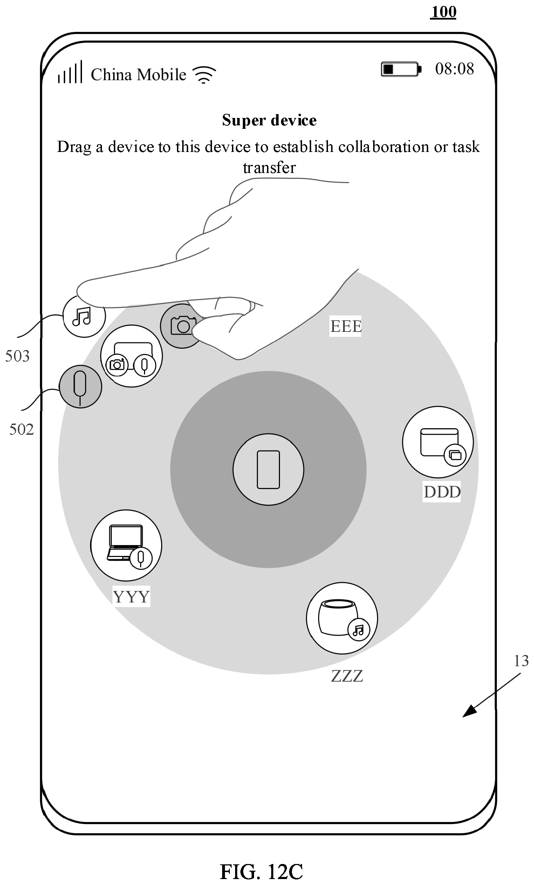

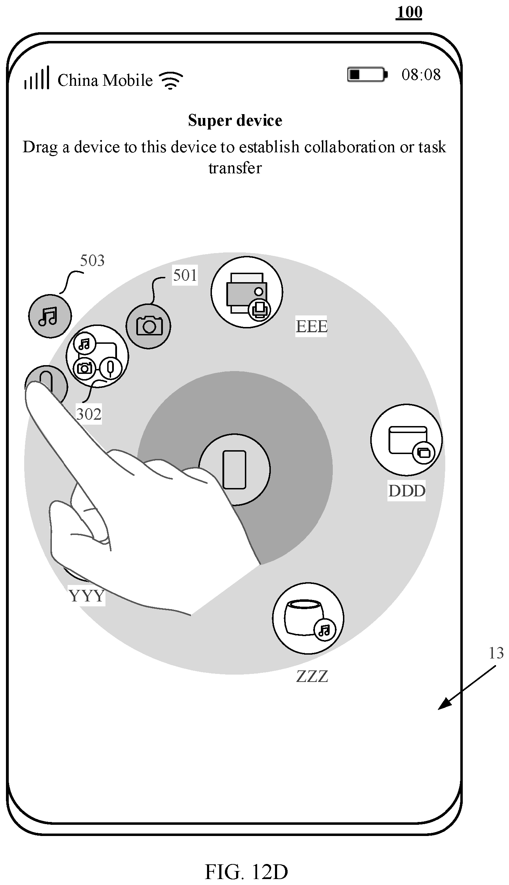

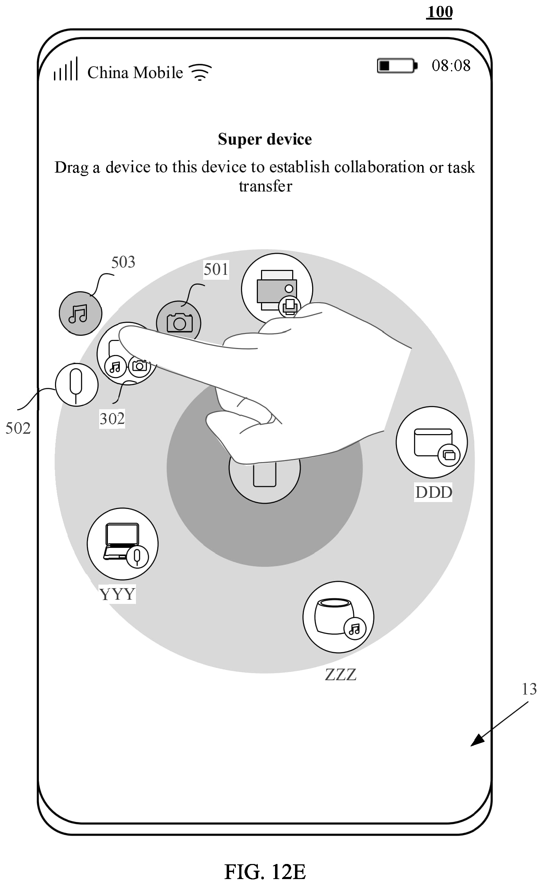

The user may switch a display state of a capability badge to a selected state or an unselected state. As shown in FIG. 12B and FIG. 12C, the user may switch a display state of the capability badge 501 to a selected state, and add the capability badge 501 as a capability badge additionally displayed on the icon 302. Similarly, as shown in FIG. 12C and FIG. 12D, the user may further switch a display state of the capability badge 503 to a selected state, and add the capability badge 503 as a capability badge additionally displayed on the icon 302. As shown in FIG. 12D and FIG. 12E, the capability badge 502 in the selected state may receive an input operation (for example, a tap operation) of the user. In response to the input operation, a display state of the capability badge 502 is switched to an unselected state, and the capability badge 502 is stopped from being additionally displayed on the icon 302.

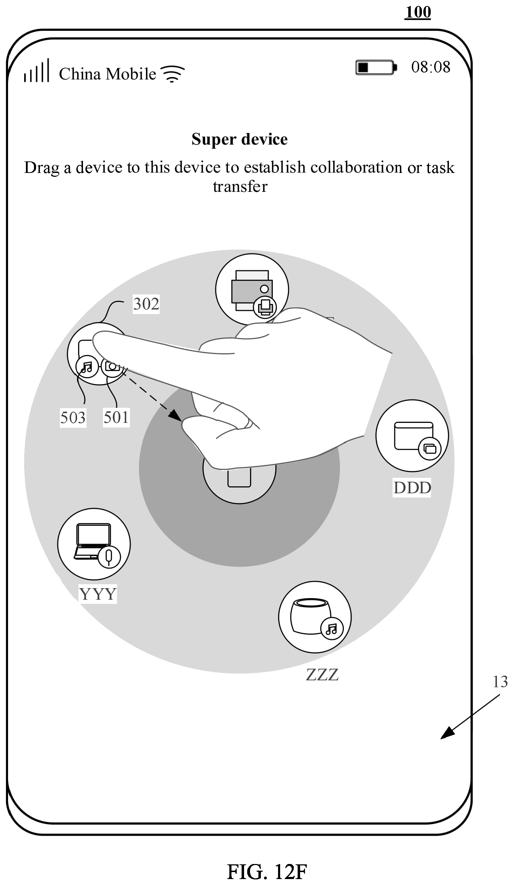

In some embodiments, as shown in FIG. 12E and FIG. 12F, after the user selects the additionally displayed capability badges (namely, the capability badge 501 and the capability badge 503), the icon 302 may receive an input operation (for example, a touch operation) of the user, and in response to the input operation, the electronic device 100 stops displaying the capability badges around the icon 302.

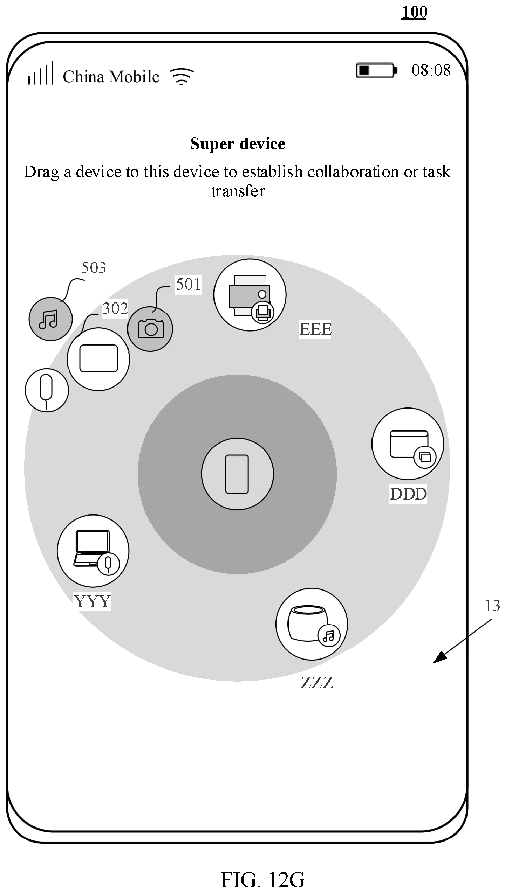

In some embodiments, in a capability badge selecting process in FIG. 12B to FIG. 12E, when the user selects a capability badge (that is, switches a display state of the capability badge to a selected state), the capability badge may not be additionally displayed on the icon 302. After the user completes selection, the electronic device 100 starts to additionally display the capability badge on the icon 302 in FIG. 12F. For example, as shown in FIG. 12G, when the user selects the capability badge 501 and the capability badge 503 that are displayed around the icon 302, the two capability badges do not need to be additionally displayed on the icon 302.

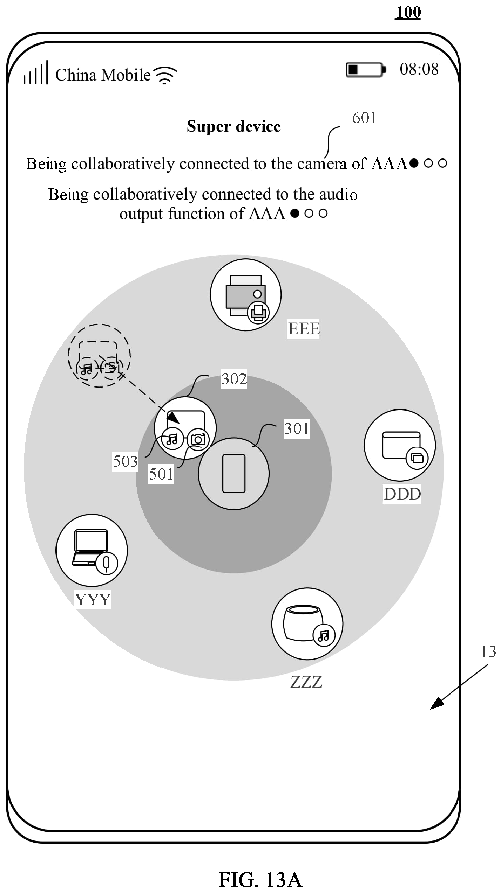

For example, FIG. 13A to FIG. 13J show user interfaces related to implementing the collaborative connections in Case 2.

As shown in FIG. 13A, the icon 302 added with the capability badge 501 and the capability badge 503 may receive a slide operation of the user, and a sliding direction of the slide operation points to an icon 301 of the electronic device 100. When detecting that the icon 302 touches an area in which the icon 301 is located, the electronic device 100 displays prompt information 601 in response to the slide operation of the user, and performs the collaborative connections to the camera and the audio output function of the tablet computer. The prompt information 601 indicates that the device is being collaboratively connected to the camera and the audio output function of the tablet computer.

In some embodiments, that the electronic device 100 performs the collaborative connections to the camera and the audio output function of the tablet computer may include: The electronic device 100 sends a collaborative connection request for the camera and the audio output function to the tablet computer.

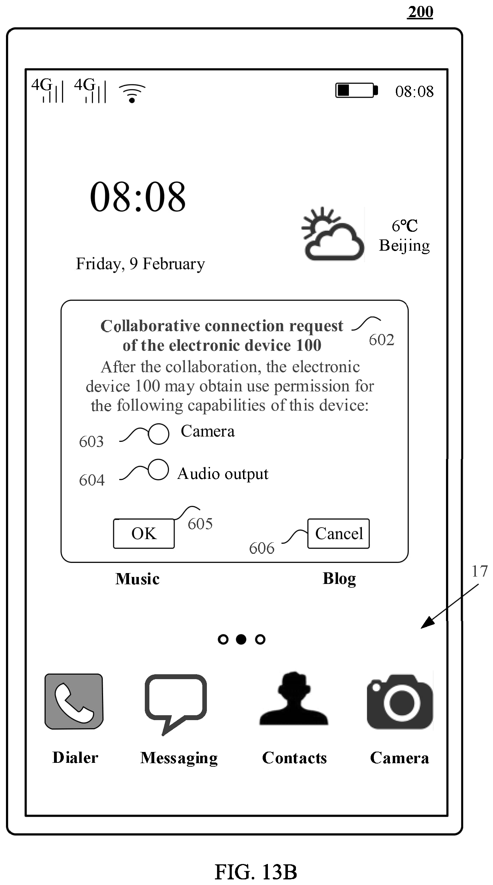

In some embodiments, as shown in FIG. 13B, after receiving the collaborative connection request sent by the electronic device 100, the tablet computer displays a selection box, where the selection box includes prompt information 602, a selection control 603 of the camera, a selection control 604 of the audio output function, an OK control 605, and a cancel control 606. The prompt information 602 indicates that the collaborative connection request for the camera and the audio output function of the electronic device 100 is received.

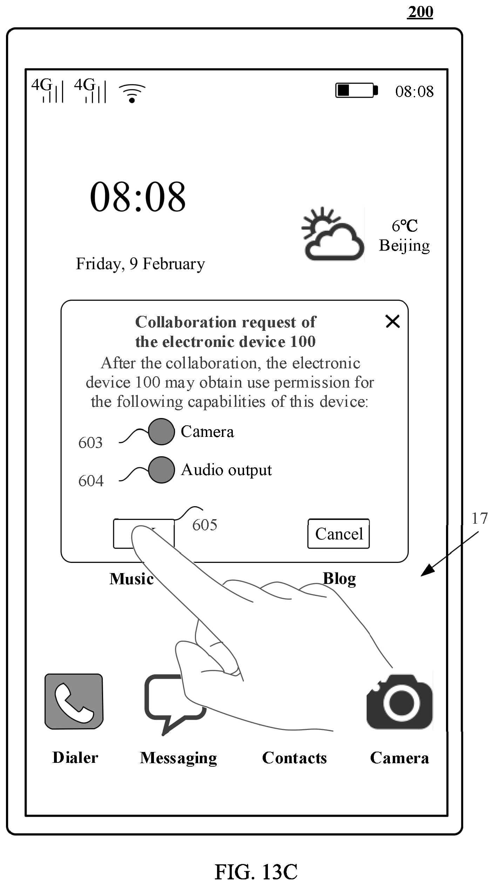

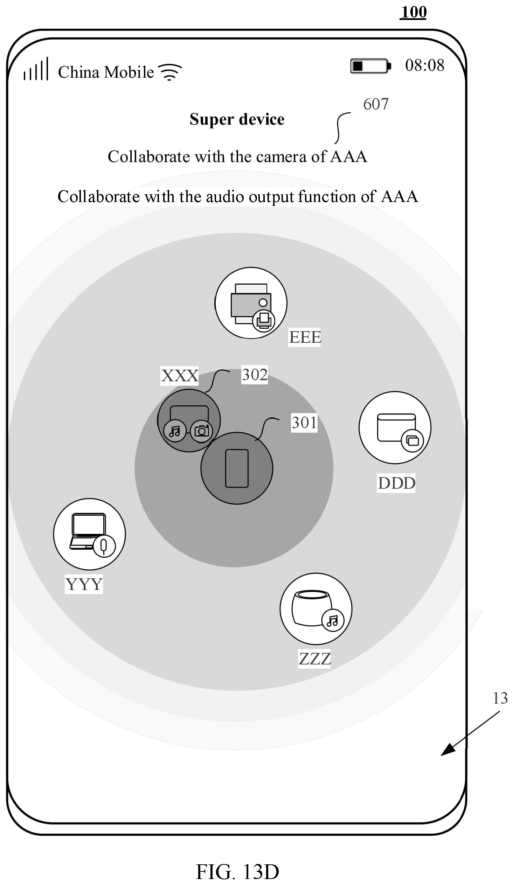

As shown in FIG. 13C, after the selection control 603 of the camera and the selection control 604 of the audio output function receive a selection operation (for example, a tap operation) of the user, the OK control 605 may receive an input operation of the user. In response to the input operation, the tablet computer sends a collaborative connection response 3 to the electronic device 100. The collaborative connection response 3 indicates that the collaborative connections to the camera and the audio output function are agreed. After receiving the collaborative connection response 3 sent by the tablet computer, the electronic device 100 displays prompt information 607 shown in FIG. 13D, and converts a display state of the icon of the tablet computer from an uncollaborated state to a collaborated state. The capability badges and the prompt information 607 that are additionally displayed on the icon 412 in the collaborated state indicate that the device establishes a collaborative connection to the camera of the tablet computer and establishes a collaborative connection to the audio output function of the tablet computer.

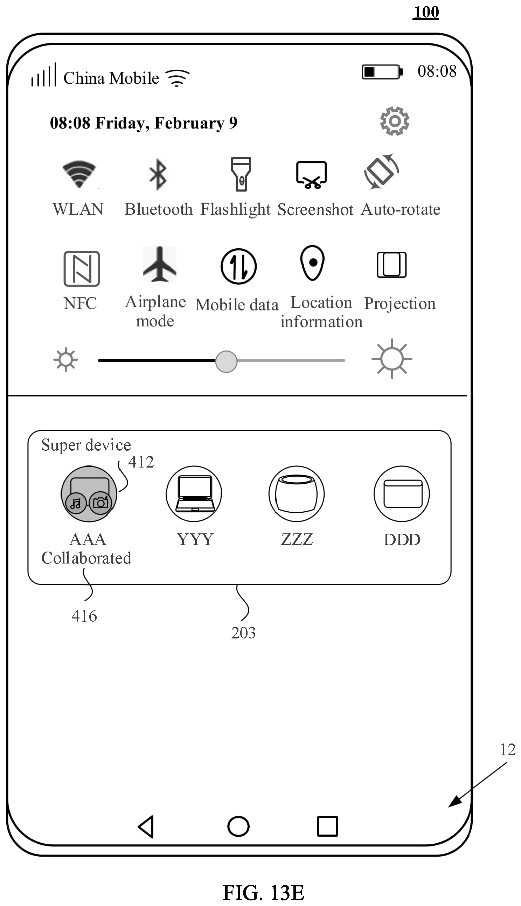

In some embodiments, refer to the control center interface 12 shown in FIG. 13E. After the collaborative connections to the camera and the audio output function of the tablet computer are established, the electronic device 100 displays an icon of an available collaborated device (for example, an icon 412 of the tablet computer) in a collaborative connection card 1, and the capability badges corresponding to the camera and the audio output function are additionally displayed on the icon 412 of the tablet computer. The capability badges additionally displayed on the icon 412 indicate that the collaborative connections to the camera and the audio output function of the tablet computer are established.

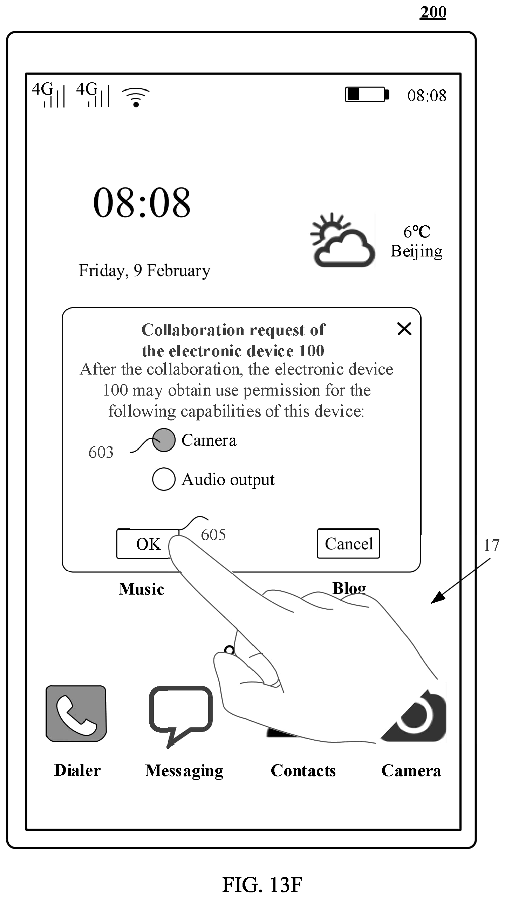

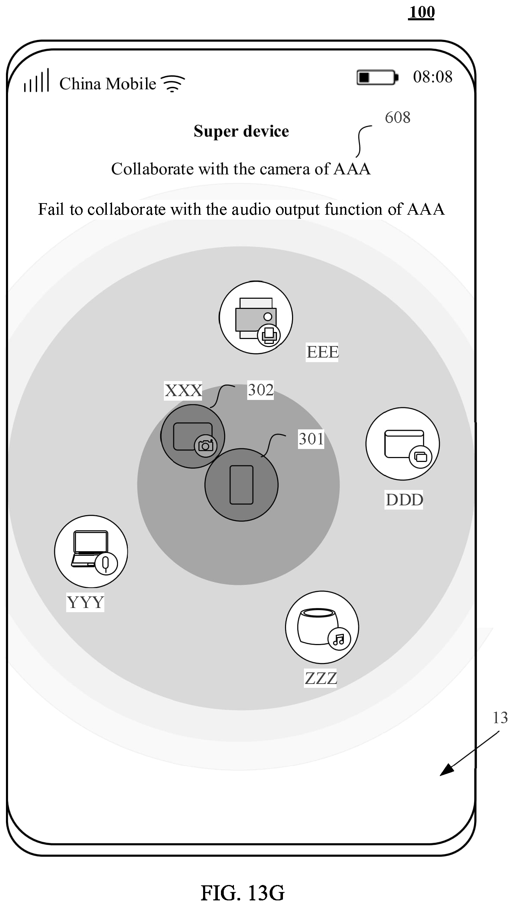

In some embodiments, as shown in FIG. 13F, after the selection control 603 of the camera receives a selection operation (for example, a tap operation) of the user, the OK control 605 may receive an input operation of the user. In response to the input operation, the tablet computer sends a collaborative connection response 4 to the electronic device 100. The collaborative connection response 4 indicates that the collaborative connection of the camera is agreed and the collaborative connection of the audio output function is rejected. After receiving the collaborative connection response 4, the electronic device 100 displays prompt information 608 shown in FIG. 13G, converts the display state of the icon 302 of the tablet computer from the uncollaborated state to the collaborated state, and stops additional displaying of the capability badge of the audio output function on the icon 302. The prompt information 607 indicates that the collaborative connection between the device and the camera of the tablet computer is established, and the collaborative connection between the device and the audio output function of the tablet computer fails.

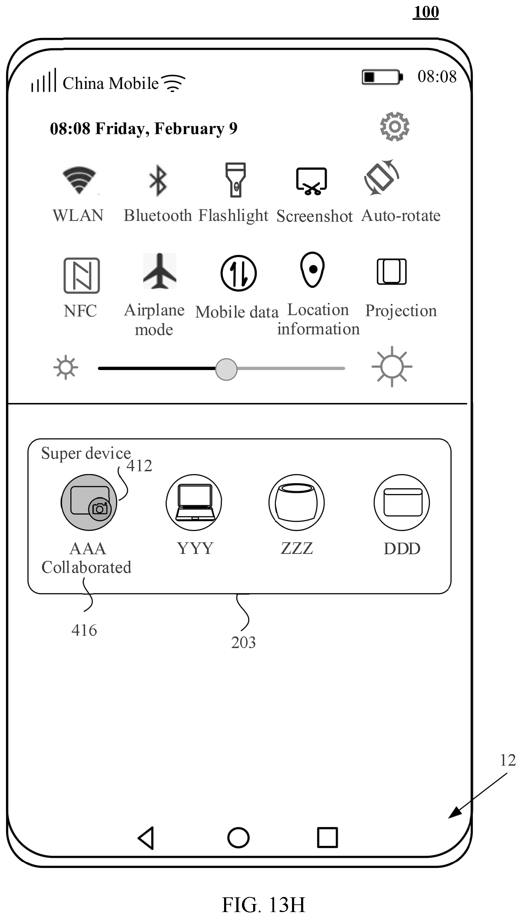

Compared with that in the collaborative connection card 1 shown in FIG. 13E, after the collaborative connection of the camera succeeds, and the collaborative connection of the audio output function fails, in the collaborative connection card 1 shown in FIG. 13H, only the capability badge corresponding to the camera is additionally displayed on the icon 412 of the collaborated tablet computer.

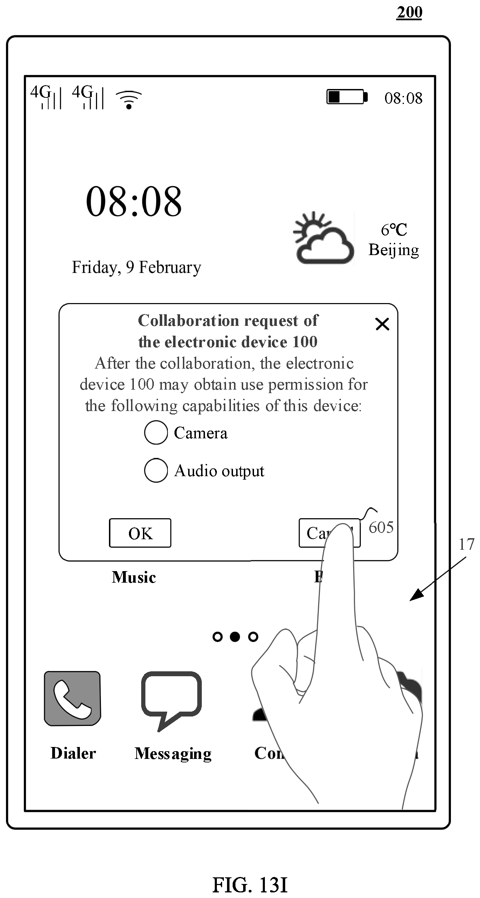

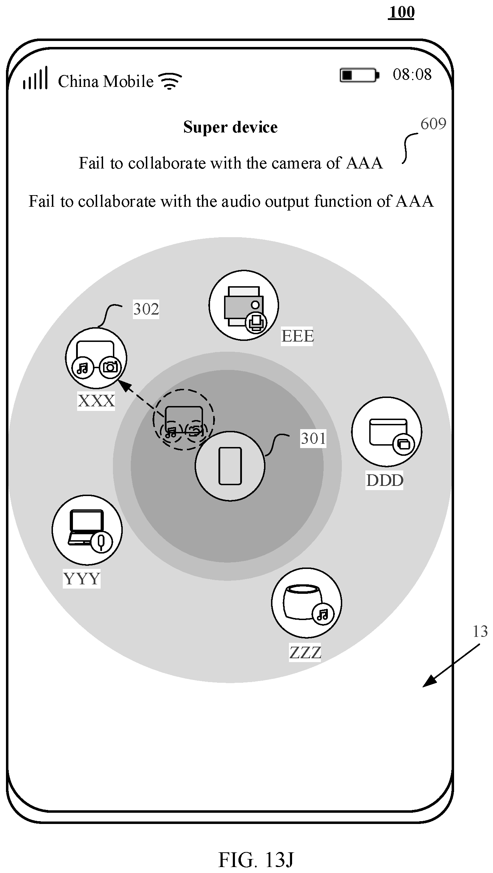

As shown in FIG. 13I, the cancel control 404 may receive an input operation of the user, and in response to the input operation, the tablet computer sends, to the electronic device 100, a collaborative connection response 5 for rejecting the collaborative connections. After receiving the collaborative connection response 5 sent by the tablet computer, the electronic device 100 displays prompt information 609 shown in FIG. 13J, and pops the icon 301 of the tablet computer back to the annular area in which the candidate devices are located. The prompt information 609 indicates that the device fails to be collaboratively connected to the camera and the audio output function of the tablet computer.

In some embodiments, after the electronic device 100 establishes the collaborative connection to the at least one capability of the candidate device 200 (for example, the tablet computer), the user may further select another capability of the candidate device to perform a collaborative connection.

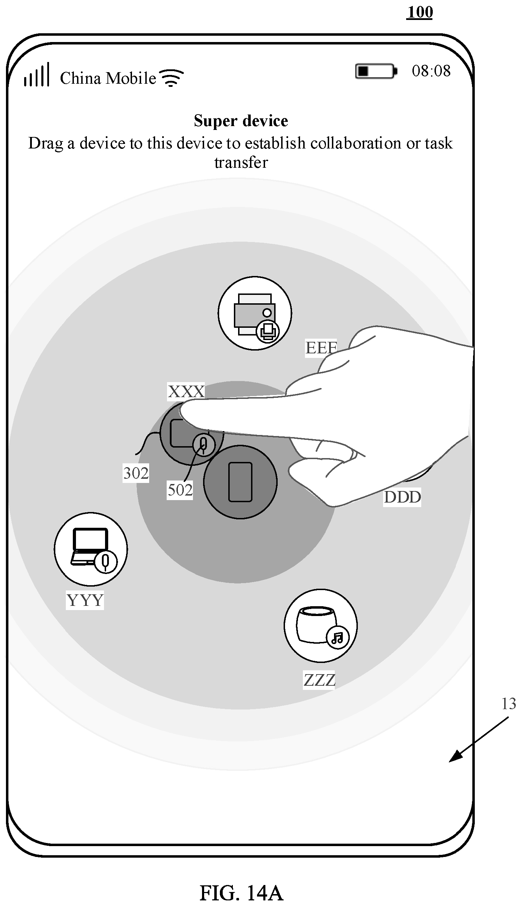

For example, FIG. 14A to FIG. 14E show related user interfaces for continuing to perform a collaborative connection with the collaborated tablet computer.

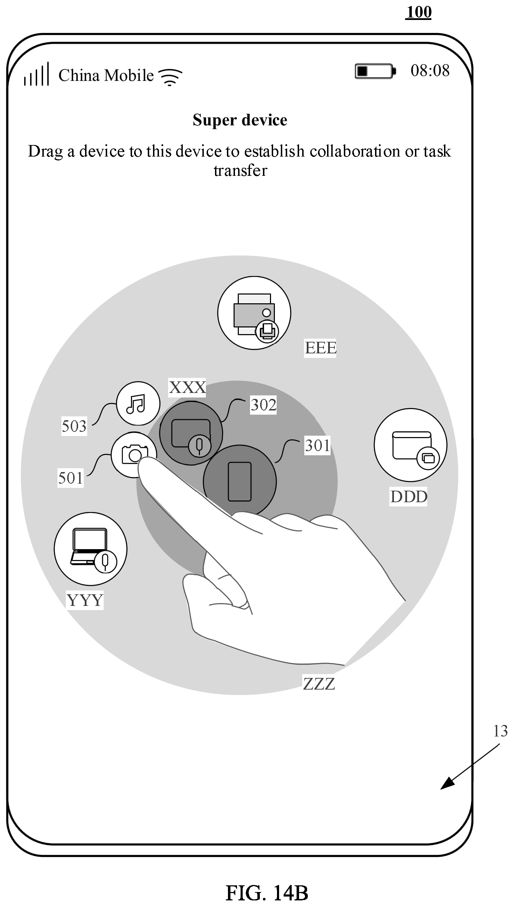

As shown in FIG. 14A, the electronic device 100 currently establishes the collaborative connection to the audio input function of the tablet computer, and the capability badge 502 corresponding to the audio input function is additionally displayed on the icon 302 of the tablet computer in the collaborated state. As shown in FIG. 14A and FIG. 14B, the icon 302 may receive an input operation (for example, a tap operation) of the user. In response to the input operation, the electronic device 100 displays, around the icon 302, the capability badges corresponding to the collaborative capabilities supported by the tablet computer, for example, the capability badge 502 corresponding to the audio output function and the capability badge 501 corresponding to the camera.

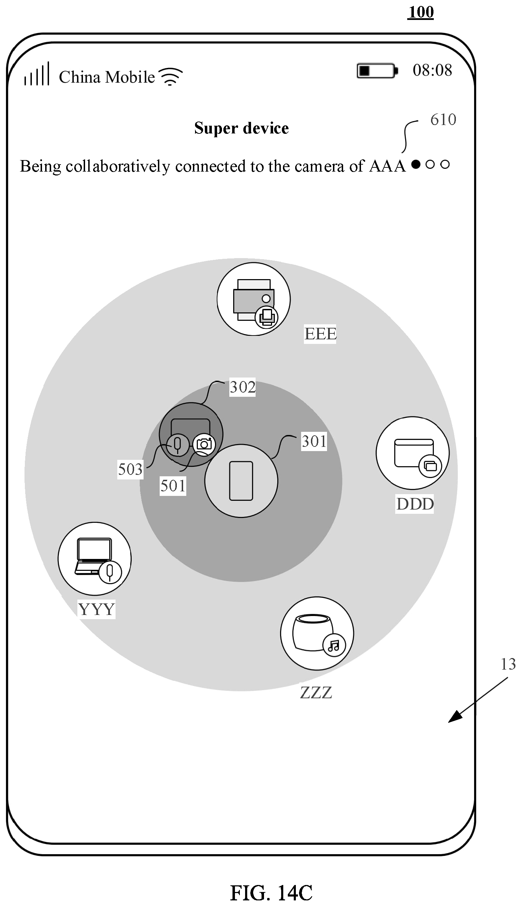

As shown in FIG. 14B and FIG. 14C, the capability badge 501 is used as an example. The capability badge 501 may receive an input operation (for example, a tap operation) of the user. In response to the input operation, the electronic device 100 stops displaying the capability badges around the icon 302, displays prompt information 610 indicating that a collaborative connection is being performed, and performs a collaborative connection to the camera of the tablet computer. In some embodiments, as shown in FIG. 14C, in response to the input operation, the electronic device 100 further additionally displays the capability badge 501 of the camera on the icon 302.

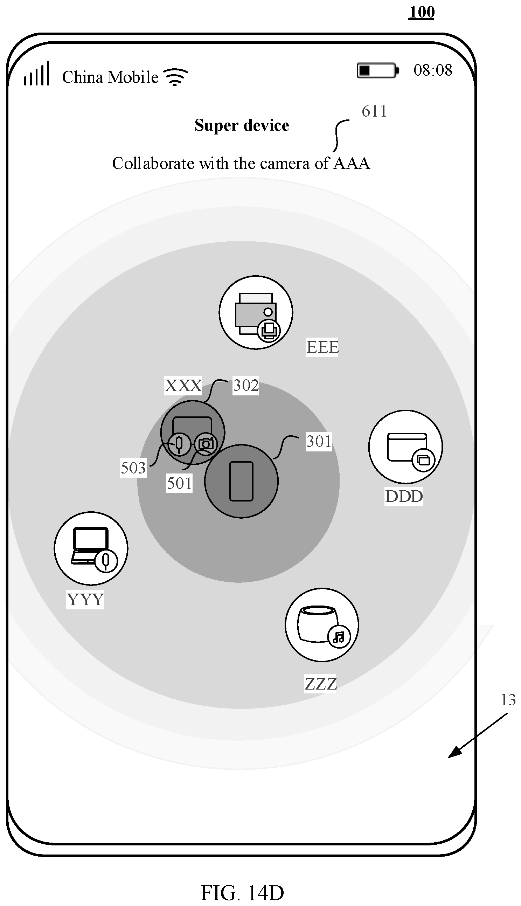

As shown in FIG. 14D, after determining that the collaborative connection succeeds, the electronic device 100 displays prompt information 611 indicating that the collaborative connection succeeds. In some embodiments, as shown in FIG. 14C, before the collaborative connection for the camera succeeds, the capability badge 501 of the camera that is additionally displayed on the icon 302 is presented in an uncollaborated state (for example, not deepened for display). As shown in FIG. 14D, after determining that the collaborative connection of the camera succeeds, the electronic device 100 further switches the capability badge 501 of the camera to the collaborated state (for example, deepened for display).

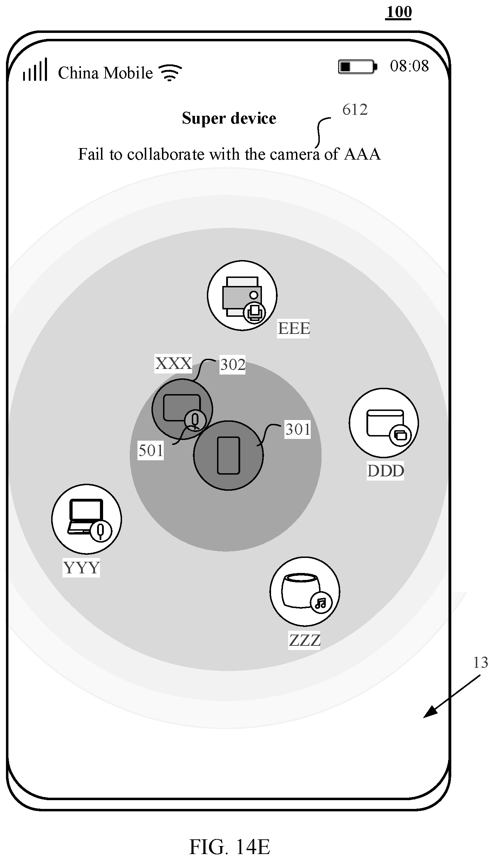

As shown in FIG. 14E, after determining that the collaborative connection of the camera fails, the electronic device 100 displays prompt information 612 indicating that the collaborative connection fails, and stops additional displaying of the capability badge 501 of the camera on the icon 302 in the collaborated state.

In some embodiments, when a plurality of capability badges are additionally displayed on the icon (for example, the icon 302 of the tablet computer) of the candidate device 200 in the annular area, the icon 301 of the device may alternatively be dragged to an area in which the icon of the candidate device 200 is located, to implement collaborative connections of capabilities corresponding to the plurality of capability badges. For details, refer to related descriptions of FIG. 10A to FIG. 10F. Details are not described herein again.

In this embodiment of this application, after the electronic device 100 establishes the collaborative connections to the plurality of capabilities (for example, the capability 1 and the capability 2) of the candidate device 200, the user may cancel the collaborative connections to the plurality of capabilities or a collaborative connection to one of the plurality of capabilities of the candidate device 200. The following uses the tablet computer as an example for description.

In some embodiments, as shown in FIG. 14D, the capability badges of the camera and the audio output function are additionally displayed on the icon 302 of the tablet computer that is in the collaborated state. The icon 302 of the tablet computer in the collaborated state may receive a cancellation operation 1 of the user. In response to the cancellation operation 1, the electronic device 100 may cancel the collaborative connections of all the collaborated capabilities (namely, the camera and the audio output function) of the tablet computer, and switch the display state of the icon 302 to the uncollaborated state. For the cancellation operation 1, refer to related descriptions in Case 1. Details are not described herein again.

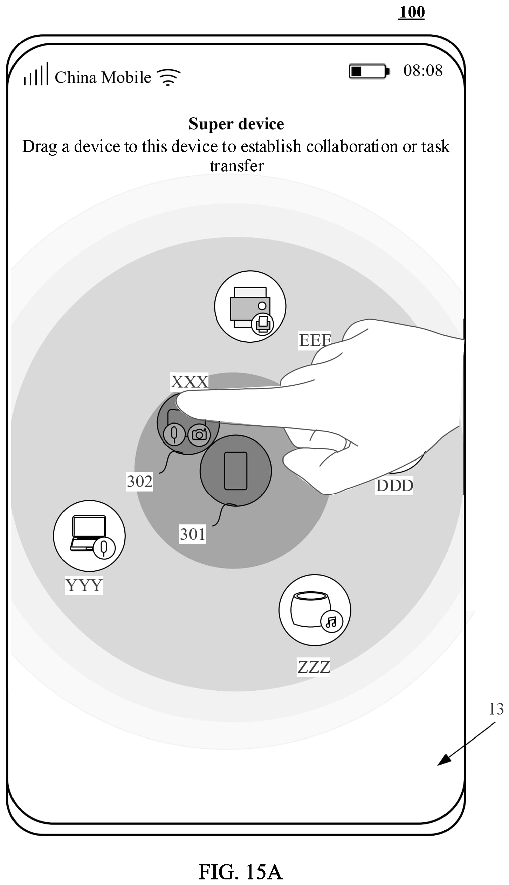

In some embodiments, a plurality of capability badges are additionally displayed on the icon 302 of the tablet computer that is in the collaborated state, and the user may separately cancel a collaborative connection of one of the plurality of collaborated capabilities. The collaborated state shown in FIG. 15A is used as an example. FIG. 15A to FIG. 15D show user interfaces related to separately canceling the collaborative connection of the camera of the tablet computer.

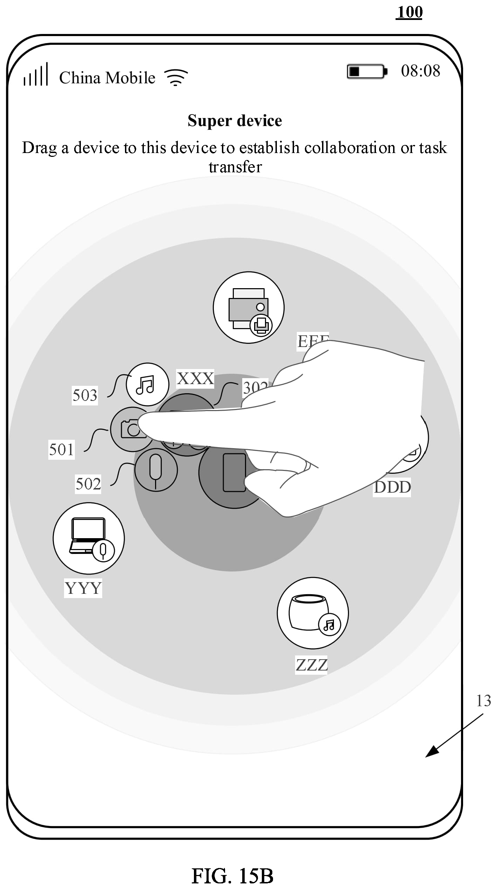

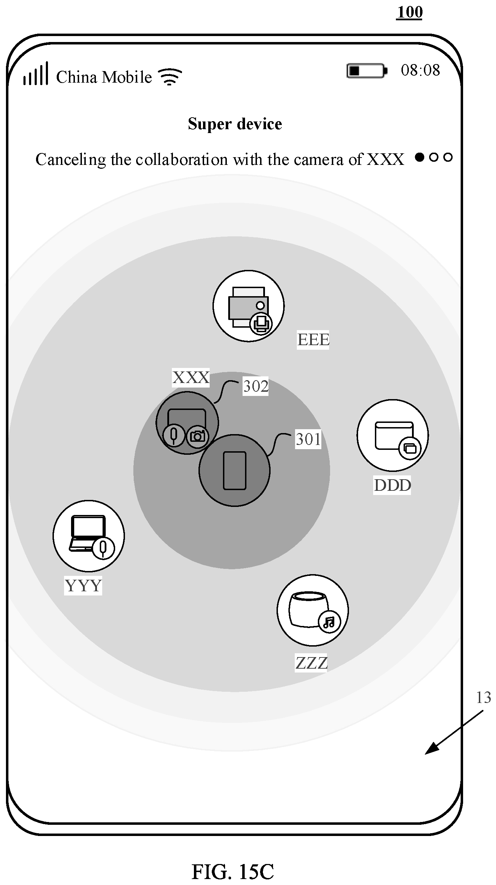

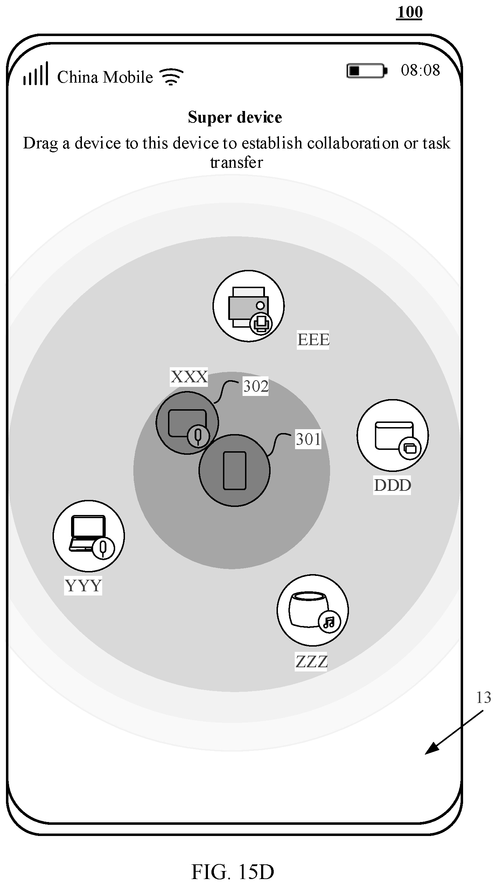

As shown in FIG. 15A, the icon 302 of the tablet computer in the collaborated state may further receive an input operation (for example, a tap operation) of the user. As shown in FIG. 15B, in response to the input operation, the capability badges corresponding to all the collaborative capabilities of the tablet computer are displayed, where the capability badges corresponding to all the collaborative capabilities include the capability badges corresponding to the collaborated capabilities (for example, the capability badge 501 of the camera and the capability badge 502 of the audio input function) and the capability badge corresponding to the uncollaborated capability (for example, the capability badge 503 of the audio output function). The capability badge (for example, the capability badge 501) corresponding to the collaborated capability is presented in a selected state, and the capability badge (for example, the capability badge 503) corresponding to the uncollaborated capability is presented in an unselected state. As shown in FIG. 15C, the capability badge 501 may receive an input operation (for example, a tap operation) of the user. In response to the input operation, the electronic device 100 may cancel the collaborative connection to the camera of the tablet computer, and display prompt information indicating that the collaborative connection is being cancelled. As shown in FIG. 15D, after the collaborative connection to the camera of the tablet computer is canceled, the capability badge 501 of the camera is stopped from being additionally displayed on the icon of the tablet computer that is in the collaborated state.

In embodiments of this application, in Case 1 and Case 2, the electronic device 100 may support establishing collaborative connections to a plurality of devices at the same time.

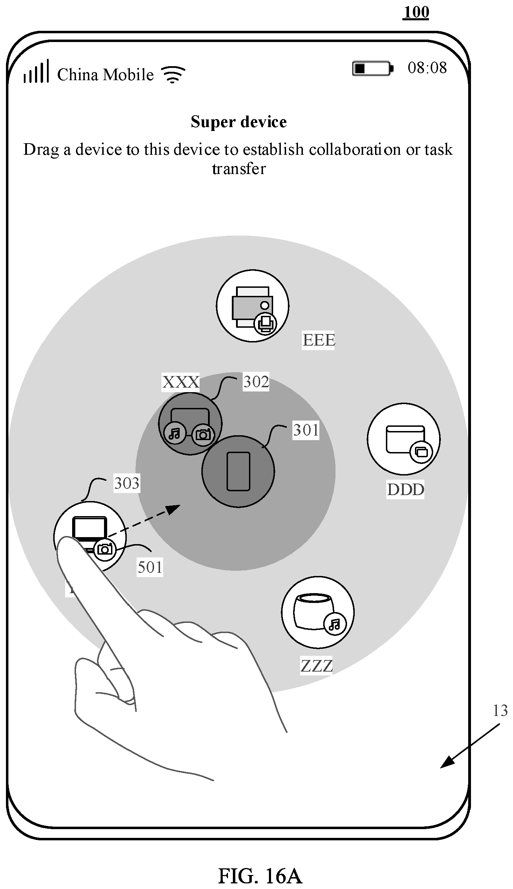

For example, FIG. 16A to FIG. 16D show user interfaces related to establishing a collaborative connection between the electronic device 100 and each of two devices.

In some embodiments, the electronic device 100 may establish a collaborative connection to a same capability of a plurality of candidate devices at the same time.

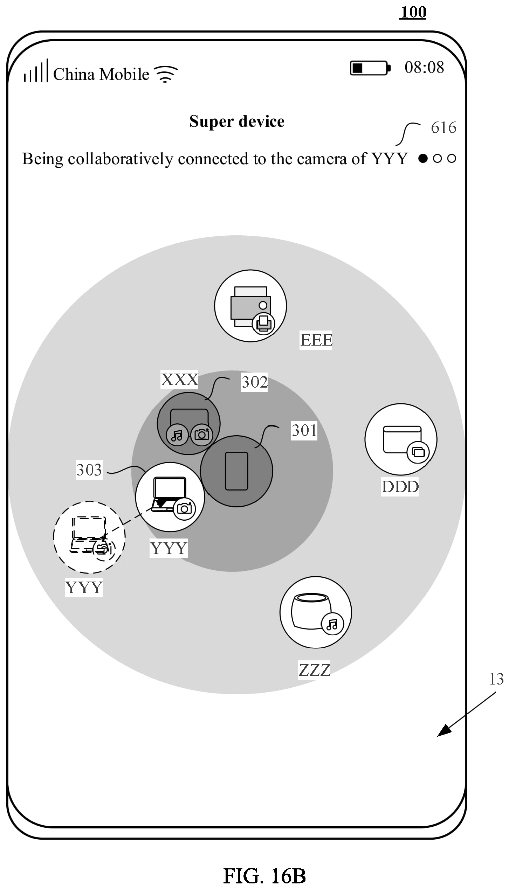

As shown in FIG. 16A and FIG. 16B, a collaborative connection is established between the electronic device 100 and each of the audio output function and the camera of the tablet computer. The capability badge 501 corresponding to the camera is additionally displayed on the icon 303 of the notebook computer. The user may drag the icon 303 to the area in which the icon 301 of the electronic device 100 is located by using a slide operation. When detecting that the icon 302 is dragged to the area in which the icon 301 is located, in response to the slide operation, the electronic device 100 displays prompt information 616 indicating that a collaborative connection is being performed, and performs a collaborative connection to a camera of the notebook computer.

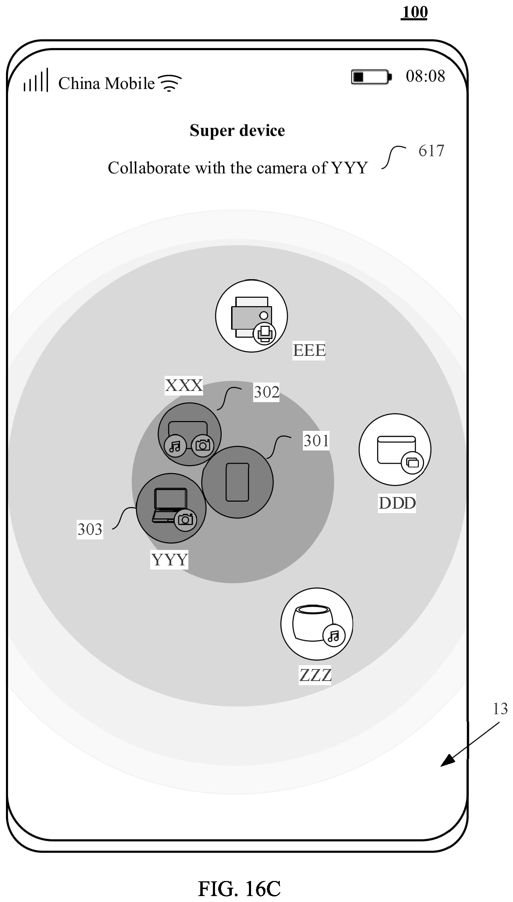

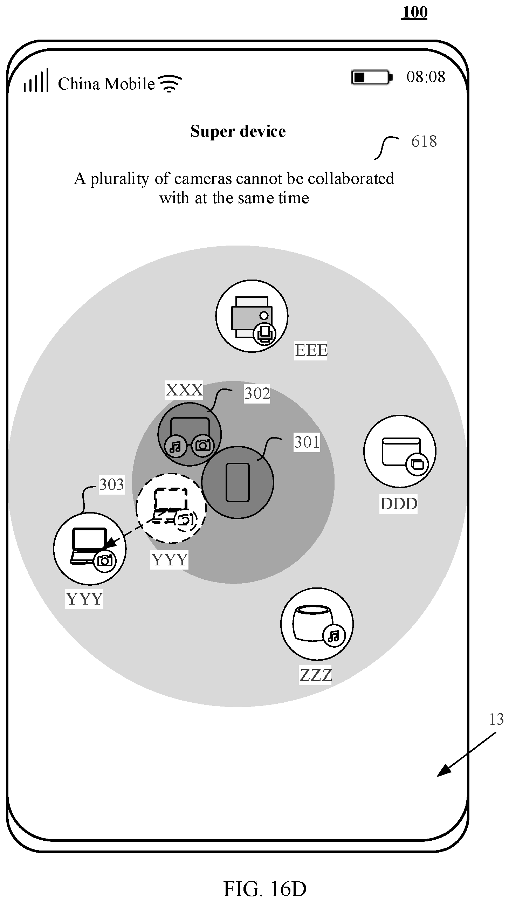

As shown in FIG. 16C, when it is determined that the collaborative connection to the camera of the notebook computer succeeds, prompt information 617 indicating that the collaborative connection succeeds is displayed, and a display state of the icon 303 of the notebook computer is changed from an uncollaborated state to a collaborated state. As shown in FIG. 16D, when it is determined that the collaborative connection to the camera of the notebook computer fails, prompt information 618 indicating that the collaborative connection fails is displayed, and the icon 303 of the notebook computer is popped back to the annular area in which the candidate devices are located.

For details, refer to related descriptions of FIG. 6A to FIG. 7C. Details are not described herein again.

In some embodiments, for a same capability, the electronic device 100 establishes a collaborative connection to a maximum of one device. A reason for a collaborative connection failure in FIG. 16D may be that cameras of the plurality of devices cannot be collaboratively connected at the same time. The electronic device 100 may indicate, by using prompt information 618 in FIG. 16D, that the cameras of the plurality of devices cannot be collaboratively connected at the same time.

Case 3: An electronic device 100 and a candidate device 200 support a collaborative connection of a maximum of one capability. The candidate device 200 supports at least one collaborative capability. A capability badge of any one of the at least one capability (for example, a capability 1) may be additionally displayed on an icon of the electronic device 100. In some embodiments, when the capability badge corresponding to the capability 1 is additionally displayed on the icon of the electronic device 100, an icon of the candidate device 200 is dragged to approach the icon of the electronic device 100, or the icon of the electronic device 100 is dragged to approach an icon of the candidate device 200, so that the electronic device 100 can be collaboratively connected to the capability 1 of the candidate device 200.

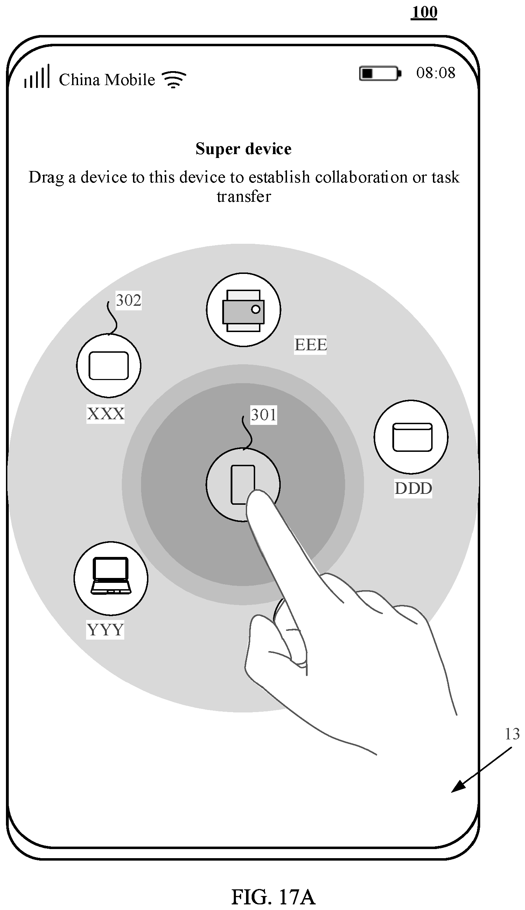

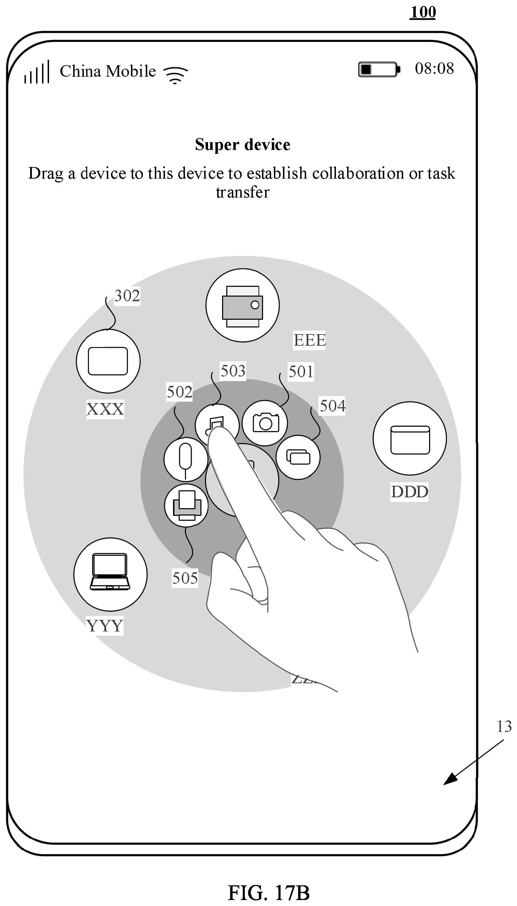

A collaborative connection interface 13 shown in FIG. 17A is used as an example. FIG. 17A and FIG. 17B show user interfaces related to adding one capability badge to an icon 301 of the electronic device 100.

As shown in FIG. 17A and FIG. 17B, the icon 301 of the electronic device 100 may receive an input operation (for example, a tap operation) of a user, and in response to the input operation, the electronic device 100 displays at least one capability badge around the icon 301. In an implementation, the at least one capability badge includes collaborative capabilities supported by all candidate devices displayed on the collaborative connection interface 13. As shown in FIG. 17B, the at least one capability badge includes a capability badge 501 of a camera, a capability badge 503 of an audio output function, a capability badge 502 of an audio input function, a capability badge 504 of a projection, and a capability badge 505 of a printing function.

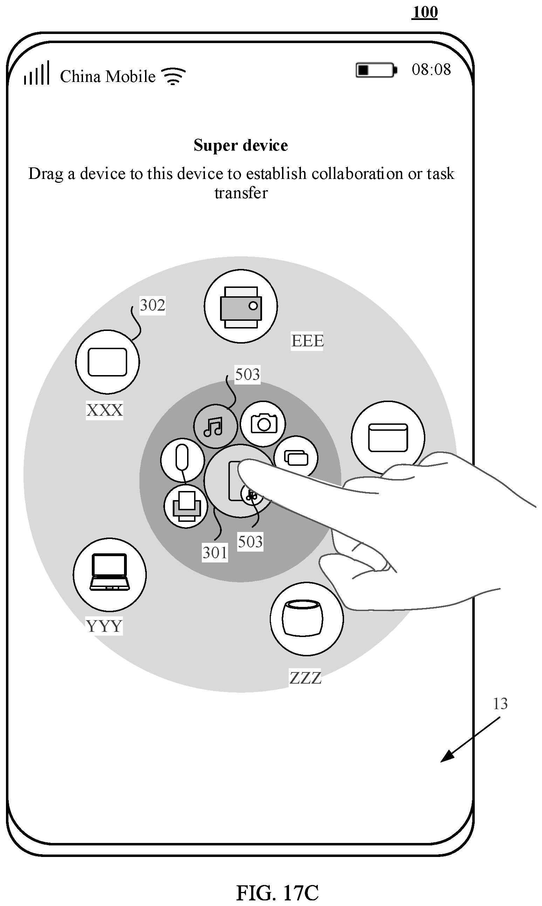

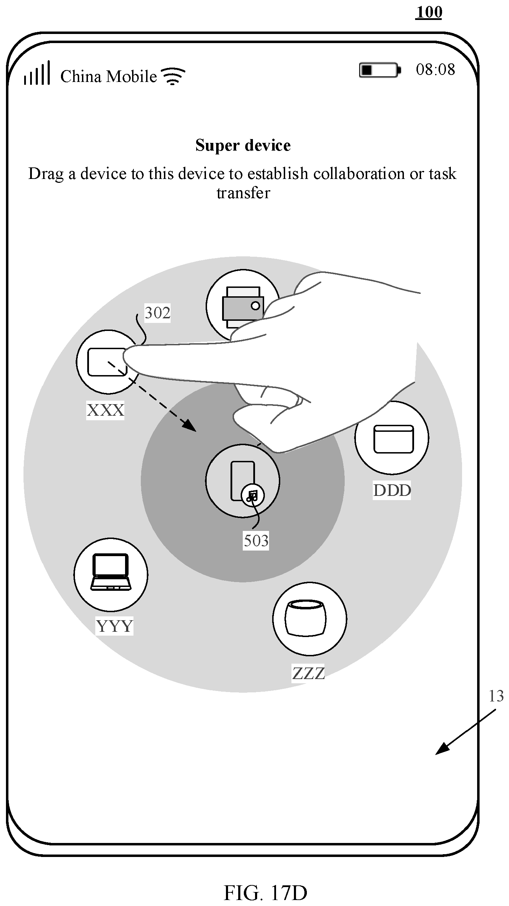

In some embodiments, as shown in FIG. 17B, the capability badge 503 corresponding to the audio output function may receive an input operation (for example, a tap operation) of the user. As shown in FIG. 17C, in response to the input operation, the electronic device 100 switches a display state of the capability badge 503 to a selected state, and additionally displays the capability badge 503 on the icon 301. The icon 301 shown in FIG. 17C may receive an input operation of the user. As shown in FIG. 17D, in response to the input operation, the electronic device 100 stops displaying the capability badge around the icon 301. In an implementation, in response to an input operation performed on the capability badge 503 shown in FIG. 17B, the electronic device 100 may directly display a collaborative connection interface 13 shown in FIG. 17D.

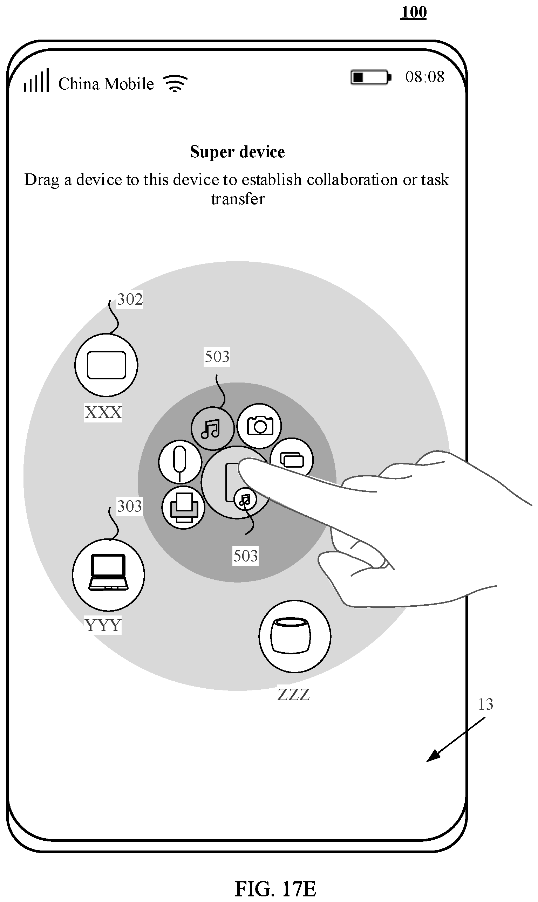

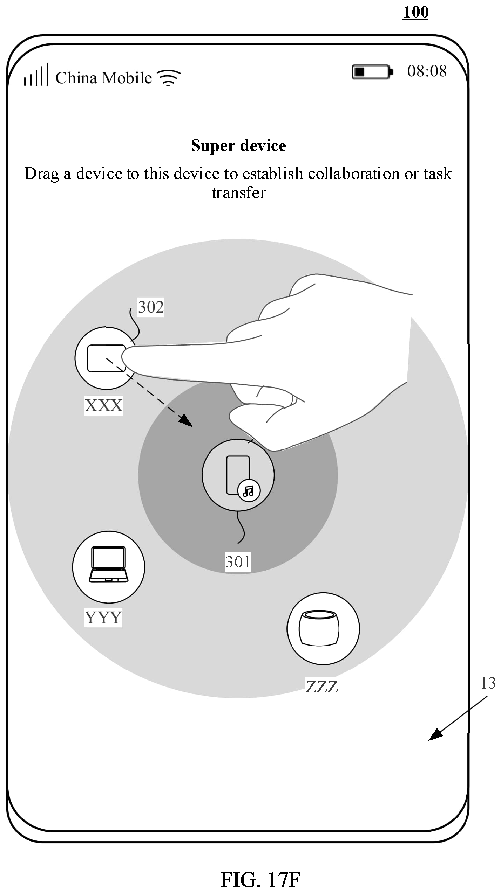

In some embodiments, after the user taps the capability badge 503 shown in FIG. 17B, the electronic device 100 may display, in an annular area, only an icon of a candidate device that can collaborate a capability corresponding to the capability badge. For example, the printer and the projector do not support the collaborative audio output function. As shown in FIG. 17E, different from that on the collaborative connection interface 13 shown in FIG. 17C, in response to an input operation performed on the capability badge 503, the electronic device 100 stops displaying an icon 306 of a printer and an icon 305 of a projector in the annular area. As shown in FIG. 17E and FIG. 17F, the icon 301 may receive an input operation of the user, and in response to the input operation, the electronic device 100 stops displaying the capability badge around the icon 301. In an implementation, in response to an input operation performed on the capability badge 503 shown in FIG. 17B, the electronic device 100 may alternatively directly display a collaborative connection interface 13 shown in FIG. 17F.

For how to switch the capability badge that is additionally displayed by the electronic device 100 in Case 3, refer to the implementation of switching the capability badge in FIG. 8A to FIG. 8G. Details are not described herein again.

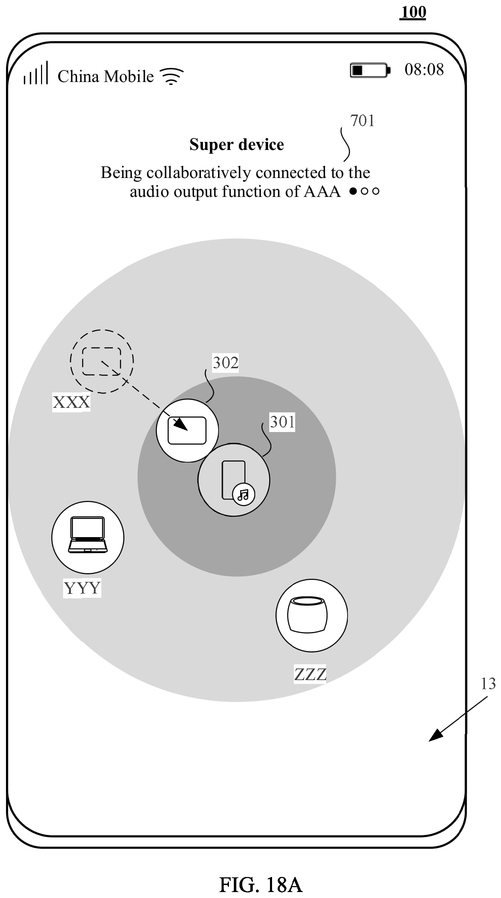

A collaborative connection interface 13 shown in FIG. 18A is used as an example. FIG. 18A to FIG. 18C show user interfaces related to the collaborative connection of the one capability in Case 3.

As shown in FIG. 18A, after the user adds the capability badge 503 to the icon 301 of the device, the user may drag the icon 302 to an area in which the icon 301 is located by using a slide operation. When detecting that the icon 302 touches the icon 301 or a preset area 1 in which the icon 301 is located, in response to the slide operation, the electronic device 100 displays prompt information 701 indicating that a collaborative connection is being performed, and performs a collaborative connection to an audio output function of the tablet computer.

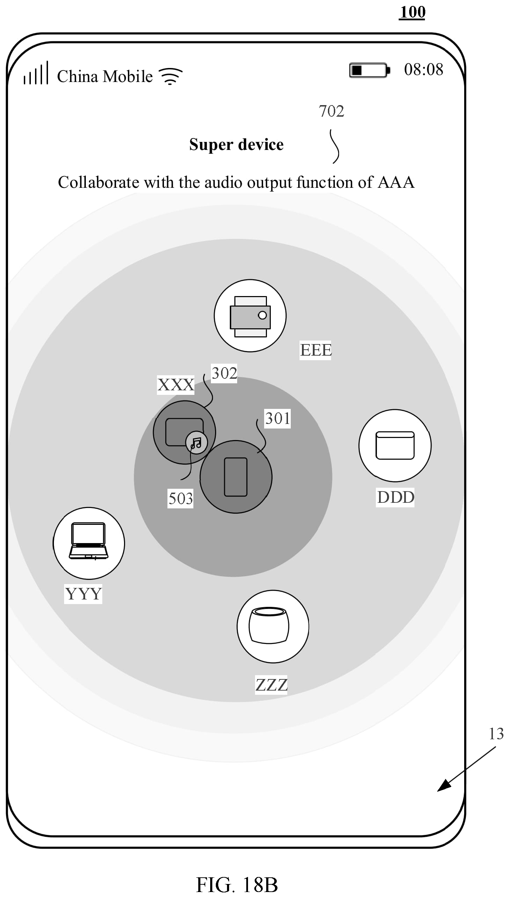

As shown in FIG. 18B, when determining that the collaborative connection of the audio output function succeeds, the electronic device 100 displays prompt information 702 indicating that the collaborative connection succeeds, switches the icon 302 from an uncollaborated state to a collaborated state, and additionally displays the capability badge 503 of the audio output function on the icon 302. In an implementation, as shown in FIG. 18B, after the collaborative connection succeeds, the electronic device 100 stops additional displaying of the capability badge 503 on the icon 301 of the device, and displays, in an annular area of the candidate devices, all detected uncollaborated candidate devices.

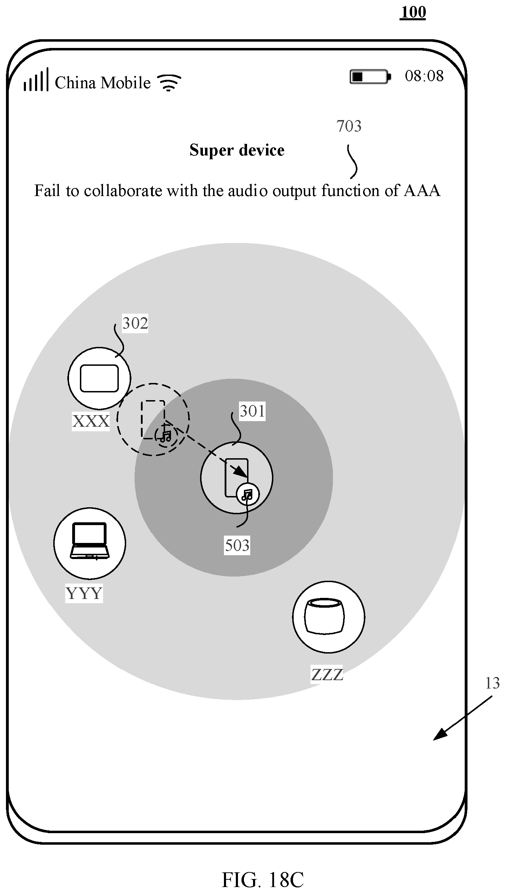

As shown in FIG. 18C, when determining that the collaborative connection of the audio output function fails, the electronic device 100 displays prompt information 703 indicating that the collaborative connection fails, and pops the icon 302 back to the annular area in which the candidate devices are located.

In addition, for how to cancel the collaborative connection of the collaborated capability in Case 3, refer to related descriptions in Case 1. Details are not described herein again. It should be noted that, the camera of the tablet computer is used as an example, and if a collaborative connection to the camera of the tablet computer is canceled in Case 3, after the collaborative connection is canceled, the capability badge of the camera is no longer additionally displayed on the icon 302 of the tablet computer.

In some embodiments, the icon 301 of the device may alternatively be dragged to an area in which the icon 302 of the tablet computer is located, to implement a collaborative connection of a capability corresponding to a capability badge additionally displayed on the icon 302.

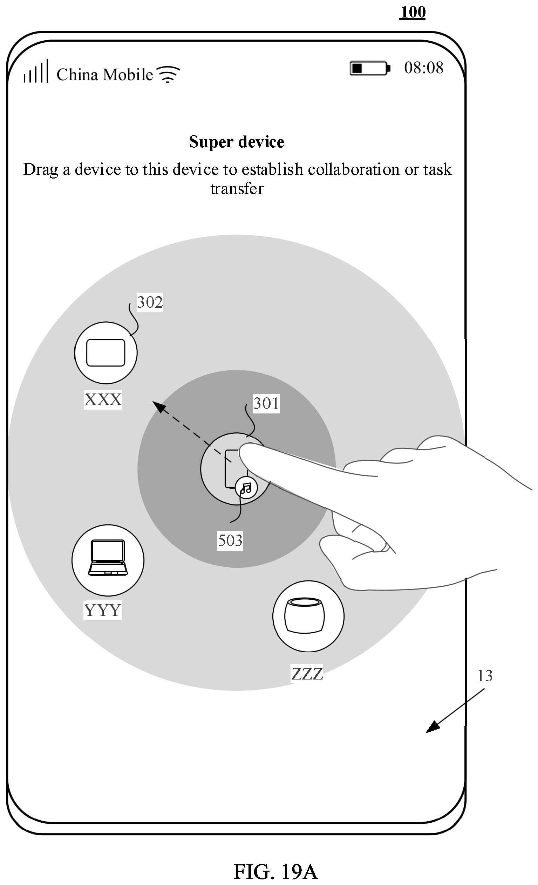

A collaborative connection interface 13 shown in FIG. 19A is used as an example. FIG. 19A to FIG. 19E show user interfaces related to the collaborative connection in this embodiment.

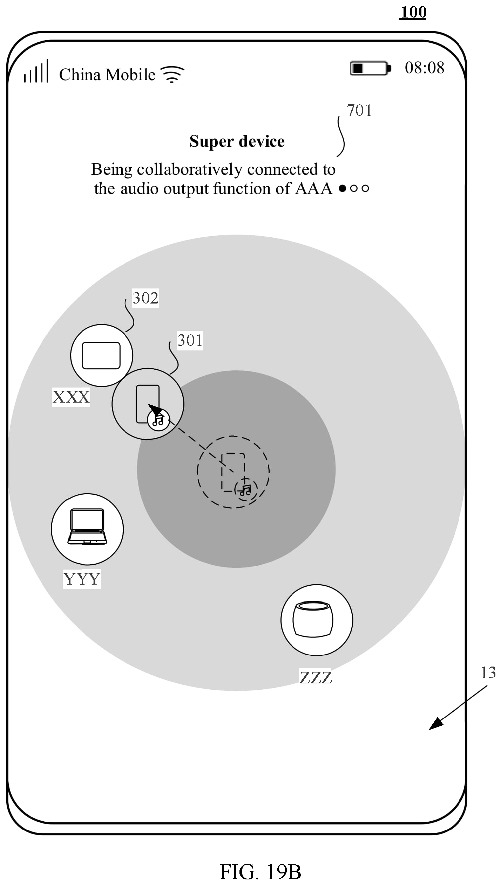

As shown in FIG. 19A and FIG. 19B, the user may drag the icon 301 of the device to the icon 302 of the tablet computer by using a slide operation. When detecting that the icon 301 touches the icon 302, in response to the slide operation, the electronic device 100 displays prompt information 701 indicating that a collaborative connection is being performed, and performs a collaborative connection to an audio output function of the tablet computer.

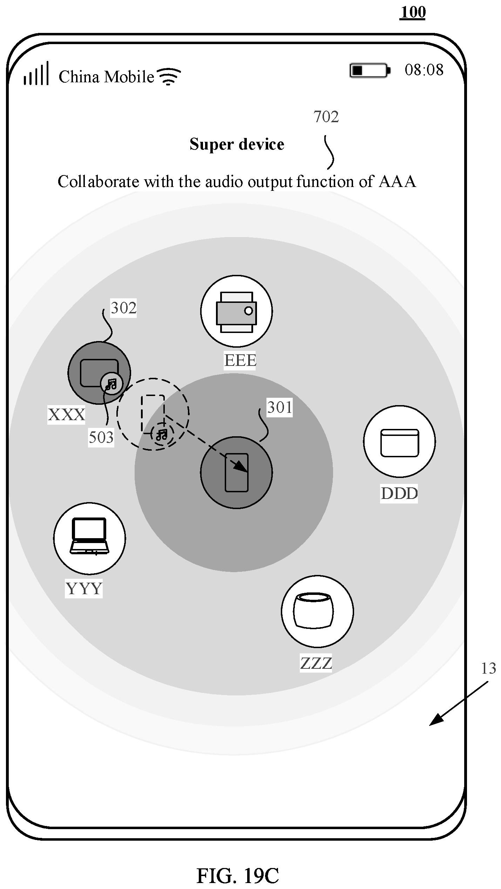

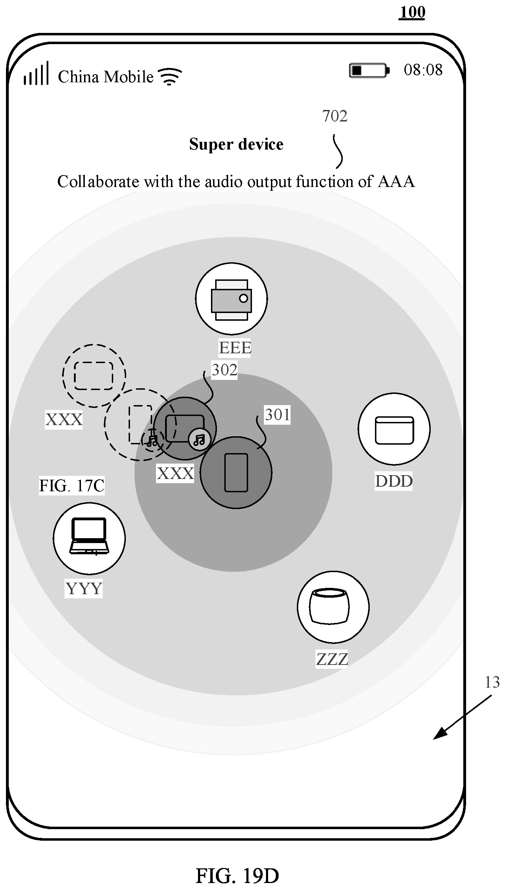

As shown in FIG. 19C, when determining that the collaborative connection of the audio output function succeeds, the electronic device 100 displays prompt information 702 indicating that the collaborative connection succeeds, switches the icon 302 of the tablet computer from the uncollaborated state to the collaborated state, additionally displays the capability badge 503 of the audio output function on the icon 302, and pops the icon 301 of the device back to a circular area. FIG. 19D shows another collaborated state of the icon 302 according to an embodiment of this application. As shown in FIG. 19D, the icon 302 in the collaborated state is deepened for display, and is popped back to the circular area together with the icon 301 of the device. In an implementation, as shown in FIG. 19C and FIG. 19D, after the icon 301 is popped back to the circular area, additional displaying of the capability badge is stopped.

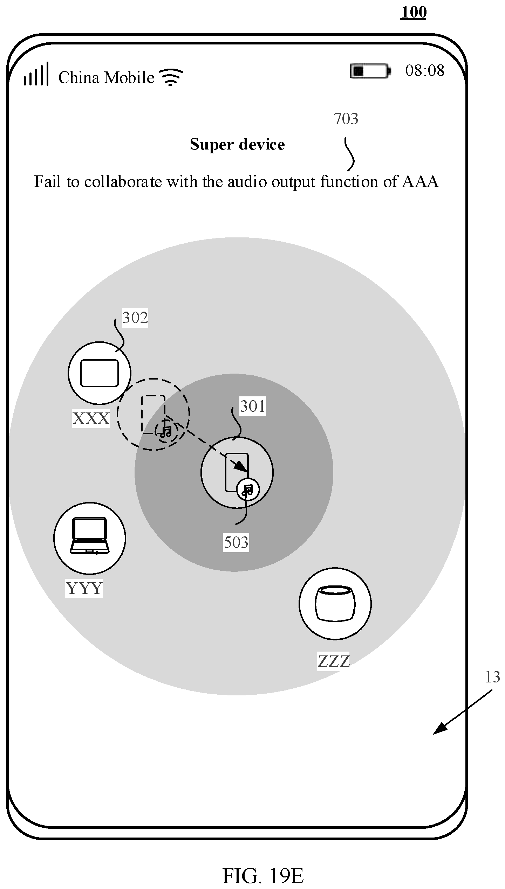

As shown in FIG. 19E, when determining that the collaborative connection of the audio output function fails, the electronic device 100 displays prompt information 703 indicating that the collaborative connection fails, and pops the icon 301 of the device back to the circular area. The capability badge 503 of the audio output function may continue to be additionally displayed on the icon 301.

Similar to FIG. 9A to FIG. 9C, in Case 3, the user may alternatively drag a capability badge (for example, the capability badge 503) displayed around the icon 301 of the device to the icon 302 of the tablet computer, to implement a collaborative connection to the audio output function corresponding to the capability badge 503.

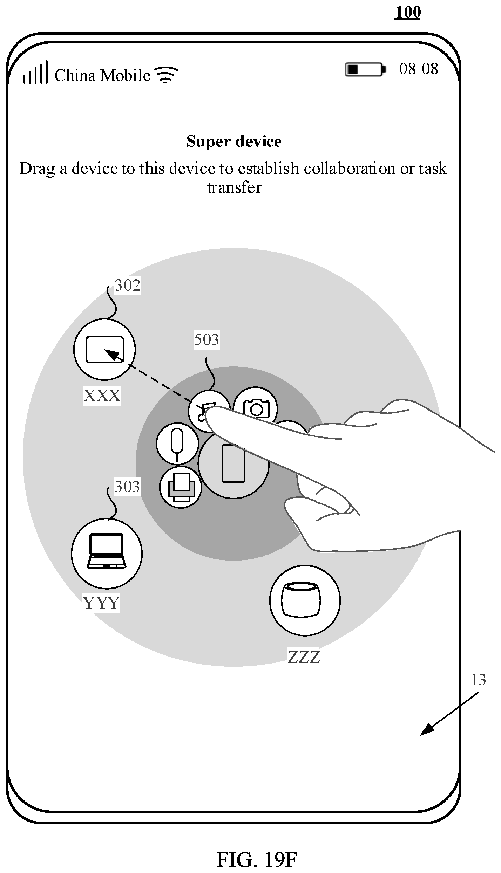

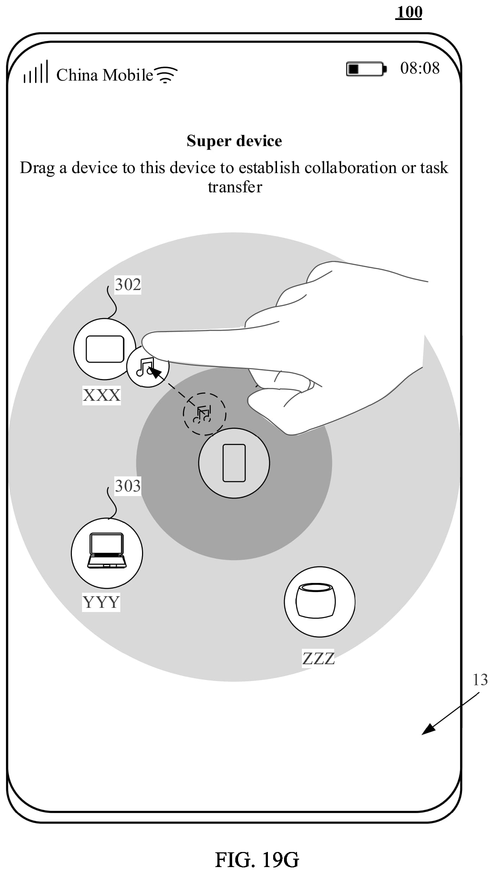

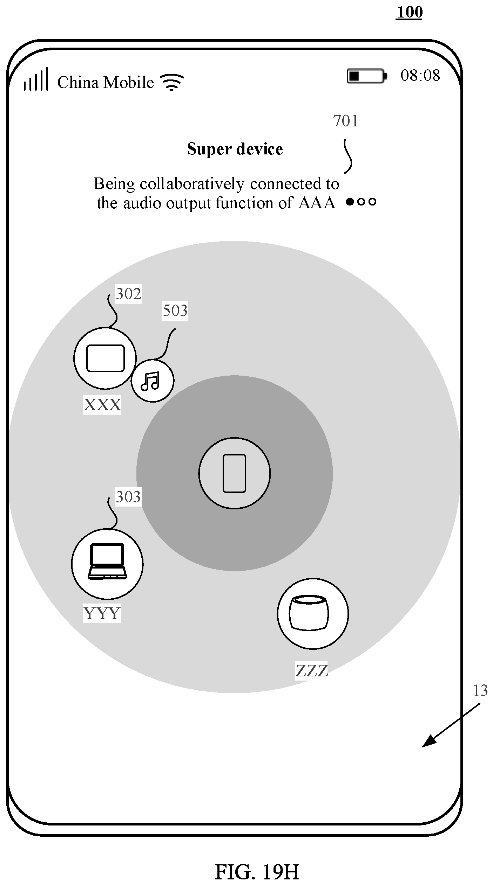

For example, as shown in FIG. 19F and FIG. 19G, the user may drag the capability badge 503 to the icon 302 of the tablet computer by using a slide operation. As shown in FIG. 19H, when detecting that the capability badge 503 touches the icon 302 and the user releases the capability badge, in response to the slide operation, the electronic device 100 displays prompt information 701 shown in FIG. 19H, and performs the collaborative connection to the audio output function of the tablet computer.

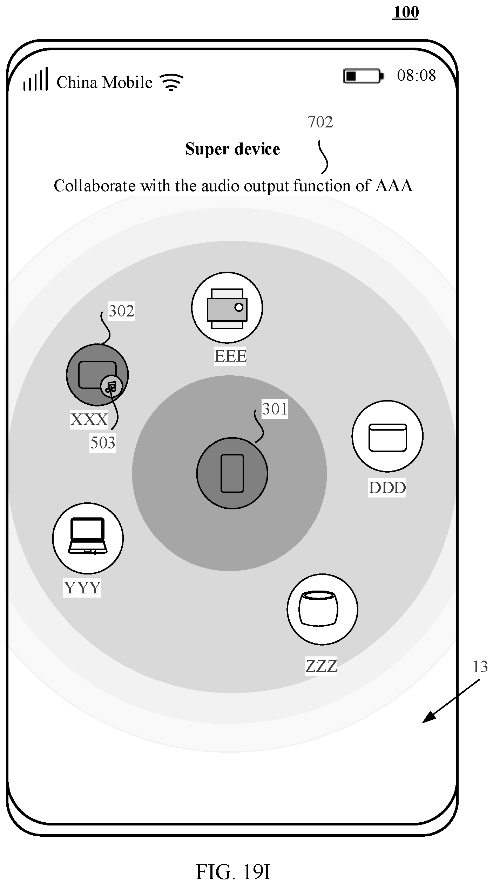

As shown in FIG. 19I, when determining that the collaborative connection of the audio output function succeeds, the electronic device 100 displays prompt information 702 indicating that the collaborative connection succeeds, switches the icon 302 of the tablet computer from the uncollaborated state to the collaborated state, and additionally displays the capability badge 503 of the audio output function on the icon 302.

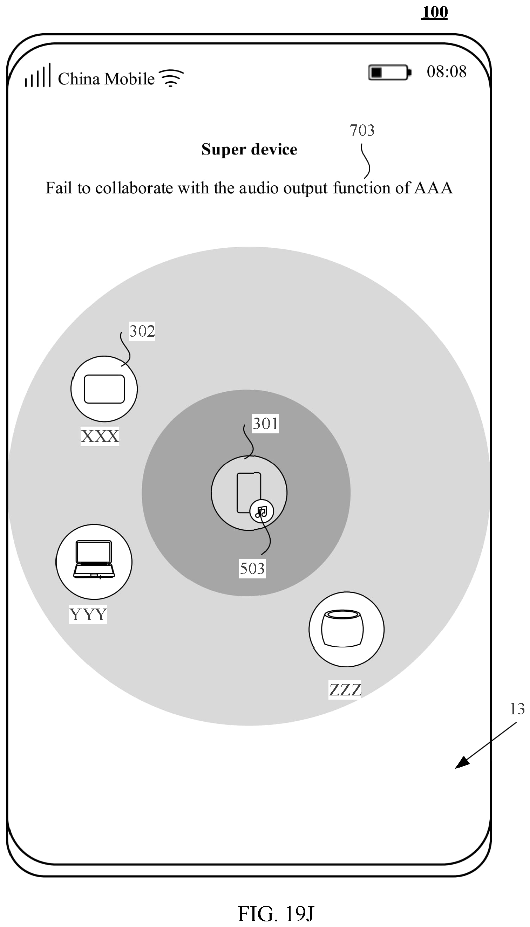

As shown in FIG. 19J, when determining that the collaborative connection of the audio output function fails, the electronic device 100 displays prompt information 703 indicating that the collaborative connection fails, and the capability badge 503 of the audio output function may be additionally displayed on the icon 301.

Case 4: An electronic device 100 and a candidate device 200 support collaborative connections of a plurality of capabilities. The candidate device 200 supports at least one collaborative capability, and capability badges of one or more of the at least one capability (for example, a capability 1 and a capability 2) may be additionally displayed on an icon of the electronic device 100.

In some embodiments, when the capability badges corresponding to the capability 1 and the capability 2 are added to the icon of the electronic device 100, an icon of the candidate device 200 is dragged to approach the icon of the electronic device 100, or the icon of the electronic device 100 is dragged to approach an icon of the candidate device 200, so that the electronic device 100 can be collaboratively connected to the capability 1 and the capability 2 of the candidate device 200.

For a collaborative connection of one capability in Case 4, refer to related descriptions of FIG. 18A to FIG. 19J. Details are not described herein again.

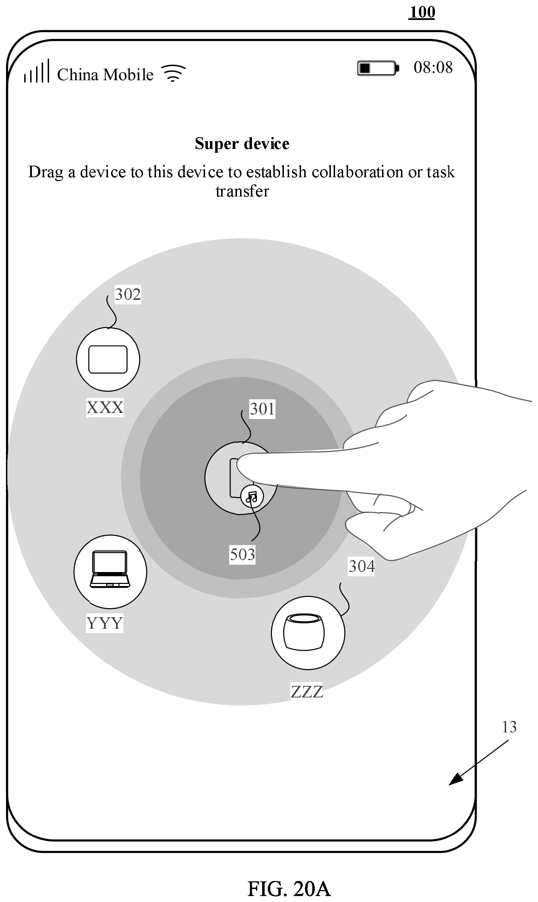

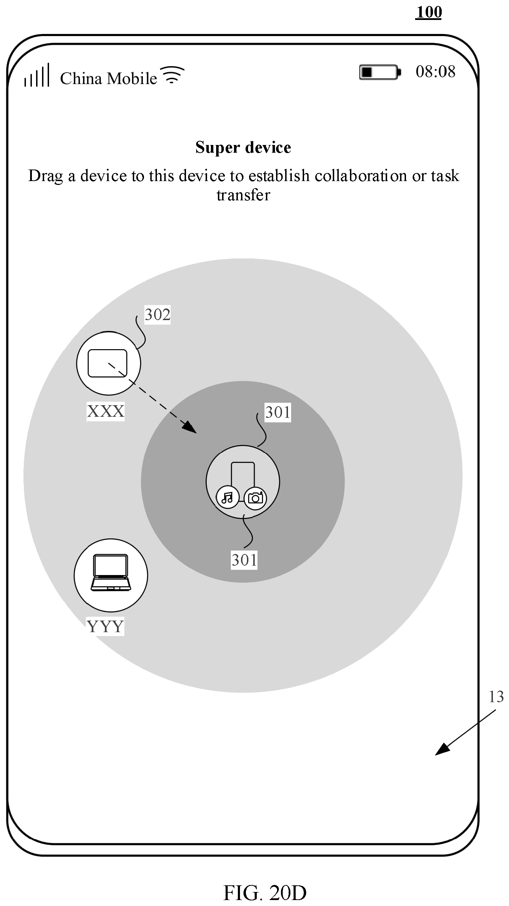

A collaborative connection interface 13 shown in FIG. 20A is used as an example. FIG. 20A and FIG. 20D show related user interface of additionally displaying two capability badges on an icon 302 of the electronic device 100.

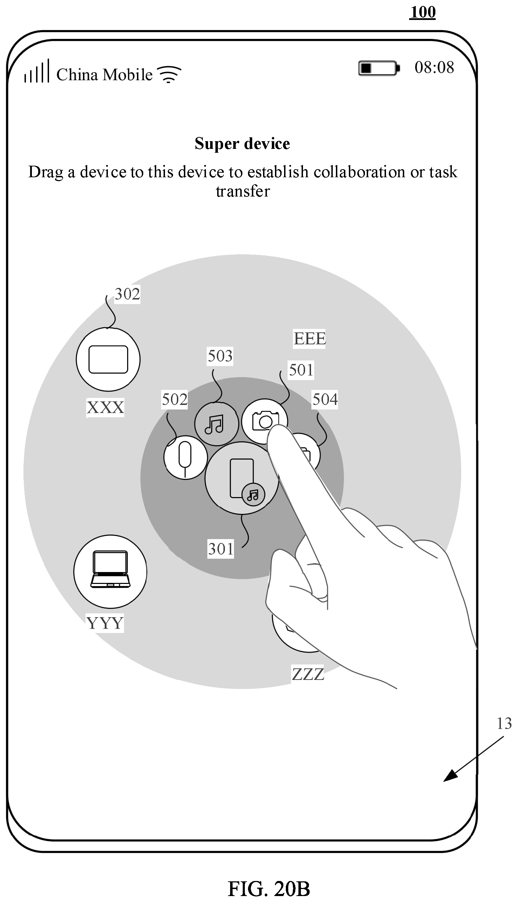

As shown in FIG. 20A and FIG. 20B, a capability badge 503 of an audio output function is additionally displayed on the icon 301 of the electronic device 100. The icon 301 may receive an input operation (for example, a tap operation) of the user, and in response to the input operation, the electronic device 100 displays at least one capability badge around the icon 301. In an implementation, the at least one capability badge includes collaborative capabilities supported by candidate devices currently displayed on the collaborative connection interface 13. Compared with FIG. 17B, the candidate device in FIG. 20B does not support a printing function, and the at least one capability badge does not include a capability badge 505 of the printing function.

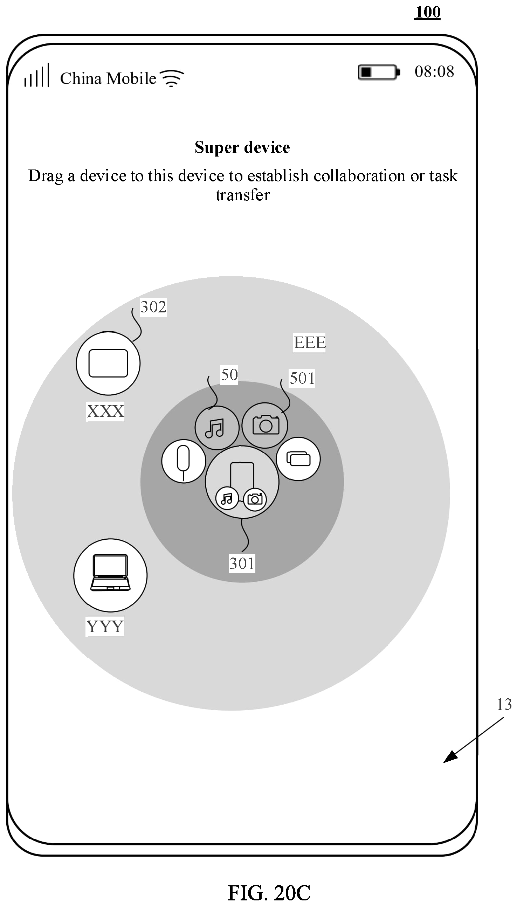

In some embodiments, as shown in FIG. 20B, a capability badge 501 corresponding to a camera may receive an input operation (for example, a tap operation) of the user. As shown in FIG. 20C, in response to the input operation, the electronic device 100 adds the capability badge 501 to a capability badge additionally displayed on the icon 301 of the device. In an implementation, in response to the input operation, the electronic device 100 further stops displaying an icon (for example, an icon 304 of the sound box) of a candidate device that does not support the camera corresponding to the capability badge 501, and/or switches the capability badge 501 displayed around from an unselected state to a selected state. The icon 301 shown in FIG. 20C may receive an input operation (for example, a tap operation) of the user. As shown in FIG. 20D, in response to the input operation, the electronic device 100 stops displaying the at least one capability badge around the icon 301. In an implementation, in response to an input operation performed on the capability badge 503 shown in FIG. 20B, the electronic device 100 may directly display a collaborative connection interface 13 shown in FIG. 20D.

For how to switch the capability badge added to the electronic device 100 in Case 4, further refer to the implementation of switching the capability badge added to the icon 302 of the tablet computer in FIG. 12A to FIG. 12F. Details are not described herein again.

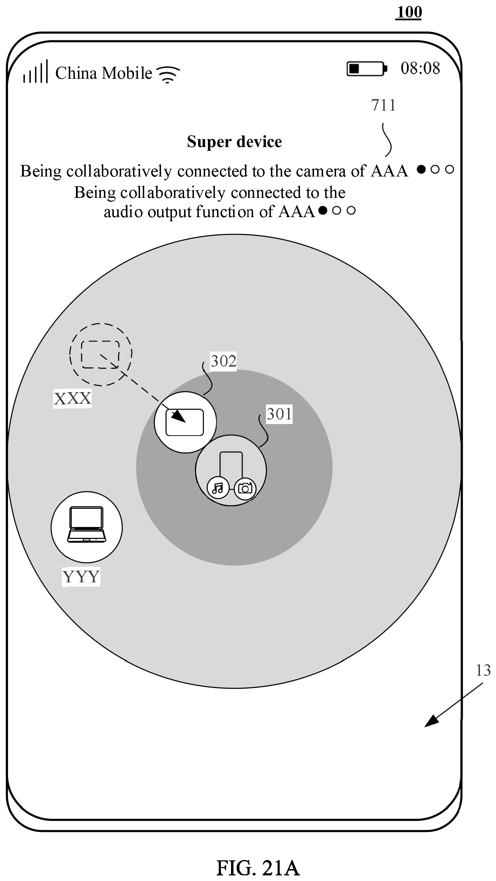

A collaborative connection interface 13 shown in FIG. 21A is used as an example. FIG. 21A to FIG. 21D show user interfaces related to the collaborative connections of the two capabilities in Case 4.

As shown in FIG. 21A, after the user adds a capability badge 503 and the capability badge 501 to the icon 301 of the device, the user may drag the icon 302 to an area in which the icon 301 is located by using a slide operation. When detecting that the icon 302 touches the icon 301 or a preset area 1 in which the icon 301 is located, the electronic device 100 displays prompt information 711 indicating that a collaborative connection is being performed, and performs a collaborative connection to an audio output function and a camera of a tablet computer.

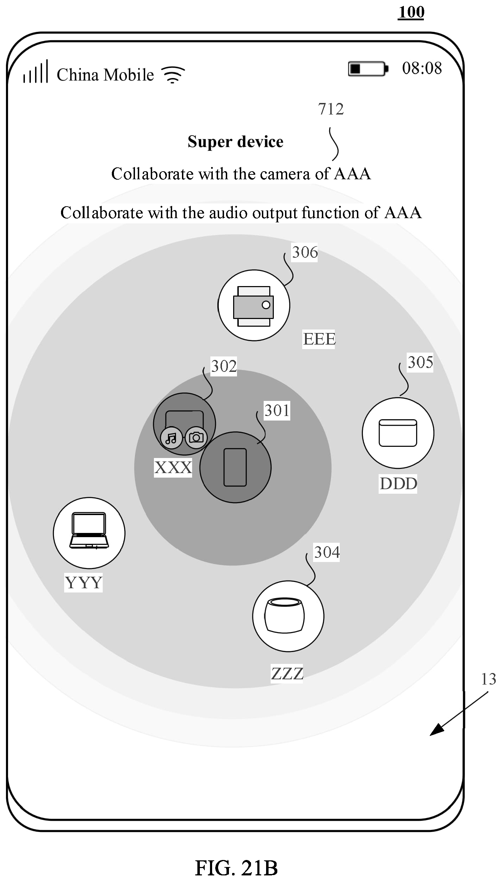

As shown in FIG. 21B, when determining that the collaborative connections of the audio output function and the camera succeed, the electronic device 100 displays prompt information 712 indicating that the collaborative connections succeed, switches the icon 302 from an uncollaborated state to a collaborated state, and additionally displays the capability badge 501 of the camera and the capability badge 503 of the audio output function on the icon 302. In an implementation, after the collaborative connections succeed, the icon 503 of the audio output function and the icon 501 of the camera are stopped from additionally displaying on the icon 301 of the device, and all detected uncollaborated candidate devices are displayed in an annular area. As shown in FIG. 21B, the electronic device 100 displays the icon 304 of the sound box, an icon 305 of a projector, and an icon 306 of a printer again in the annular area.

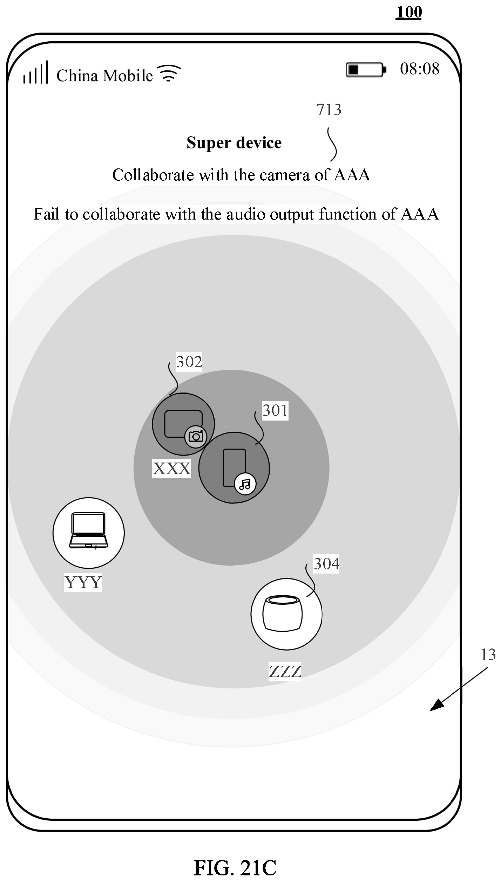

As shown in FIG. 21C, when determining that the collaborative connection of the camera succeeds and the collaborative connection of the audio output function fails, the electronic device 100 displays prompt information 713, switches the icon 302 from the uncollaborated state to the collaborated state, and additionally displays the capability badge 501 of the camera on the icon 302. The prompt information 713 indicates that the collaborative connection to the camera of the tablet computer succeeds, and the collaborative connection to the audio output function of the tablet computer fails. In an implementation, after the collaborative connection of the camera succeeds and the collaborative connection of the audio output function fails, the icon 501 of the camera is stopped from additionally displaying on the icon 301 of the device, and a detected uncollaborated candidate device that supports the audio output function is displayed in the annular area. As shown in FIG. 21C, the electronic device 100 displays the icon 304 of the sound box again in the annular area.

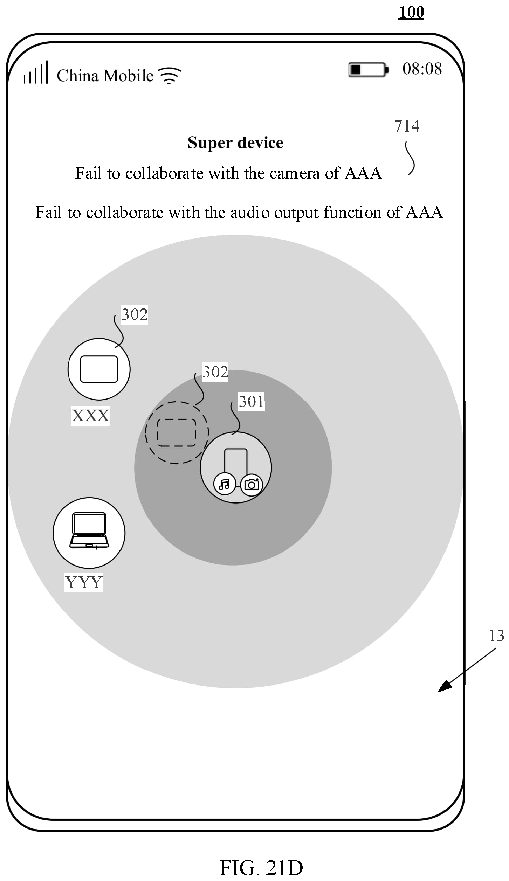

As shown in FIG. 21D, when determining that the collaborative connections of the audio output function and the camera both fail, the electronic device 100 displays prompt information 714 indicating that the collaborative connections fail, and pops the icon 302 back to the annular area in which the candidate devices are located.

Similar to FIG. 15A to FIG. 15D, in Case 4, when a plurality of capability badges are additionally displayed on the icon 301 of the device, the icon 301 of the device may alternatively be dragged to an area in which the icon of the candidate device 200 is located, to implement collaborative connections of capabilities corresponding to the plurality of capability badges. For details, further refer to related descriptions of FIG. 19A to FIG. 19E. Details are not described herein again.

In some embodiments, after the electronic device 100 establishes the collaborative connection to the at least one capability of the candidate device 200 (for example, the tablet computer), the user may further select another capability of the candidate device to perform a collaborative connection.

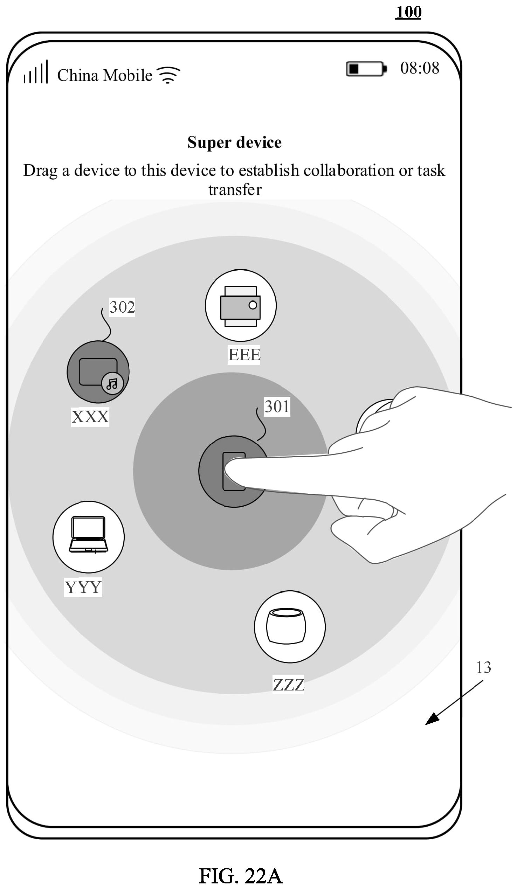

For example, FIG. 22A to FIG. 23C show related user interfaces for continuing to perform a collaborative connection with the collaborated tablet computer.

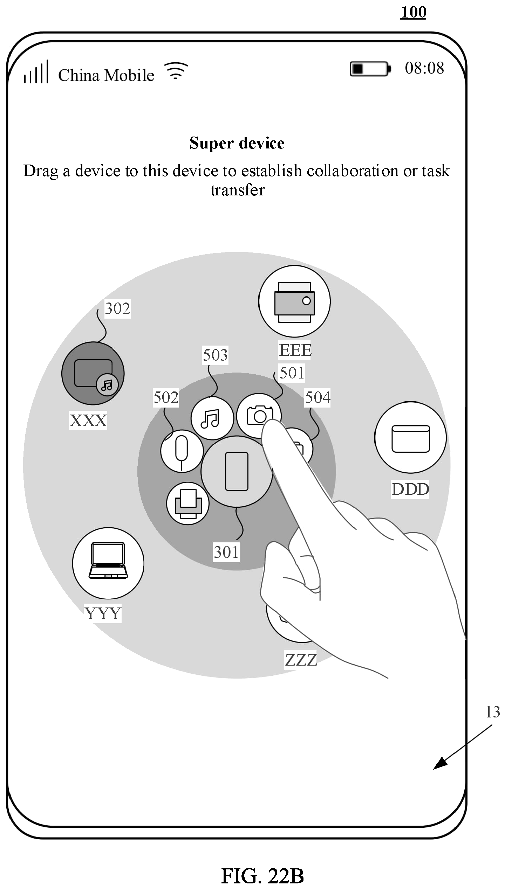

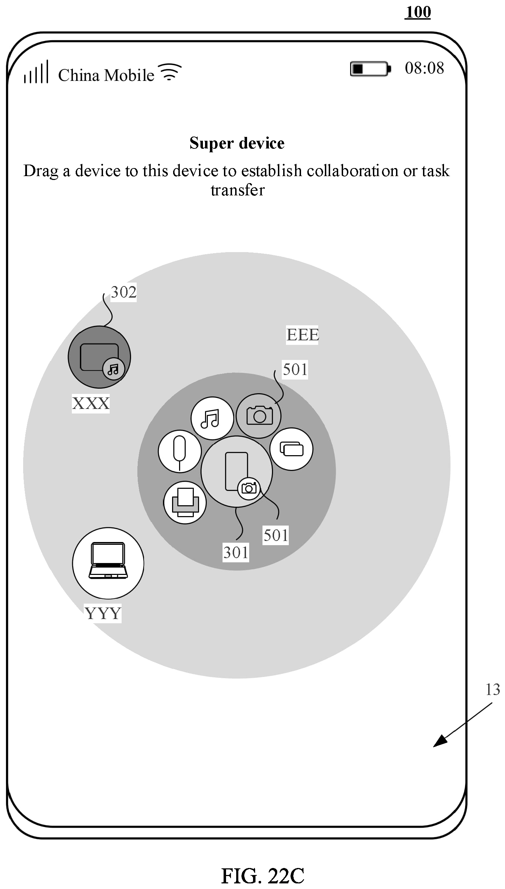

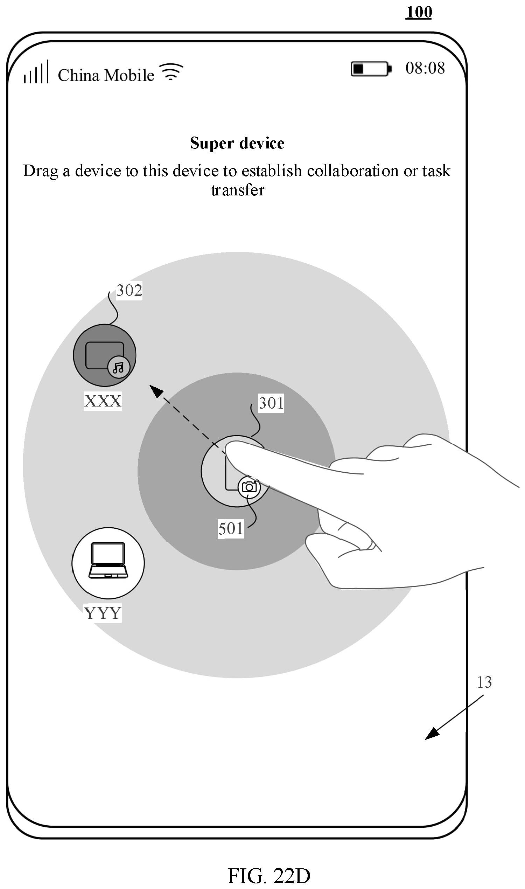

As shown in FIG. 22A, the electronic device 100 currently establishes the collaborative connection to the audio output function of the tablet computer. As shown in FIG. 22B, FIG. 22C, and FIG. 22D, the capability badge 501 is used as an example, and the user may select the capability badge 501, and add the capability badge 501 as a capability badge additionally displayed on the icon 301. For details, refer to related descriptions of FIG. 20B to FIG. 20D. Details are not described herein again.

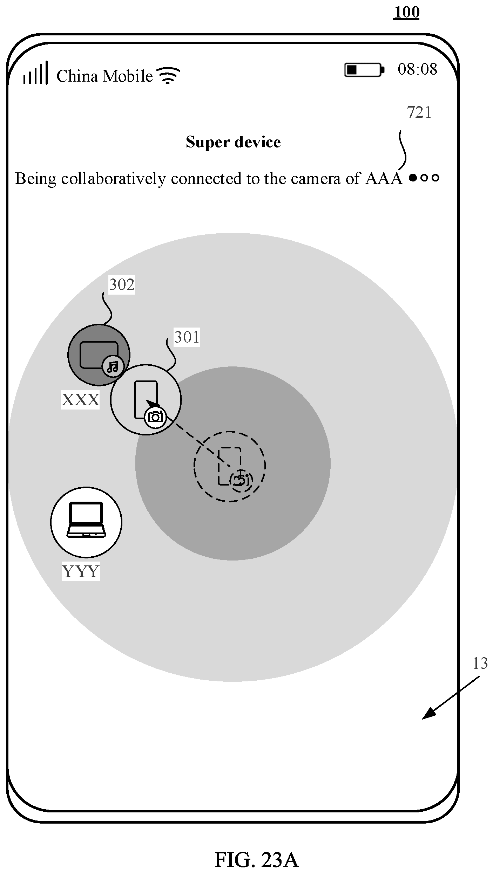

As shown in FIG. 22D and FIG. 23A, after the user adds the capability badge 501 to the icon 301 of the device, the user may drag the icon 301 of the device to an area in which the icon 302 is located by using a slide operation. When detecting that the icon 301 touches the icon 302, the electronic device 100 displays prompt information 721 indicating that a collaborative connection is being performed, and performs a collaborative connection to the camera of the tablet computer.

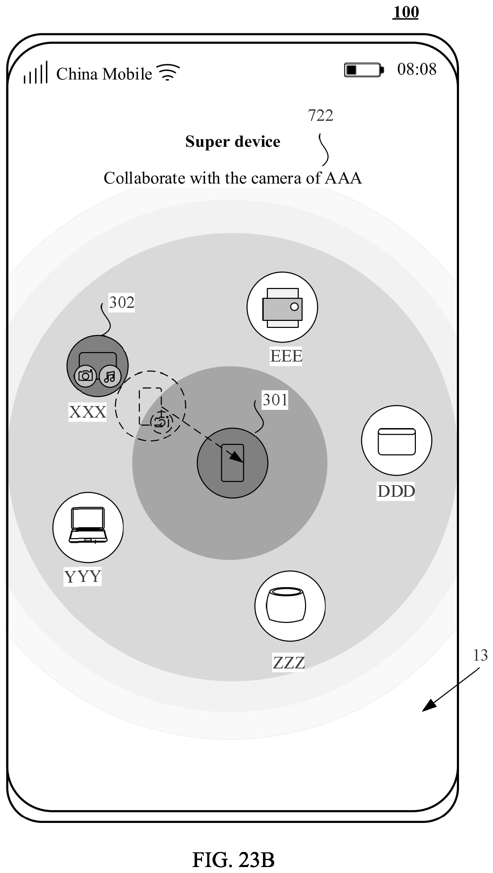

As shown in FIG. 23B, when determining that the collaborative connection succeeds, the electronic device 100 displays prompt information 722 indicating that the collaborative connection succeeds, additionally displays the capability badge 501 of the camera on the icon 302 in the collaborated state, and pops the icon 301 of the device back to a circular area 1.

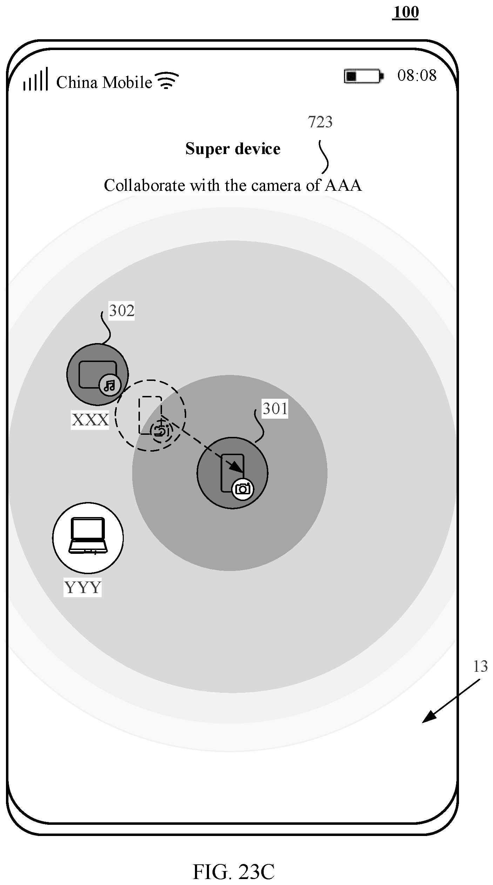

As shown in FIG. 23C, after determining that the collaborative connection of the camera fails, the electronic device 100 displays prompt information 723 indicating that the collaborative connection fails, and pops the icon 301 of the device back to the circular area.

For details, refer to related descriptions of FIG. 19A to FIG. 19E. Details are not described herein again.

In addition, for how to cancel the collaborative connection of the collaborated capability in Case 4, refer to related descriptions in Case 2. Details are not described herein again. It should be noted that, the camera of the tablet computer is used as an example, and if a collaborative connection to the camera of the tablet computer is canceled in Case 4, after the collaborative connection is canceled, the capability badge of the camera is no longer additionally displayed on the icon 302 of the tablet computer.

In embodiments of this application, in Case 3 and Case 4, for a same capability, the electronic device 100 may establish cooperative connections to a plurality of devices at the same time, or establish a cooperative connection to a maximum of one device. This is not specifically limited herein.

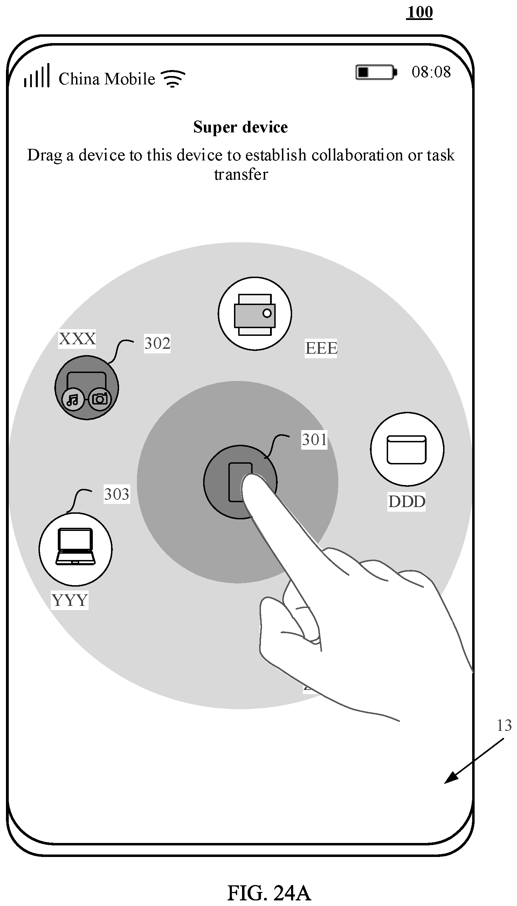

For example, FIG. 24A to FIG. 24E show user interfaces related to establishing a collaborative connection between the electronic device 100 and each of two devices.

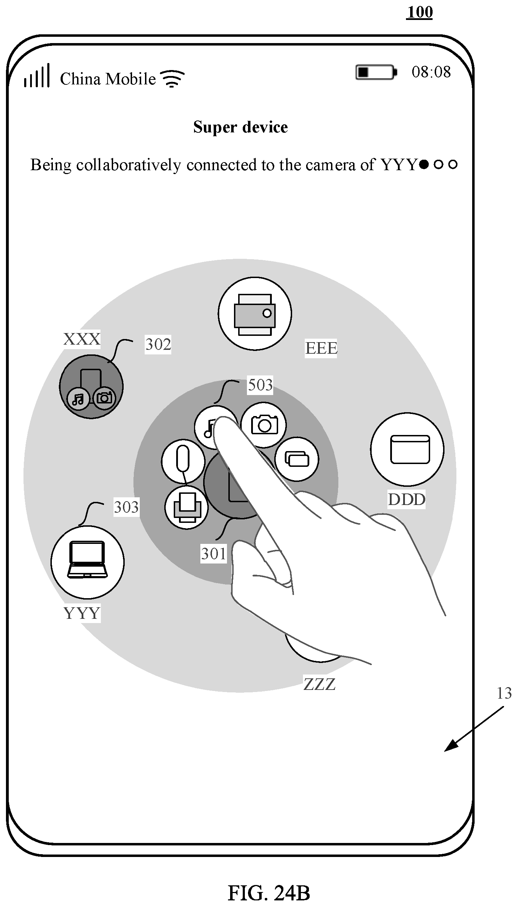

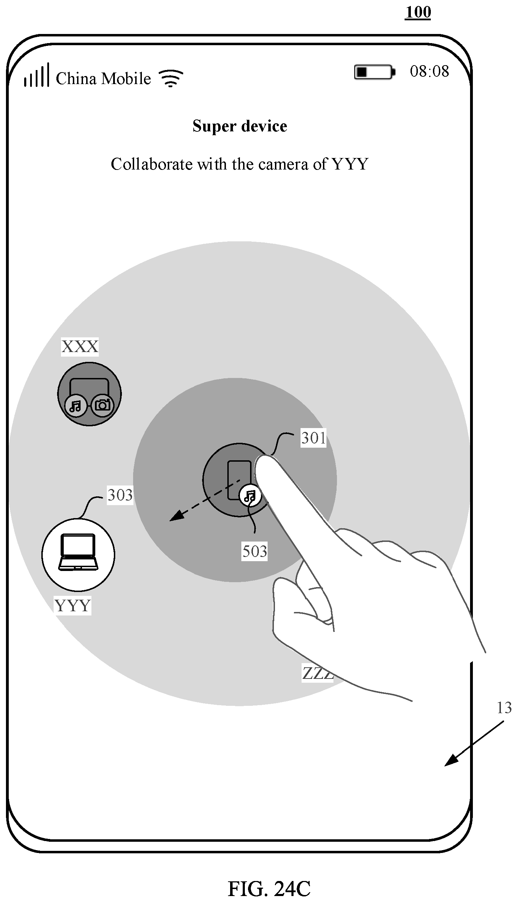

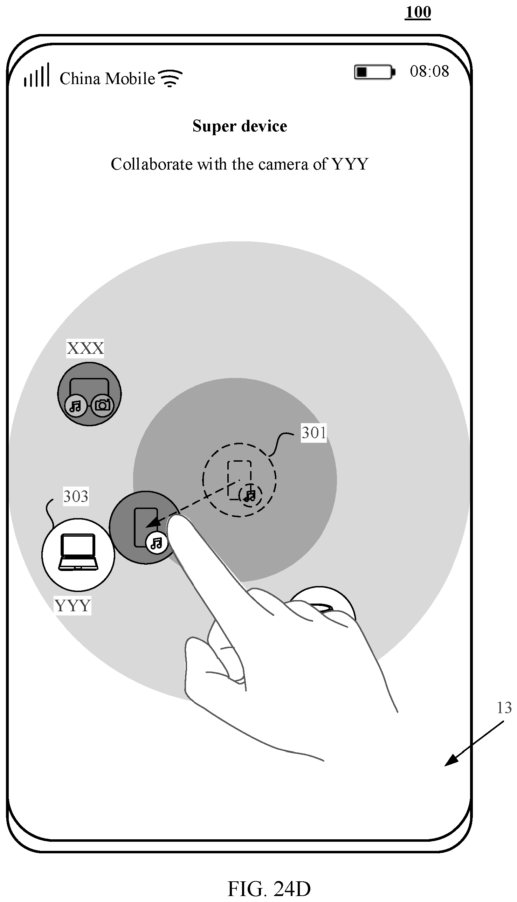

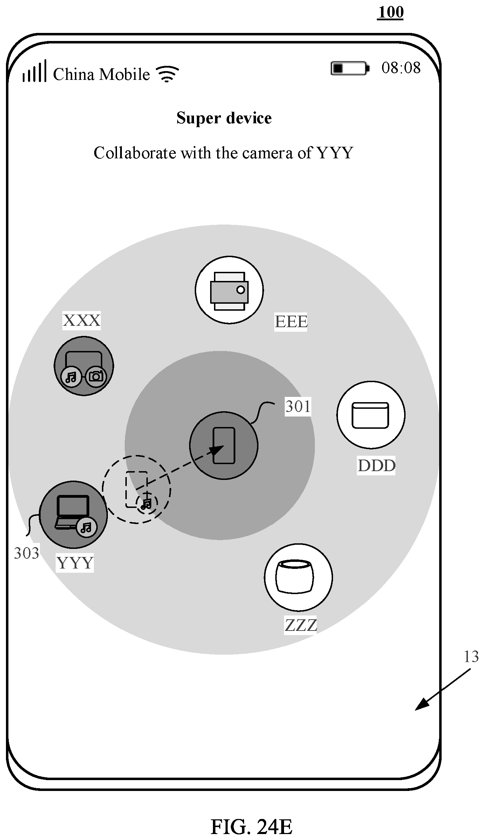

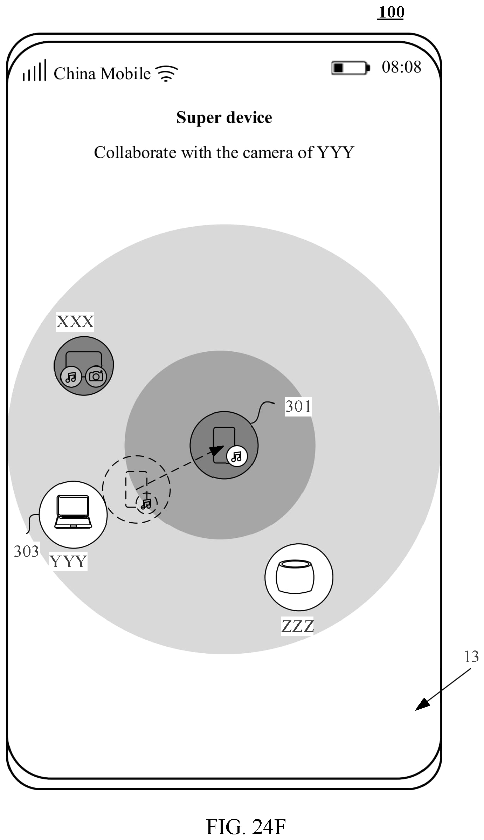

As shown in FIG. 24A, FIG. 24B, and FIG. 24C, the electronic device 100 establishes collaborative connections to the audio output function and the camera of the tablet computer. The user may add at least one capability badge (for example, the capability badge 503 corresponding to the audio output function) corresponding to a collaborative capability of a candidate device to the icon 301 of the device. As shown in FIG. 24C and FIG. 24D, the user may drag the icon 301 of the device to an area in which an icon 303 of a notebook computer is located by using a slide operation. In response to the slide operation, the electronic device 100 performs a collaborative connection to an audio output function of the notebook computer. As shown in FIG. 24E, when it is determined that the collaborative connection to the camera of the notebook computer succeeds, a display state of the icon 303 of the notebook computer is changed from an uncollaborated state to a collaborated state, the capability badge 503 of the audio output function is additionally displayed on the icon 303, and the icon 301 is popped back to the circular area. As shown in FIG. 24F, when it is determined that the collaborative connection to the camera of the notebook computer fails, the icon 301 is popped back to the circular area.

For details, refer to related descriptions of FIG. 17A to FIG. 18C. Details are not described herein again.

Case 5: A user does not select an additional capability badge for a candidate device 200 or an electronic device 100, and the electronic device 100 may automatically select, based on a current application scenario, a capability for performing a collaborative connection.

In Case 1 and Case 3, the electronic device 100 and the candidate device 200 support only one collaborative capability. If the user does not select an additional displayed capability badge for the candidate device 200 or the electronic device 100, the user drags an icon of the candidate device 200 to approach an icon of the electronic device 100 or drags an icon of the electronic device 100 to approach an icon of the candidate device. The electronic device 100 may automatically select, based on a current application scenario, a capability from collaborative capabilities supported by the candidate device 200, to perform a collaborative connection.

In Case 2 and Case 4, the electronic device 100 and the candidate device 200 support at least one collaborative capability. If the user does not select an additional displayed capability badge for the candidate device 200 or the electronic device 100, the user drags an icon of the candidate device 200 to approach an icon of the electronic device 100 or drags an icon of the electronic device 100 to approach an icon of the candidate device. The electronic device 100 may automatically select, based on a current application scenario, at least one capability from collaborative capabilities supported by the candidate device 200, to perform a collaborative connection.

In some embodiments, the candidate device 200 on a collaborative connection interface 13 supports at least one collaborative capability, and when no capability badge is additionally displayed on the candidate device 200 and the icon 301 of the electronic device 100, the user drags, by using a slide operation, the icon of the candidate device 200 to approach the icon of the electronic device 100, or the icon of the electronic device 100 to approach the icon of the candidate device. In response to the slide operation, the electronic device 100 automatically selects, based on one or more of an application 1 recently run in the foreground, a ranking of quantities of collaborated connections of the capabilities of the candidate device 200, a capability in a recent collaborated connection to the candidate device 200, a priority of each collaborative capability of the candidate device 200, and the like, at least one capability (for example, a capability 1) from the collaborative capabilities of the candidate device 200, to perform a collaborative connection.

In an implementation, first, the electronic device 100 determines a capability (for example, the capability 1) required by the application 1 that is recently run in the foreground, and automatically selects the capability 1 from the collaborative capabilities of the candidate device 200 to perform a collaborative connection. When the collaborative capabilities of the candidate device 200 do not include the capability required by the application 1, the electronic device 100 automatically selects, based on one or more of the ranking of the quantities of collaborated connections of the capabilities of the candidate device 200, the capability in the recent collaborated connection to the candidate device 200, the priority of each collaborative capability of the candidate device 200, and the like, at least one capability (for example, the capability 1) from the collaborative capabilities of the candidate device 200 to perform a collaborative connection. In an implementation, the electronic device 100 selects at least one capability (for example, the capability 1) whose quantity of collaborated connections ranks top in the quantities of collaborated connections of the capabilities of the candidate device 200, to perform a collaborative connection. The quantity ranking may be a ranking of quantities of collaborated connections of the capabilities in latest preset duration (for example, a latest week), or may be a ranking of quantities of collaborated connections of the capabilities in a latest preset total quantity of connections (for example, latest 10 connections). In an implementation, the electronic device 100 selects at least one capability in the recent collaborative connection to the candidate device 200 to perform a collaborative connection. In an implementation, the electronic device 100 selects at least one capability with a highest priority in the collaborative capabilities of the candidate device 200, to perform a collaborative connection. Priorities of the capabilities may be preset by the electronic device 100, or may be preset by the user. This is not specifically limited herein.

In some embodiments, the capability required by the application 1 includes the capability 1. When the electronic device 100 runs the application 1 in the foreground, the collaborative connection interface 13 is invoked. All candidate devices (for example, the candidate device 200) on the collaborative connection interface 13 support the capability 1. When no capability badge is additionally displayed on the candidate device 200 and the icon 301 of the electronic device 100, the user drags, by using a slide operation, the icon of the candidate device 200 to approach the icon of the electronic device 100, or the icon of the electronic device 100 to approach the icon of the candidate device 200. In response to the slide operation, the electronic device 100 automatically selects, from the capabilities supported by the candidate device 200, the capability (for example, the capability 1) required by the application 1, to perform a collaborative connection.

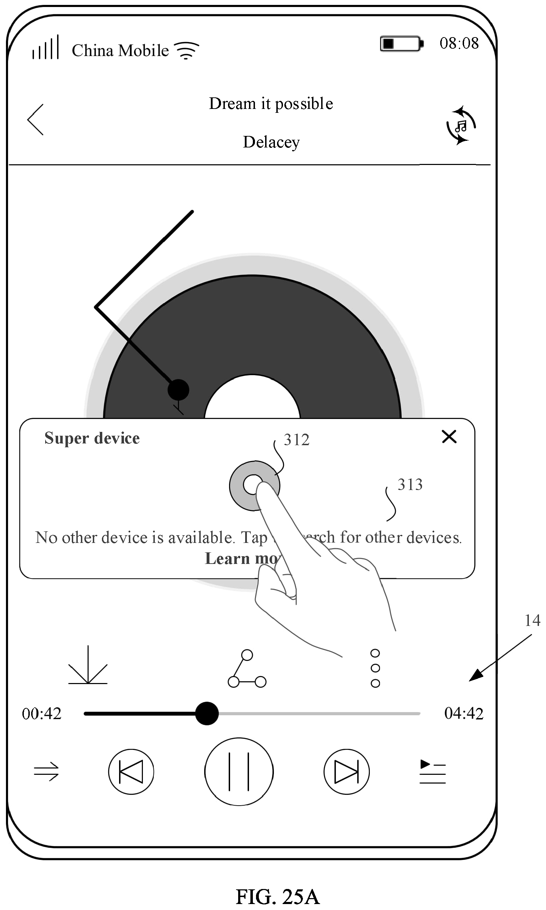

For example, FIG. 25A to FIG. 25D show user interfaces for determining a capability of a collaborative connection based on a current application scenario.

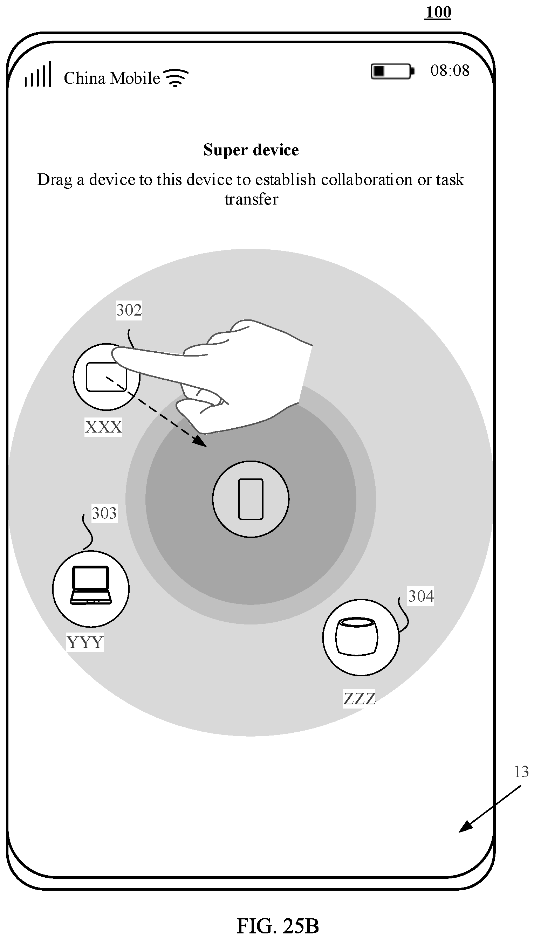

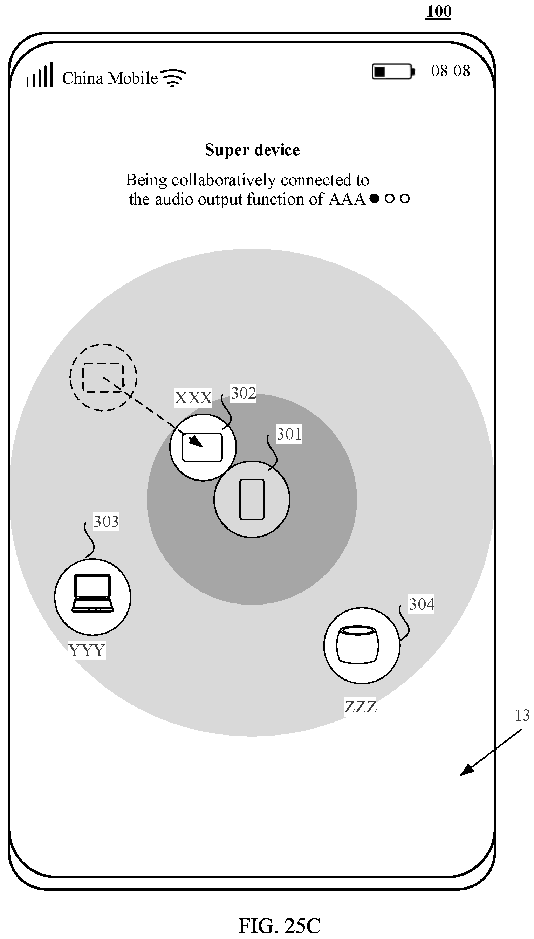

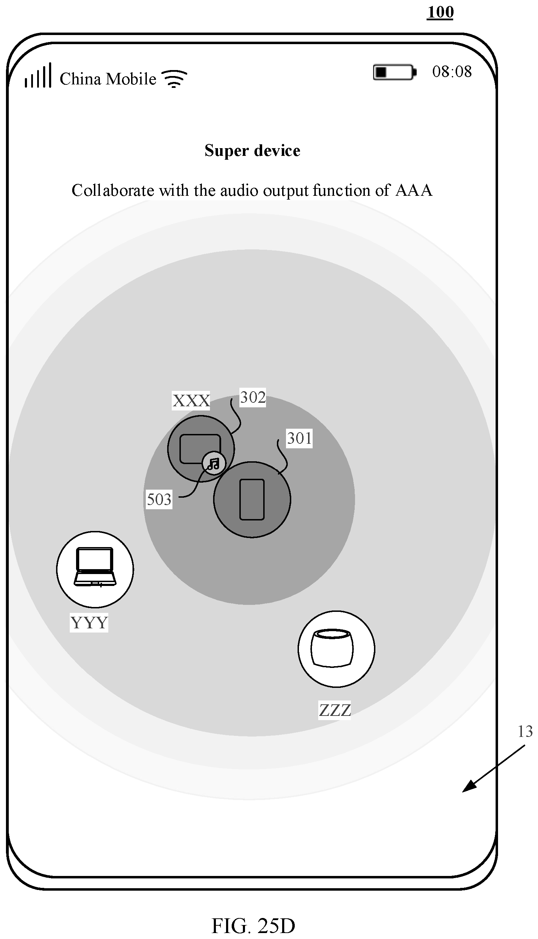

As shown in FIG. 25A and FIG. 25B, a music app is used as an example. When the electronic device 100 runs the music app in the foreground, the electronic device 100 displays the collaborative connection interface 13 in response to an input operation of the user. A capability required by the music app includes an audio output function, and all candidate devices displayed in an annular area on the collaborative connection interface 13 support the audio output function. As shown in FIG. 25B and FIG. 25C, on the collaborative connection interface 13, no capability badge is additionally displayed on the icon 302 of the tablet computer and the icon 301 of the electronic device 100. The user drags the icon 301 of the tablet computer to approach the icon 301 of the device by using a slide operation. In response to the slide operation, the capability (for example, the audio output function) required by the music app is selected from collaborative capabilities of the tablet computer. As shown in FIG. 25D, when it is determined that the collaborative connection to the audio output function of the tablet computer succeeds, the icon 302 of the tablet computer is switched to a collaborated state, and the capability badge 503 of the audio output function is additionally displayed on the icon 302.

In embodiments of this application, in Case 5, the electronic device 100 may also support establishing collaborative connections to a plurality of devices at the same time. Details are not described herein again.

The following describes, by using examples, a capability application after the collaborative connection is implemented in embodiments of this application.

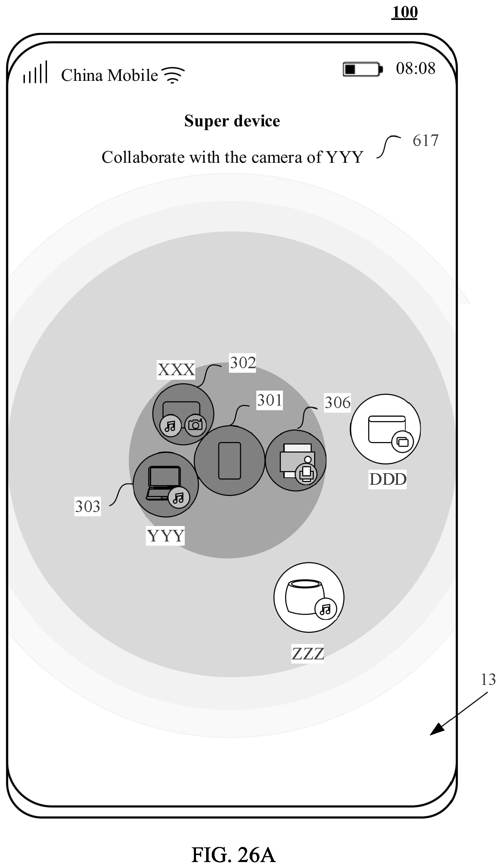

A collaborative connection interface 13 shown in FIG. 26A is used as an example for description. As shown in FIG. 26A, it can be learned, based on the capability badges that are additionally displayed by the available devices that are collaboratively connected, that the audio output function and the camera of the tablet computer, the audio output function of the notebook computer, and the printing function of the printer establish collaborative connections to the electronic device 100.

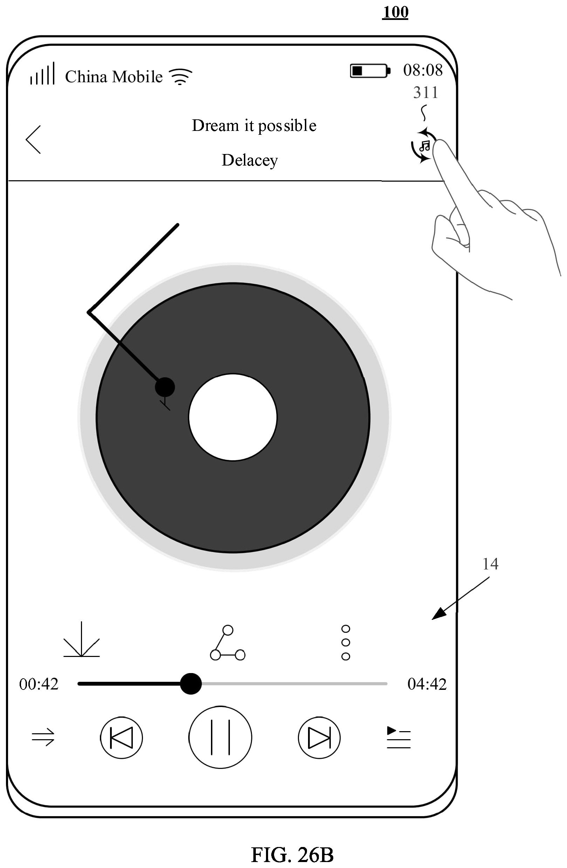

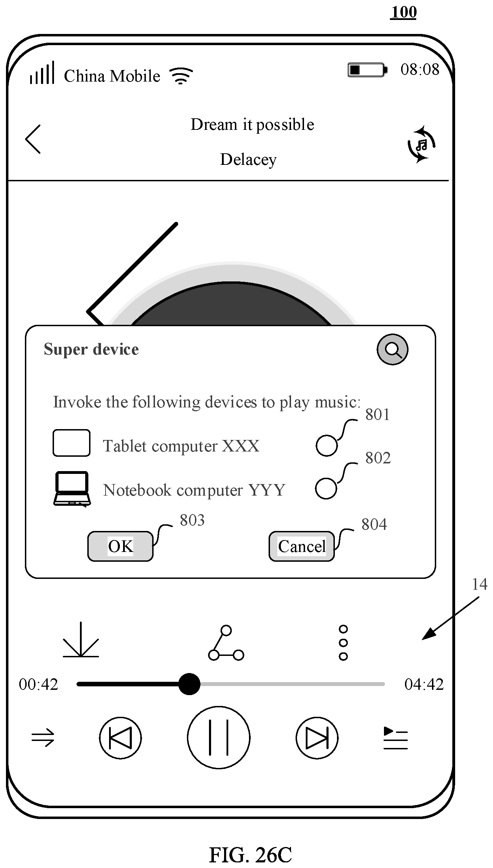

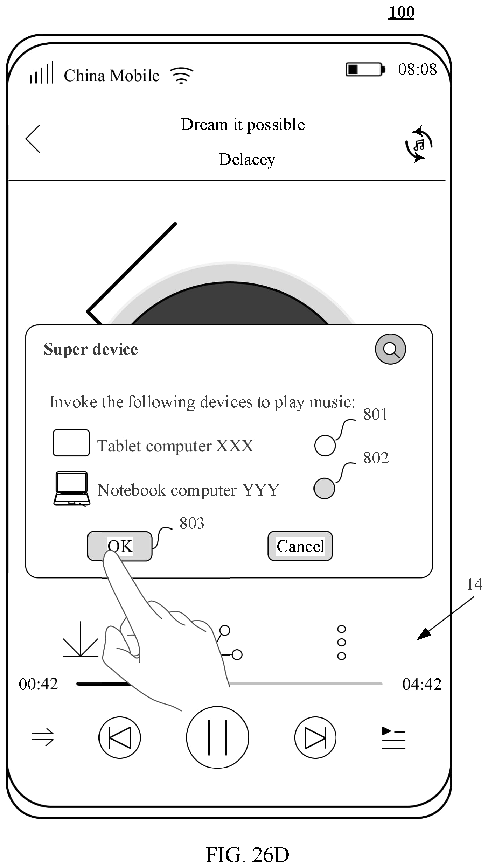

For example, as shown in FIG. 26B and FIG. 26C, after the user taps a switching control 311 on a music playing interface 14, the electronic device 100 displays a selection box, where the selection box includes options of available devices (namely, an option 801 of the tablet computer and an option 802 of the notebook computer) that currently have the collaborated audio output function, an OK control 803, and a cancel control 804. As shown in FIG. 26D, after selecting an option of at least one available device (for example, the option 801 of the notebook computer), the user detects an input operation (for example, a tap operation) performed on the OK control 803. In response to the input operation, the electronic device 100 may invoke the audio output function of the notebook computer to play music. The cancel control 804 may receive an input operation (for example, a tap operation) of the user, and in response to the input operation, the electronic device 100 stops displaying the selection box.

In some embodiments, the electronic device 100 may collaboratively connect to a same capability (for example, the capability 1) of a plurality of devices. In an implementation, for the capability 1 of the plurality of collaborated available devices, the electronic device 100 can invoke the capability 1 of only one available device at a time. In an implementation, for the capability 1 of the plurality of collaborated available devices, the electronic device 100 supports simultaneous invoking of the capability 1 of the plurality of available devices. For example, after the user selects the option 801 of the tablet computer and the option 802 of the notebook computer that are shown in FIG. 26D, the electronic device 100 detects an input operation performed on the OK control 803. In response to the input operation, the electronic device 100 may simultaneously invoke the audio output function of the tablet computer and the audio output function of the notebook computer to play music.

In some embodiments, when the electronic device 100 needs to invoke the capability 1 of the available devices, an option of the available devices that are collaboratively connected does not need to be displayed for the user to select. The electronic device 100 may automatically select at least one available device from the available devices that are collaboratively connected, and invoke the capability 1 of the at least one available device. For example, as shown in FIG. 26B, in response to an input operation performed on the switching control 311, the electronic device 100 may automatically select, from the available devices (namely, the tablet computer and the notebook computer) that are collaborated for the audio output function, an available device for executing the capability 1. For example, the electronic device 100 automatically selects an available device with a larger quantity of collaborative connections of the audio output function, or an available device that recently performs a collaborative connection of the audio output function. A selection policy of the electronic device 100 is not specifically limited herein.

In some embodiments, if the electronic device 100 is collaboratively connected to the capability 1 of only one available device, when the electronic device 100 needs to invoke the capability 1 of another device, an option of the available devices that are collaboratively connected does not need to be displayed for the user to select, and the electronic device 100 may directly invoke the capability 1 of the available device that is collaboratively connected.

It should be noted that FIG. 26A to FIG. 26D are examples of the capability application of the available collaborated device in embodiments of this application, and should not constitute a limitation on embodiments of this application.

With reference to the collaborative connection interface 13, it can be learned that the collaborative connection interface 13 provided in embodiments of this application uses a two-layer annular layout design. First, a first-layer annular layout reflects an association relationship between another device and the device. To be specific, a first-layer ring displays an icon of a collaborative candidate device detected by the current device, and a collaboration state (a collaborated state or a collaborated state) of the icon of the candidate device may indicate whether a collaborative connection is established between the device and a capability of the candidate device. In this way, through the first-layer annular layout, the user may intuitively view one or more candidate devices that can be collaboratively connected to the device currently, and collaboration states of the candidate devices, so that the user selects a candidate device to be collaboratively connected. Second, a second-layer annular layout reflects collaborative capabilities supported by the candidate devices. In other words, capability badges corresponding to the collaborative capabilities are displayed. In this way, through the second-layer annular layout, the user may intuitively view various collaborative capabilities of the candidate devices, and the user may select and switch, by using the capability badges displayed in a second-layer ring, the capability badges additionally displayed on icons of the candidate devices, to select and switch a capability of a collaborative connection. After the collaborative connection to the capability 1 of the candidate device 200 is established, a capability badge is added to the icon of the candidate device 200 in the collaborated state, and the collaborated capability of the candidate device 200 may be further intuitively indicated to the user.

In embodiments of this application, a page style of the two-layer annular layout design on the collaborative connection interface 13 is coordinated and unified, and a visual effect is good. Interface interaction for the user to select a to-be-collaborated capability, implement a collaborative connection, and cancel the collaborative connection is fun and interesting, and effectively improves user experience.

In some embodiments, the electronic device 100 supports at least one collaborative capability, and an icon additionally displayed by the electronic device 100 is a capability badge of any one of the at least one capability (for example, the capability 1) of the electronic device 100. The user drags, by using a slide operation, the icon of the candidate device to approach the icon of the electronic device 100, or the icon of the electronic device 100 to approach the icon of the candidate device, so that the candidate device 200 can implement a collaborative connection to the capability 1 of the electronic device 100. After the collaborative connection succeeds, the candidate device 200 may invoke the capability 1 of the electronic device 100.

For example, as shown in FIG. 17A and FIG. 17B, the user taps the icon 301 of the electronic device 100, and the electronic device 100 may display a capability badge of at least one collaborative capability of the electronic device 100 around the icon 301. As shown in FIG. 17B to FIG. 17D, the user may select one or more additionally displayed capability badges for the icon 301. The user drags the icon of the candidate device 200 (for example, the icon 302 of the tablet computer) to the icon 301 by using a slide operation. In response to the slide operation, the electronic device 100 performs a collaborative connection procedure of the candidate device 200 for the capability 1 of the electronic device 100. After the collaborative connection succeeds, the electronic device 100 may switch a display state of the candidate device 200 to a collaborated state.

In an implementation, that the electronic device 100 performs a collaborative connection procedure of the candidate device 200 for the capability 1 of the electronic device 100 may include: The electronic device 100 sends a collaborative connection request 5 to the candidate device 200, where the collaborative connection request is used to request the candidate device 1 to perform a collaborative connection to the capability 1 of the electronic device 100, and the collaborative connection request 5 may carry a collaborative connection parameter of the capability 1 of the electronic device 100. The candidate device 200 may establish the collaborative connection to the capability 1 of the electronic device 100 based on the collaborative connection parameter, and send, to the electronic device 100, a collaborative connection response indicating that the collaborative connection succeeds.

In some embodiments, if the electronic device 100 is collaboratively connected to the capability 1 of the candidate device 200, the icon of the candidate device 200 on the collaborative connection interface is presented in a collaborated state 1. Alternatively, when the candidate device 200 is collaboratively connected to the capability 1 of the electronic device 100, the icon of the candidate device 200 on the collaborative connection interface is presented in a collaborated state 2. The collaborated state 1 is different from the collaborated state 2. For example, FIG. 19D shows the collaborated state 1 of the icon 302 of the tablet computer, and FIG. 19C shows the collaborated state 2 of the icon 302 of the tablet computer.

A software system of the electronic device 100 may use a layered architecture, an event-driven architecture, a microkernel architecture, a micro service architecture, or a cloud architecture. In an embodiment of this application, an Android system with a layered architecture is used as an example to describe a software structure of the electronic device 100. Certainly, in another operating system, functions implemented by the function modules need to be similar to those in this embodiment of this application.

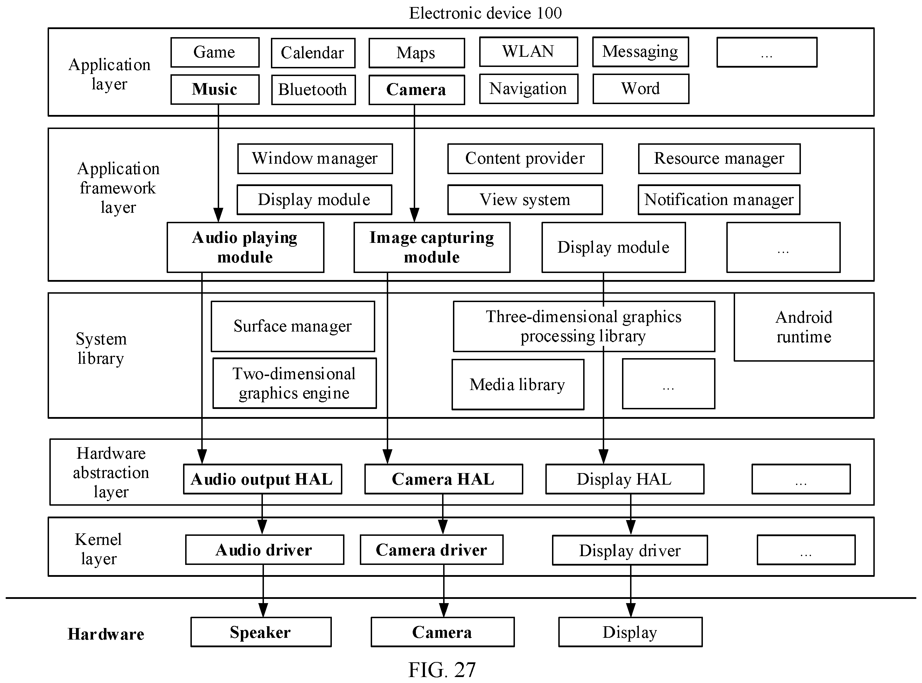

FIG. 27 is a block diagram of the software structure of the electronic device 100 according to an embodiment of this application.

In the layered architecture, software is divided into several layers, and each layer has a clear role and task. The layers communicate with each other through a software interface. In some embodiments, the Android system is divided into five layers: an application layer, an application framework layer, an Android runtime (Android runtime) and system library, a HAL (hardware abstraction layer, hardware abstraction layer), and a kernel layer from top to bottom.

The application layer may include a series of application packages.

As shown in FIG. 27, apps (application, application) such as Game, Camera, Navigation, Calendar, Gallery, Bluetooth, Music, Messaging, and Word may be installed at the application layer.

It should be noted that when running an application installed at the application layer, the electronic device 100 may need to invoke a specific capability. For example, when the music app plays music, an audio output function needs to be invoked, when the camera app takes photos, a camera needs to be invoked, and the Word app prints a Word document, a printing function needs to be invoked.

The application framework layer provides an application programming interface (application programming interface, API) and a programming framework for an application at the application layer. The application framework layer includes some predefined functions.

As shown in FIG. 27, the application framework layer may include a window manager, a display module, a content provider, a view system, a resource manager, a notification manager, and the like.

The window manager is configured to manage a window program. The window manager may obtain a size of a display, determine whether there is a status bar, lock a screen, take a screenshot, and the like.

The content provider is configured to store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including a notification icon of Messaging may include a text display view and a picture display view.

The resource manager provides various resources such as a localized string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, provide a message notification, and the like. The notification manager may alternatively be a notification that appears in a top status bar of the system in a form of a graph or a scroll bar text, for example, a notification of an application running on the background or a notification that appears on a screen in a form of a dialog window. For example, text information is displayed in the status bar, an announcement is given, the electronic device vibrates, or the indicator light blinks.

As shown in FIG. 27, in some embodiments, the application framework layer may further include an audio playing module and an image capturing module.

For example, the audio player may be a player such as AudioTrack or MediaPlayer. When the audio app needs to play an audio, the audio player may be invoked to input corresponding audio data into the audio player. For example, the audio app may input original audio data into the audio player, and the audio player performs processing such as parsing, decapsulation, or decoding on the original audio data, to obtain frames of PCM (pulse code modulation, pulse code modulation) data. Alternatively, the audio app may directly output PCM data to the audio player. The audio player is configured to invoke a speaker to output the audio.

When the camera app needs to capture an image, the camera app may invoke the image capturing module, and input an image capturing instruction to the image capturing module. The image capturing module is configured to invoke the camera to capture the image.

The Android runtime includes a kernel library and a virtual machine. The Android runtime is responsible for scheduling and management of the Android system.

The kernel library includes two parts: a function that needs to be invoked by a Java language and a kernel library of Android.

The application layer and the application framework layer run on the virtual machine. The virtual machine executes Java files of the application layer and the application framework layer as binary files. The virtual machine is configured to perform functions such as object lifecycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats such as MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

As shown in FIG. 27, the HAL (hardware abstraction layer, hardware abstraction layer) may be further included between the application framework layer and the kernel layer of the Android system. The HAL is responsible for interacting with each hardware device of the electronic device 100. The HAL hides implementation details of each hardware device, and may provide the Android system with an interface for invoking each hardware device. The HAL provides HALs corresponding to different hardware devices, such as an audio (Audio) HAL, a camera (Camera) HAL, and a display (Display) HAL.

The kernel layer is a layer between hardware and software. The kernel layer includes at least a display driver, a camera driver, an audio driver, and a sensor driver.

The audio playing module may invoke the audio HAL, and send audio data to the audio HAL, and the audio HAL invokes the audio driver at the kernel layer to send the audio data to an audio output device (for example, the speaker) of this device, to drive the audio output device of this device to play the audio data. The image capturing module may invoke the camera HAL, and send an image capturing instruction to the camera HAL, and the camera HAL invokes the camera driver at the kernel layer to drive the camera of the device to capture an image.

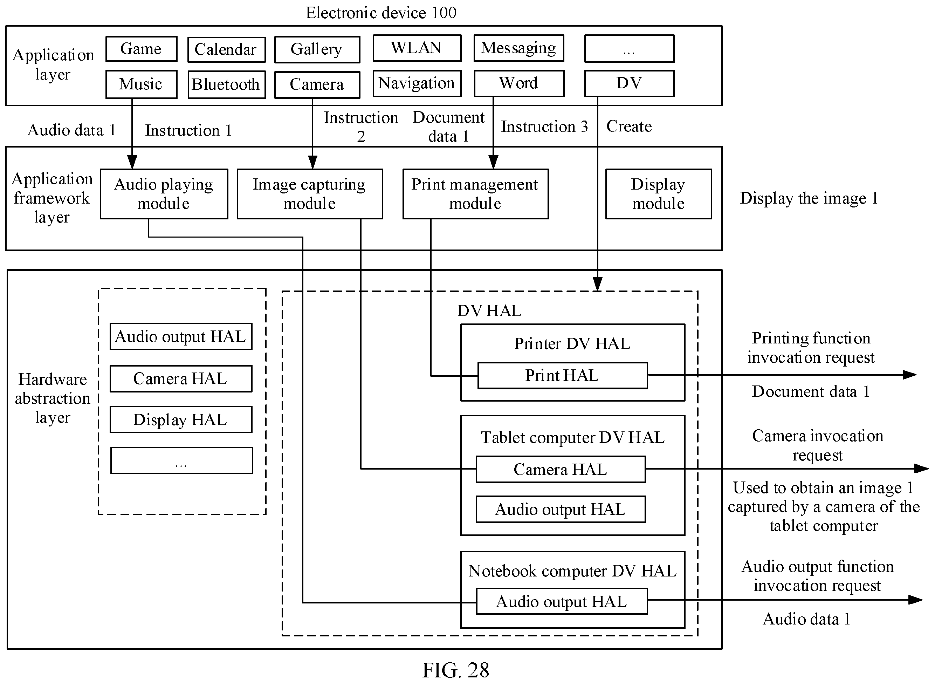

In some embodiments, as shown in FIG. 28, a device virtualization (DeviceVirtualization) app that is used to implement capability collaboration may be installed at the application layer of the electronic device 100, and may be subsequently referred to as a DV app. The DV app may be used as a system application and resident in the electronic device 100 for running. Alternatively, the capability collaboration implemented by the DV app may be resident in the electronic device 100 in a form of a system service. When the electronic device 100 is successfully collaboratively connected to the capability 1 (for example, the audio output function or the camera) of the candidate device 200, the electronic device 100 obtains a capability parameter of the capability 1 of the candidate device 200, and the DV app may create, in the electronic device 100 based on the capability parameter of the capability 1 of the candidate device 200, a virtual device corresponding to the candidate device 200, where the virtual device has the capability 1. In this way, the electronic device 100 may invoke the capability 1 of the candidate device 200 through the virtual device.

For example, the candidate device 200 is a tablet computer. The HAL layer shown in FIG. 28 further includes a tablet computer DV HAL created by the DV app. Refer to FIG. 6A to FIG. 6D. When the electronic device 100 detects that the electronic device 100 is successfully collaboratively connected to the camera of the tablet computer, the DV app obtains related information (for example, a collaborative capability, a device identifier, a device name, a device model, and a device type) of the tablet computer and a capability parameter of the camera of the tablet computer, and creates, at the HAL layer, an invocation interface (for ease of description, the invocation interface is referred to as a tablet computer DV HAL for short) of a virtual device corresponding to the tablet computer. The tablet computer DV HAL includes a camera HAL corresponding to the tablet computer. Refer to FIG. 14A to FIG. 14D. After the electronic device 100 is successfully collaboratively connected to the camera of the tablet computer, when the electronic device 100 detects that the electronic device 100 is further successfully collaboratively connected to another capability (for example, the audio output function) of the tablet computer, the DV app obtains a capability parameter (for example, a playing delay and an audio sampling rate) of the audio output function of the tablet computer, and creates, at the tablet computer DV HAL based on the capability parameter, an audio HAL corresponding to the tablet computer. After the electronic device 100 detects an input operation of invoking the camera of the tablet computer performed by the user, the camera app sends an instruction 2 to the image capturing module, where the instruction 2 instructs to invoke the camera of the tablet computer to capture an image. The image capturing module sends a camera invocation request to the tablet computer by invoking the camera HAL in the tablet computer DV HAL.

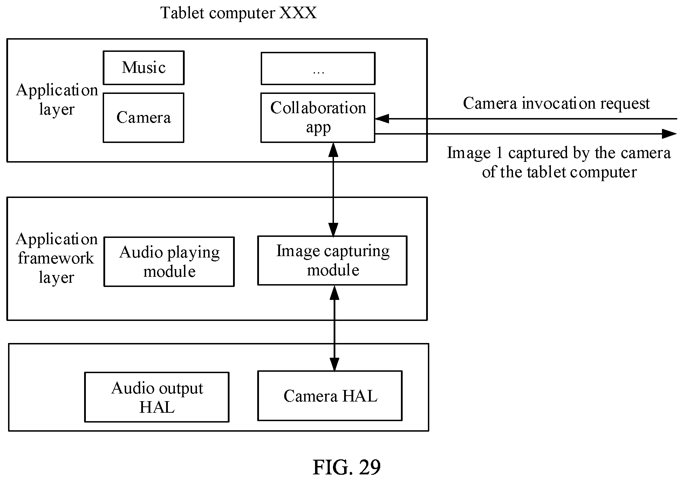

Refer to FIG. 29. A collaboration app used to implement capability collaboration may be installed at an application layer of the tablet computer. When establishing the collaborative connection to the camera of the tablet computer, the electronic device 100 may obtain the capability parameter of the camera of the tablet computer from the collaboration app of the tablet computer. After the collaborative connection succeeds, the collaboration app may receive the camera invocation request sent by the tablet computer. In response to the invocation request, the collaboration app may send an instruction to an image capturing module at an application framework layer of the tablet computer, to instruct the image capturing module to capture an image by invoking the camera HAL at the HAL layer of the tablet computer. The camera HAL may invoke a camera driver to drive the camera of the tablet computer to capture an image 1. The collaboration app obtains the image 1, and sends the image 1 to the camera app of the electronic device 100. The camera app may display the image 1 in an image preview area of the photographing screen 15.

For example, the candidate device 200 is a notebook computer YYY, and the HAL layer shown in FIG. 28 further includes a notebook computer DV HAL created by the DV app. Refer to FIG. 16A to FIG. 16C. When the electronic device 100 detects that the electronic device 100 is successfully collaboratively connected to an audio output function of the notebook computer, the DV app obtains related information of the notebook computer and a capability parameter of the audio output function of the notebook computer, and creates, at the HAL layer based on the related information of the notebook computer and the capability parameter of the audio output function of the notebook computer, an invocation interface (for ease of description, the invocation interface is referred to as a notebook computer DV HAL for short) of a virtual device corresponding to the notebook computer. The notebook computer DV HAL includes an audio HAL generated based on the capability parameter of the audio output function. After the electronic device 100 detects an input operation of invoking the audio output function of the notebook computer performed by the user, the music app sends an instruction 1 and audio data 1 to an audio playing module, where the instruction 1 instructs to invoke the audio output function of the notebook computer to play the audio data 1; and the audio playing module sends an audio output function invocation request to the notebook computer by invoking the audio HAL at the notebook computer DV HAL, where the invocation request includes the audio data 1.

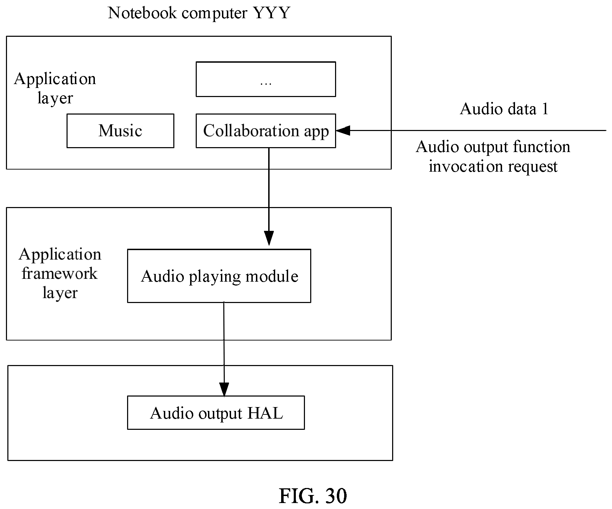

Refer to FIG. 30. A collaboration app may also be installed at an application layer of the notebook computer. When establishing the collaborative connection to the audio output function of the notebook computer, the electronic device 100 may obtain the capability parameter of the audio output function from the collaboration app of the notebook computer. After the collaborative connection succeeds, the collaboration app may receive the audio output function invocation request sent by the electronic device 100. In response to the invocation request, the collaboration app may send an instruction to the audio playing module at an application framework layer of the notebook computer, to instruct the audio playing module to play the audio data 1 by invoking the audio HAL at the HAL layer of the notebook computer. The camera HAL may invoke an audio driver, to drive a speaker of the tablet computer to play the audio data 1.

For example, the candidate device 200 is a printer EEE. The HAL layer shown in FIG. 28 further includes a printer DV HAL created by the DV app. When the electronic device 100 detects that the electronic device 100 is successfully collaboratively connected to a print function of the printer, the DV app obtains related information of the printer and a capability parameter of the print function, and creates, at the HAL layer, an invocation interface (for ease of description, the invocation interface is referred to as a printer DV HAL for short) of a virtual device corresponding to the printer. The printer DV HAL includes a print HAL generated based on the capability parameter of the print function. The application framework layer of the electronic device 100 may further include a print management module. After the electronic device 100 detects an input operation of invoking the print function of the printer performed by the user, the Word app sends an instruction 3 and document data 1 to the print management module, where the instruction 3 instructs to invoke the print function of the printer to print the document data 1; and the print management module sends a printing function invocation request to the printer by invoking the print HAL at the printer DV HAL, where the invocation request includes the document data 1.

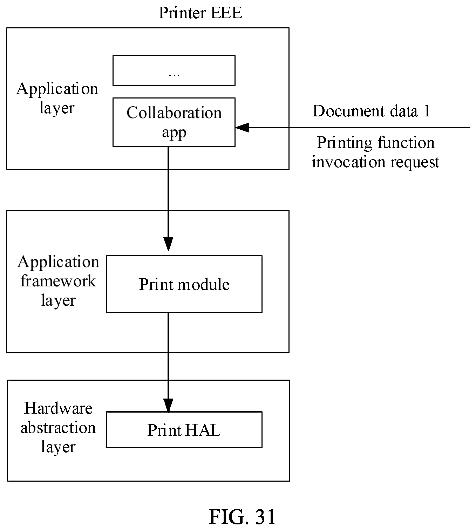

Refer to FIG. 31. A collaboration app may also be installed at an application layer of the printer. When establishing the collaborative connection to the print function of the printer, the electronic device 100 may obtain the capability parameter of the print function from the collaboration app of the printer. After the collaborative connection succeeds, the collaboration app may receive the printing function invocation request sent by the electronic device 100. In response to the invocation request, the collaboration app may send an instruction to the print management module at an application framework layer of the printer, to instruct the print management module to print the document data 1 by invoking the print HAL at the HAL layer of the printer.

Based on embodiments described in FIG. 1A to FIG. 31, the following describes a device collaboration method provided in this application.

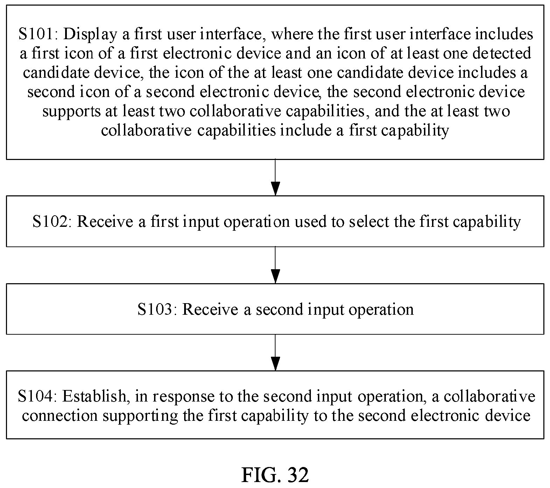

For example, FIG. 32 is a schematic flowchart of the device collaboration method according to an embodiment of this application. The method is applied to a first electronic device, and the method includes the following steps.

S101: Display a first user interface, where the first user interface includes a first icon of the first electronic device and an icon of at least one detected candidate device, the icon of the at least one candidate device includes a second icon of a second electronic device, the second electronic device supports at least two collaborative capabilities, and the at least two collaborative capabilities include a first capability.

The first electronic device may be the electronic device 100 described in the foregoing embodiments, and the second electronic device may be the candidate device 200 (for example, a tablet computer) described in the foregoing embodiments. The first user interface may be the user interface 13 described in the foregoing embodiments, the first icon may be the icon 301 on the user interface 13, and the second icon may be the icon 302 on the user interface 13.

For example, the second electronic device is the tablet computer described in the foregoing embodiments, and collaborative capabilities of the tablet computer include supporting a camera, an audio input function, and an audio output function. The first capability may be any one of the foregoing collaborative capabilities of the tablet computer.

S102: Receive a first input operation used to select the first capability.

S103: Receive a second input operation.

S104: Establish, in response to the second input operation, a collaborative connection supporting the first capability to the second electronic device.

In some embodiments, the first user interface further includes capability badges corresponding to the collaborative capabilities supported by the second electronic device, the capability badges corresponding to the collaborative capabilities supported by the second electronic device include a first capability badge corresponding to the first capability, and the first input operation is performed on the first capability badge. In an implementation, on the first user interface, the capability badges corresponding to the collaborative capabilities supported by the second electronic device are displayed in a surrounding area close to the second icon.

For example, refer to FIG. 8B, FIG. 8E, FIG. 9A, and FIG. 12B. Capability badges corresponding to the collaborative capabilities of the tablet computer are displayed in a surrounding area of the icon 302 on the user interface 13. As shown in FIG. 8B, FIG. 8E, and FIG. 9A, the first capability badge may be the capability badge 502 corresponding to the audio input function, and the first input operation used to select the audio input function is performed on the capability badge 502.

In some embodiments, before the receiving a first input operation used to select the first capability, the method further includes: receiving a third input operation performed on the second icon; and displaying, on the first user interface in response to the third input operation, the capability badges corresponding to the collaborative capabilities supported by the second electronic device.

For example, refer to the related descriptions of FIG. 8A to FIG. 8G and FIG. 12A to FIG. 12F. As shown in FIG. 8A and FIG. 12A, the third input operation may include an input operation (for example, a tap operation) performed on the icon 302. It may be understood that, after a user taps the icon 302 of the tablet computer, the electronic device 100 displays, on the user interface 13, the capability badges corresponding to the collaborative capabilities of the tablet computer.

In some embodiments, the method further includes: additionally displaying, in response to the first input operation, the first capability badge on the second icon.

For example, refer to the related descriptions of FIG. 8A to FIG. 8G. After the user selects the capability badge 502, that is, after the electronic device 100 receives the first input operation performed on the capability badge 502, the capability badge 502 is additionally displayed on the icon 302. Refer to the related descriptions of FIG. 12A to FIG. 12D. After the user selects the capability badge 501 (or the capability badge 503), that is, after the electronic device 100 receives the first input operation performed on the capability badge 501 (or the capability badge 503), the capability badge 501 (or the capability badge 503) is additionally displayed on the icon 302.

In some embodiments, in response to the third input operation, the capability badges corresponding to the collaborative capabilities supported by the second electronic device are displayed in a first area; the at least two collaborative capabilities further include a second capability; and when the third input operation performed on the second icon is received, a second capability badge corresponding to the second capability is additionally displayed on the second icon. After the receiving a third input operation performed on the second icon, the method further includes: receiving a fourth input operation performed on the second capability badge in the first area; and stopping, in response to the fourth input operation, additional displaying of the second capability badge on the second icon.

For example, refer to the related descriptions of FIG. 12A to FIG. 12F. As shown in FIG. 12A, when the third input operation performed on the icon 302 is received, the capability badge 502 is additionally displayed on the icon 302. As shown in FIG. 12D, the fourth input operation (for example, a touch operation) performed on the capability badge 502 in the first area (for example, the surrounding area of the icon 302) is received. As shown in FIG. 12E, in response to the fourth input operation, the capability badge 502 is stopped from being additionally displayed on the icon 302.

In some embodiments, in the capability badges displayed around the second icon, a capability badge that has been additionally displayed on the second icon is presented in a selected state, and a capability badge that is not additionally displayed on the second icon is presented in an unselected state. The method further includes: switching, in response to the first input operation, the first capability badge displayed around the second icon from an unselected state to a selected state. The method further includes: switching, in response to a fourth input operation, the second capability badge displayed around the second icon from a selected state to an unselected state.

For example, refer to the related descriptions of FIG. 12A to FIG. 12F. As shown in FIG. 12B to FIG. 12E, a capability badge that is additionally displayed on the icon 302 is presented in a selected state, and a capability badge that is not additionally displayed on the icon 302 is presented in an unselected state. As shown in FIG. 12B and FIG. 12C, in response to the first input operation performed on the capability badge 501, the capability badge 501 displayed around the icon 302 is switched from an unselected state to a selected state. As shown in FIG. 12D and FIG. 12E, in response to the fourth input operation performed on the capability badge 502, the capability badge 502 displayed around the icon 302 is switched from a selected state to an unselected state.

In some embodiments, the first input operation includes an operation performed on the first capability badge; and the second input operation includes: dragging the second icon to the first icon until the second icon touches an area in which the first icon is located; or dragging the second icon to the first icon until a distance between the second icon and the first icon is less than or equal to a preset threshold; or dragging the first icon to the second icon until the first icon touches an area in which the second icon is located; or drag the first icon to the second icon until a distance between the first icon and the second icon is less than or equal to a preset threshold.

For example, refer to the related descriptions of FIG. 6A to FIG. 6D. The second input operation may include: dragging the icon 302 to the icon 301 until the icon 302 touches an area in which the icon 301 is located; or dragging the icon 302 to the icon 301 until a distance between the icon 302 and the icon 301 is less than or equal to the preset threshold. For example, refer to the related descriptions of FIG. 10A to FIG. 10D. The second input operation may include: dragging the icon 301 to the icon 302 until the icon 301 touches an area in which the icon 302 is located; or dragging the icon 301 to the icon 302 until a distance between the icon 302 and the icon 301 is less than or equal to the preset threshold. For example, the preset threshold is a length of five pixels.

In some embodiments, the second input operation is performed on the first capability badge.

In some embodiments, the first input operation includes an operation performed on the first capability badge; and the second input operation includes: dragging the first capability badge to the first icon until the first capability badge touches an area in which the first icon is located; or dragging the first capability badge to the first icon until a distance between the first capability badge and the first icon is less than or equal to a preset threshold. For example, the first capability badge is the capability badge 502.

For example, refer to the related descriptions of FIG. 9A to FIG. 9C. Both the first input operation and the second input operation are performed on the capability badge 502. For example, the first input operation includes a touch operation performed on the capability badge 502; and the second input operation includes: dragging the capability badge 502 to the icon 301 until the capability badge 502 touches an area in which the icon 301 is located; or dragging the capability badge 502 to the icon 301 until a distance between the capability badge 502 and the icon 301 is less than or equal to the preset threshold. For example, the preset threshold is a length of five pixels.

In some embodiments, the at least two collaborative capabilities further include a second capability; and after the collaborative connection supporting the first capability is successfully established to the second electronic device, the method further includes: receiving a fifth input operation performed on the second icon; displaying, in response to the fifth input operation, the capability badges corresponding to the collaborative capabilities supported by the second electronic device, where the capability badges corresponding to the collaborative capabilities supported by the second electronic device include the first capability badge corresponding to the first capability and a second capability badge corresponding to the second capability; receiving a sixth input operation performed on the second capability badge; and establishing, in response to the sixth input operation, a collaborative connection supporting the second capability to the second electronic device.

For example, refer to the related descriptions of FIG. 14A to FIG. 14E. As shown in FIG. 14A, after establishing the collaborative connection supporting the audio input function (namely, the first capability) to the candidate device 200 (for example, the tablet computer), the electronic device 100 receives the fifth input operation (for example, a touch operation) performed on the icon 302. As shown in FIG. 14B, in response to the fifth input operation, the capability badges corresponding to the collaborative capabilities supported by the tablet computer are displayed, for example, the capability badge 501 corresponding to the camera (namely, the second capability badge corresponding to the second capability). As shown in FIG. 14B, the sixth input operation (for example, a touch operation) performed on the capability badge 501 is received. As shown in FIG. 14C and FIG. 14D, in response to the sixth input operation, a collaborative connection supporting the camera is established to the tablet computer.

In some embodiments, the at least two collaborative capabilities further include a second capability; and the establishing, in response to the second input operation, a collaborative connection supporting the first capability to the second electronic device specifically includes: establishing, in response to the second input operation, a collaborative connection supporting the first capability and the second capability to the second electronic device.

For example, refer to the related descriptions of FIG. 13A to FIG. 13D. The collaborative capabilities of the tablet computer include the camera and the audio output function (namely, the first capability and the second capability). In response to the second input operation performed on the icon 302 (for example, dragging the icon 301 to the icon 302), the electronic device 100 establishes a collaborative connection supporting the camera and the audio output function to the tablet computer.

In some embodiments, when the second input operation is received, the first capability badge corresponding to the first capability and a second capability badge corresponding to the second capability are additionally displayed on the second icon.

For example, refer to the related descriptions of FIG. 13A to FIG. 13D. When the second input operation (for example, dragging the icon 301 to the icon 302) performed on the icon 302 is received, the capability badge 501 corresponding to the camera and the capability badge 503 corresponding to the audio output function are additionally displayed on the icon 302.

In some embodiments, after the collaborative connection supporting the first capability and the second capability is successfully established to the second electronic device, the method further includes: receiving a seventh input operation performed on the second icon; and displaying, in response to the seventh input operation, the capability badges corresponding to the collaborative capabilities supported by the second electronic device, where the capability badges corresponding to the collaborative capabilities supported by the second electronic device include the first capability badge corresponding to the first capability and the second capability badge corresponding to the second capability; receiving an eighth input operation performed on the first capability badge; and canceling, in response to the eighth input operation, the collaborative connection supporting the first capability to the second electronic device.

For example, refer to the related descriptions of FIG. 15A to FIG. 15D. As shown in FIG. 15A, after the electronic device 100 establishes the collaborative connection supporting the camera and the audio input function to the tablet computer, the icon 302 may receive the seventh input operation (for example, a touch operation) of the user. As shown in FIG. 15B, in response to the seventh input operation, the capability badges corresponding to the collaborative capabilities supported by the tablet computer are displayed on the user interface 13, including the capability badge 501 corresponding to the collaborated camera and the capability badge 502 corresponding to the collaborated audio input function. As shown in FIG. 15B, the eighth input operation (for example, a touch operation) performed on the capability badge 501 is received. As shown in FIG. 15C and FIG. 15D, in response to the eighth input operation, the collaborative connection supporting the camera to the tablet computer is canceled.

In some embodiments, in response to the seventh input operation, in the capability badges displayed around the second icon, capability badges (namely, the first capability badge and the second capability badge) corresponding to capabilities supported by the collaborative connection established to the second electronic device are presented in a selected state, and a capability badge corresponding to a capability that is not supported by the collaborative connection established to the second electronic device is presented in an unselected state.

For example, refer to the related descriptions of FIG. 15A to FIG. 15D. As shown in FIG. 15B, after the electronic device 100 establishes the collaborative connection supporting the camera and the audio input function to the tablet computer, in the capability badges displayed around the icon 302 in the collaborated state, the capability badge 501 corresponding to the collaborated camera and the capability badge 502 corresponding to the collaborated audio input function are presented in a selected state, and the capability badge 503 corresponding to the uncollaborated audio output function is presented in an unselected state.

In some embodiments, after the collaborative connection supporting the first capability and the second capability is successfully established to the second electronic device, the method further includes: receiving a tenth input operation performed on the second icon; and canceling, in response to the tenth input operation, a collaborative connection to the second electronic device for any capability. For example, the tenth input operation is the cancellation operation 1 described in the foregoing embodiments.

For example, refer to the related descriptions of FIG. 11A to FIG. 11D. As shown in FIG. 11B, after establishing the collaborative connection to the tablet computer, the electronic device 100 receives the tenth input operation (for example, an input operation of dragging the icon 302 away from the icon 301) performed on the icon 301; and cancels, in response to the tenth input operation, a collaborative connection to the tablet computer for any capability.

In some embodiments, the first user interface further includes capability badges corresponding to at least two capabilities, the at least two capabilities include all collaborative capabilities supported by the at least one candidate device, the capability badges corresponding to the at least two capabilities include a first capability badge corresponding to the first capability, and the first input operation is performed on the first capability badge.

For example, refer to FIG. 17B and FIG. 19F. Capability badges corresponding to all collaborative capabilities supported by all detected candidate devices are displayed around the icon 301 on the user interface 13. The first capability badge may be the capability badge 503 corresponding to the audio output function, and the first input operation used to select the audio output function is performed on the capability badge 503.

In some embodiments, before the receiving a first input operation used to select the first capability, the method further includes: receiving a ninth input operation performed on the first icon; and displaying, on the first user interface in response to the ninth input operation, the capability badges corresponding to the at least two capabilities. In an implementation, on the first user interface, the capability badges corresponding to the collaborative capabilities supported by the second electronic device are displayed in a surrounding area close to the first icon.

For example, refer to the related descriptions of FIG. 17A and FIG. 17B. After receiving the ninth input operation (for example, a tap operation) performed on the icon 301, the electronic device 100 displays, around the icon 301, the capability badges corresponding to all the collaborative capabilities supported by all the detected candidate devices.

In some embodiments, the method further includes: additionally displaying, in response to the first input operation, the first capability badge on the first icon. For example, the first capability badge is the capability badge 503 corresponding to the audio output function.

For example, refer to the related descriptions of FIG. 17A to FIG. 17D. After the user selects the capability badge 503, that is, after the electronic device 100 receives the first input operation performed on the capability badge 503, the capability badge 503 is additionally displayed on the icon 301.

In some embodiments, the method further includes: stopping displaying, on the first user interface in response to the first input operation, an icon of a candidate device whose first capability cannot be collaborated with.

For example, refer to the related descriptions of FIG. 17B and FIG. 17E. After the user selects the capability badge 503 corresponding to the audio output function, the electronic device 100 stops displaying, on the user interface 13, an icon of a candidate device that does not support the collaborated audio output function.

In some embodiments, the method further includes: when the collaborative connection supporting the first capability is successfully established to the second electronic device, switching the second icon from an uncollaborated state to a collaborated state, where the first capability badge corresponding to the first capability is additionally displayed on the second icon; or when the collaborative connection supporting the first capability fails to be established to the second electronic device, keeping the second icon in an uncollaborated state.

For example, refer to the related descriptions of FIG. 6A to FIG. 6D and FIG. 10A to FIG. 10F. When the collaborative connection supporting the camera is successfully established to the tablet computer, the icon 302 is switched from the uncollaborated state to the collaborated state, and the capability badge 501 corresponding to the camera is additionally displayed on the icon 302. For example, refer to the related descriptions of FIG. 18A and FIG. 18B and FIG. 19A to FIG. 19D. When the collaborative connection supporting the audio output function is successfully established to the tablet computer, the icon 302 is switched from the uncollaborated state to the collaborated state, and the capability badge 503 corresponding to the audio output function is additionally displayed on the icon 302.

In some embodiments, before the second input operation is received, the first icon is displayed in a first preset area, and the icon of the at least one candidate device is displayed in a second preset area. The uncollaborated state of the second icon is presented as that the second icon is displayed in the second preset area in a first state. The collaborated state of the second icon is presented as that the second icon is attached to the first icon in a second state and displayed in the first preset area. Alternatively, the collaborated state of the second icon is presented as that the second icon is displayed in the second preset area in a second state. For example, the first state and the second state refer to different icon colors.

For example, refer to the related descriptions in the foregoing embodiments. As shown in FIG. 3C, before the collaborative connection is performed, the icon 301 is displayed in the first preset area (for example, the preset area 1), and the icon of the candidate device is displayed in the second preset area (for example, the preset area 2). As shown in FIG. 3C, the uncollaborated state of the icon 302 is presented as that the icon is displayed (for example, a light-color icon) in the preset area 2 in the first state. As shown in FIG. 6D, FIG. 10D, FIG. 18B, and FIG. 19D, the collaborated state of the icon 302 is presented as that the icon is attached to the icon 301 in the second state (for example, a dark-color icon) and displayed in the preset area 1. Alternatively, as shown in FIG. 10F and FIG. 19C, the collaborated state of the icon 302 is presented as that the icon is displayed in the preset area 2 in the second state (for example, a dark-color icon). The collaborated state, the uncollaborated state, the first state, and the second state are not specifically limited in embodiments of this application.

In some embodiments, after the first electronic device performs the step of "establishing a collaborative connection supporting the first capability and the second capability to the second electronic device", when the first electronic device successfully establishes the collaborative connection supporting the first capability and the second capability to the second electronic device, the second icon is switched from the uncollaborated state to the collaborated state, and the first capability badge and the second capability badge are additionally displayed on the second icon. When the collaborative connection supporting the first capability is successfully established to the second electronic device, and the collaborative connection does not support the second capability, the second icon is switched from the uncollaborated state to the collaborated state, and the first capability badge is additionally displayed on the second icon, but the second capability badge is not additionally displayed.

For example, refer to the related descriptions of FIG. 13A to FIG. 13J. The electronic device 100 establishes the collaborative connection supporting the camera and the audio output function to the tablet computer. As shown in FIG. 13D, when the collaborative connection supporting the camera and the audio output function is successfully established to the tablet computer, the icon 302 is switched from the uncollaborated state to the collaborated state, and the capability badge 501 corresponding to the camera and the capability badge 503 corresponding to the audio output function are additionally displayed on the icon 302. As shown in FIG. 13G, when the collaborative connection supporting the camera is successfully established to the tablet computer, and the collaborative connection does not support the audio output function, the icon 302 is switched from the uncollaborated state to the collaborated state, and the capability badge 501 is additionally displayed on the icon 302, but the capability badge 503 is not additionally displayed. As shown in FIG. 13J, when the collaborative connection to the tablet computer fails to be established, the icon 302 remains in the uncollaborated state.

This application further provides a device collaboration method, applied to a first electronic device. The method includes: displaying a first user interface, where the first user interface includes a first icon of the first electronic device and an icon of at least one detected candidate device, the icon of the at least one candidate device includes a second icon of a second electronic device, the second electronic device supports at least two collaborative capabilities, and the at least two collaborative capabilities include a first capability; receiving an eleventh input operation; and establishing, in response to the eleventh input operation and based on a first application recently run in a foreground and/or a collaboration state of the second electronic device, a collaborative connection supporting the first capability to the second electronic device.

The first electronic device may be the electronic device 100 described in the foregoing embodiments, and the second electronic device may be the candidate device 200 (for example, a tablet computer) described in the foregoing embodiments. The first user interface may be the user interface 13 described in the foregoing embodiments, the first icon may be the icon 301 on the user interface 13, and the second icon may be the icon 302 on the user interface 13.

The first capability may be any one of the foregoing collaborative capabilities of the tablet computer.

For example, refer to the related descriptions of FIG. 25A to FIG. 25D. As shown in FIG. 25B, the eleventh input operation may include an input operation of dragging the icon 302 to the icon 301.

In some embodiments, the collaboration state of the second electronic device includes one or more of the following: a quantity of collaborative connections of each capability that is collaboratively connected between the first electronic device and the second electronic device, a capability of a recent collaborative connection between the first electronic device and the second electronic device, and a priority of each collaborative capability of the second electronic device. The collaboration state of the second electronic device is not specifically limited in embodiments of this application.

In some embodiments, the establishing, based on a first application recently run in a foreground and/or a collaboration state of the second electronic device, a collaborative connection to the first capability of the second electronic device includes: when the collaborative capabilities of the second electronic device include the first capability required by the first application, establishing the collaborative connection for the first capability of the second electronic device.

For example, refer to the related descriptions of FIG. 25A to FIG. 25D. The first application is a music APP, and the collaborative capabilities of the tablet computer include an audio output capability required by the music APP. The electronic device 100 establishes a collaborative connection supporting the audio output capability to the tablet computer.

In some embodiments, the establishing, based on a first application recently run in a foreground and/or a collaboration state of the second electronic device, a collaborative connection to the first capability of the second electronic device includes: establishing a collaborative connection to a first capability that has a largest quantity of collaborative connections in capabilities that have been collaboratively connected to the second electronic device; or performing a collaborative connection to a first capability that is recently collaboratively connected to the second electronic device; or performing a collaborative connection to a first capability with a highest priority in the collaborative capabilities of the second electronic device.

Implementations of this application may be randomly combined to achieve different technical effects.

All or some of the foregoing embodiments may be implemented through software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the processes of the methods in embodiments may be implemented by a computer program instructing related hardware. The program may be stored in a computer-readable storage medium. When the program runs, the processes of the methods in embodiments are performed. The storage medium includes any medium that can store program code, such as a ROM, a random access memory RAM, a magnetic disk, or an optical disc.

Further embodiments of the present invention are provided in the following. It should be noted that the numbering used in the following section does not necessarily need to comply with the numbering used in the previous sections.

Embodiment 1. A device collaboration method, applied to a first electronic device, wherein the method comprises:
displaying a first user interface, wherein the first user interface comprises a first icon of the first electronic device and an icon of at least one detected candidate device, the icon of the at least one candidate device comprises a second icon of a second electronic device, the second electronic device supports at least two collaborative capabilities, and the at least two collaborative capabilities comprise a first capability;
receiving a first input operation used to select the first capability;
receiving a second input operation; and
establishing, in response to the second input operation, a collaborative connection supporting the first capability to the second electronic device.

Embodiment 2. The method according to embodiment 1, wherein the first user interface further comprises capability badges corresponding to the collaborative capabilities supported by the second electronic device, the capability badges corresponding to the collaborative capabilities supported by the second electronic device comprise a first capability badge corresponding to the first capability, and the first input operation is performed on the first capability badge.

Embodiment 3. The method according to embodiment 2, wherein before the receiving a first input operation used to select the first capability, the method further comprises:
receiving a third input operation performed on the second icon; and
displaying, on the first user interface in response to the third input operation, the capability badges corresponding to the collaborative capabilities supported by the second electronic device.

Embodiment 4. The method according to embodiment 2, wherein the method further comprises:
additionally displaying, in response to the first input operation, the first capability badge on the second icon.

Embodiment 5. The method according to embodiment 4, wherein
the first input operation comprises an operation performed on the first capability badge; and
the second input operation comprises:
   dragging the second icon to the first icon until the second icon touches an area in which the first icon is located; or
   dragging the second icon to the first icon until a distance between the second icon and the first icon is less than or equal to a preset threshold; or
   dragging the first icon to the second icon until the first icon touches an area in which the second icon is located; or
   dragging the first icon to the second icon until a distance between the first icon and the second icon is less than or equal to a preset threshold.

Embodiment 6. The method according to embodiment 2, wherein the second input operation is performed on the first capability badge.

Embodiment 7. The method according to embodiment 6, wherein
the first input operation comprises an operation performed on the first capability badge; and
the second input operation comprises: dragging the first capability badge to the first icon until the first capability badge touches an area in which the first icon is located; or dragging the first capability badge to the first icon until a distance between the first capability badge and the first icon is less than or equal to a preset threshold.

Embodiment 8. The method according to any one of embodiments 1 to 7, wherein the at least two collaborative capabilities further comprise a second capability; and after the collaborative connection supporting the first capability is successfully established to the second electronic device, the method further comprises:
receiving a fifth input operation performed on the second icon;
displaying, in response to the fifth input operation, the capability badges corresponding to the collaborative capabilities supported by the second electronic device, wherein the capability badges corresponding to the collaborative capabilities supported by the second electronic device comprise the first capability badge corresponding to the first capability and a second capability badge corresponding to the second capability;
receiving a sixth input operation performed on the second capability badge; and
establishing, in response to the sixth input operation, a collaborative connection supporting the second capability to the second electronic device.
Embodiment 9. The method according to any one of embodiments 1 to 5, wherein the at least two collaborative capabilities further comprise a second capability; and
the establishing, in response to the second input operation, a collaborative connection supporting the first capability to the second electronic device specifically comprises:
   establishing, in response to the second input operation, a collaborative connection supporting the first capability and the second capability to the second electronic device.

Embodiment 10. The method according to embodiment 9, wherein when the second input operation is received, the first capability badge corresponding to the first capability and a second capability badge corresponding to the second capability are additionally displayed on the second icon.

Embodiment 11. The method according to embodiment 8 or 9, wherein after the collaborative connection supporting the first capability and the second capability is successfully established to the second electronic device, the method further comprises:
receiving a seventh input operation performed on the second icon;
displaying, in response to the seventh input operation, the capability badges corresponding to the collaborative capabilities supported by the second electronic device, wherein the capability badges corresponding to the collaborative capabilities supported by the second electronic device comprise the first capability badge corresponding to the first capability and the second capability badge corresponding to the second capability;
receiving an eighth input operation performed on the first capability badge; and
canceling, in response to the eighth input operation, the collaborative connection supporting the first capability to the second electronic device.

Embodiment 12. The method according to embodiment 1, wherein the first user interface further comprises capability badges corresponding to at least two capabilities, the at least two capabilities comprise all collaborative capabilities supported by the at least one candidate device, the capability badges corresponding to the at least two capabilities comprise a first capability badge corresponding to the first capability, and the first input operation is performed on the first capability badge.

Embodiment 13. The method according to embodiment 12, wherein before the receiving a first input operation used to select the first capability, the method further comprises:
receiving a ninth input operation performed on the first icon; and
displaying, on the first user interface in response to the ninth input operation, the capability badges corresponding to the at least two capabilities.

Embodiment 14. The method according to embodiment 12, wherein the method further comprises:
additionally displaying, in response to the first input operation, the first capability badge on the first icon.

Embodiment 15. The method according to any one of embodiments 12 to 14, wherein the method further comprises:
stopping displaying, on the first user interface in response to the first input operation, an icon of a candidate device whose first capability cannot be collaborated with.

Embodiment 16. An electronic device, comprising a memory and a processor, wherein the memory and the processor are electrically coupled, the memory is configured to store program instructions, and the processor is configured to invoke all or a part of the program instructions stored in the memory, so that the electronic device performs the method according to any one of embodiments 1 to 15.

Embodiment 17. A computer storage medium, comprising computer instructions, wherein when the computer instructions are run on an electronic device, the electronic device is enabled to perform the method according to any one of embodiments 1 to 15.

In summary, the foregoing descriptions are merely embodiments of the technical solutions of the present invention, but are not intended to limit the protection scope of the present invention. Any modification, equivalent replacement, or improvement made according to the disclosure of the present invention shall fall within the protection scope of the present invention.

## Claims

1. A device collaboration method, applied to a first electronic device, wherein the method comprises:
displaying a first user interface, wherein the first user interface comprises a first icon of the first electronic device and an icon of at least one detected candidate device, the icon of the at least one candidate device comprises a second icon of a second electronic device, the second electronic device supports at least two collaborative capabilities, and the at least two collaborative capabilities comprise a first capability;
receiving a first input operation used to select the first capability;
receiving a second input operation; and
establishing, in response to the second input operation, a collaborative connection supporting the first capability to the second electronic device.

2. The method according to claim 1, wherein the first user interface further comprises capability badges corresponding to the collaborative capabilities supported by the second electronic device, the capability badges corresponding to the collaborative capabilities supported by the second electronic device comprise a first capability badge corresponding to the first capability, and the first input operation is performed on the first capability badge.

3. The method according to claim 2, wherein before the receiving a first input operation used to select the first capability, the method further comprises:
receiving a third input operation performed on the second icon; and
displaying, on the first user interface in response to the third input operation, the capability badges corresponding to the collaborative capabilities supported by the second electronic device.

4. The method according to claim 2, wherein the method further comprises:
additionally displaying, in response to the first input operation, the first capability badge on the second icon.

5. The method according to claim 4, wherein
the first input operation comprises an operation performed on the first capability badge; and
the second input operation comprises:
dragging the second icon to the first icon until the second icon touches an area in which the first icon is located; or
dragging the second icon to the first icon until a distance between the second icon and the first icon is less than or equal to a preset threshold; or
dragging the first icon to the second icon until the first icon touches an area in which the second icon is located; or
dragging the first icon to the second icon until a distance between the first icon and the second icon is less than or equal to a preset threshold.

6. The method according to claim 2, wherein the second input operation is performed on the first capability badge.

7. The method according to claim 6, wherein
the first input operation comprises an operation performed on the first capability badge; and
the second input operation comprises: dragging the first capability badge to the first icon until the first capability badge touches an area in which the first icon is located; or dragging the first capability badge to the first icon until a distance between the first capability badge and the first icon is less than or equal to a preset threshold.

8. The method according to any one of claims 1 to 7, wherein the at least two collaborative capabilities further comprise a second capability; and after the collaborative connection supporting the first capability is successfully established to the second electronic device, the method further comprises:
receiving a fifth input operation performed on the second icon;
displaying, in response to the fifth input operation, the capability badges corresponding to the collaborative capabilities supported by the second electronic device, wherein the capability badges corresponding to the collaborative capabilities supported by the second electronic device comprise the first capability badge corresponding to the first capability and a second capability badge corresponding to the second capability;
receiving a sixth input operation performed on the second capability badge; and
establishing, in response to the sixth input operation, a collaborative connection supporting the second capability to the second electronic device.

9. The method according to any one of claims 1 to 5, wherein the at least two collaborative capabilities further comprise a second capability; and
the establishing, in response to the second input operation, a collaborative connection supporting the first capability to the second electronic device specifically comprises:
establishing, in response to the second input operation, a collaborative connection supporting the first capability and the second capability to the second electronic device.

10. The method according to claim 9, wherein when the second input operation is received, the first capability badge corresponding to the first capability and a second capability badge corresponding to the second capability are additionally displayed on the second icon.

11. The method according to claim 8 or 9, wherein after the collaborative connection supporting the first capability and the second capability is successfully established to the second electronic device, the method further comprises:
receiving a seventh input operation performed on the second icon;
displaying, in response to the seventh input operation, the capability badges corresponding to the collaborative capabilities supported by the second electronic device, wherein the capability badges corresponding to the collaborative capabilities supported by the second electronic device comprise the first capability badge corresponding to the first capability and the second capability badge corresponding to the second capability;
receiving an eighth input operation performed on the first capability badge; and
canceling, in response to the eighth input operation, the collaborative connection supporting the first capability to the second electronic device.

12. The method according to claim 1, wherein the first user interface further comprises capability badges corresponding to at least two capabilities, the at least two capabilities comprise all collaborative capabilities supported by the at least one candidate device, the capability badges corresponding to the at least two capabilities comprise a first capability badge corresponding to the first capability, and the first input operation is performed on the first capability badge.

13. The method according to claim 12, wherein before the receiving a first input operation used to select the first capability, the method further comprises:
receiving a ninth input operation performed on the first icon; and
displaying, on the first user interface in response to the ninth input operation, the capability badges corresponding to the at least two capabilities.

14. The method according to claim 12, wherein the method further comprises:
additionally displaying, in response to the first input operation, the first capability badge on the first icon.

15. The method according to any one of claims 12 to 14, wherein the method further comprises:
stopping displaying, on the first user interface in response to the first input operation, an icon of a candidate device whose first capability cannot be collaborated with.

16. An electronic device, comprising a memory and a processor, wherein the memory and the processor are electrically coupled, the memory is configured to store program instructions, and the processor is configured to invoke all or a part of the program instructions stored in the memory, so that the electronic device performs the method according to any one of claims 1 to 15.

17. A computer storage medium, comprising computer instructions, wherein when the computer instructions are run on an electronic device, the electronic device is enabled to perform the method according to any one of claims 1 to 15.
